# EUROPEAN PATENT APPLICATION

(11) **EP 4 665 008 A1**
(43) Date of publication of application: **17.12.2025**
(21) Application number: 23920385.4
(22) Date of filing: 08.02.2023
(51) Int. Cl.: H04W 52/14

(54) **WIRELESS COMMUNICATION METHODS, AND DEVICES**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Wendong, Dongguan, Guangdong 523860 (CN); SHI, Zhihua, Dongguan, Guangdong 523860 (CN)
(74) Representative: Novagraaf Technologies
(86) International application number: PCT/CN2023/075005
(87) International publication number: WO 2024/164177

(57) **Abstract**

Provided in the embodiments of the present application are wireless communication methods, and devices. A terminal device can support performing uplink spatial filter prediction on the basis of a downlink measurement result, and/or the terminal device can support performing downlink spatial filter prediction on the basis of an uplink measurement result, thereby reducing the overheads and time delay of uplink spatial filter management and/or downlink spatial filter management. A wireless communication method comprises: a terminal device sends first capability information, the first capability information being used for indicating whether the terminal device supports performing uplink spatial filter prediction on the basis of a downlink measurement result, and/or the first capability information being used for indicating whether the terminal device supports performing downlink spatial filter prediction on the basis of an uplink measurement result.

## Description

### TECHNICAL FIELD

Embodiments of the present disclosure relate to the field of communications, and in particular, relate to methods for wireless communication and devices thereof.

### RELATED ART

Communications in millimeter wave frequency bands and corresponding beam management mechanisms have been introduced into new radio (NR) systems. The beam management mechanisms include uplink beam management and downlink beam management. The downlink beam management includes downlink beam sweeping, optional beam reporting on a terminal, downlink beam indication on a network, and other processes. The uplink beam management includes uplink beam sweeping, uplink beam indication on the network, and other processes. Specifically, for the downlink beam management, a network device sweeps transmit beams in all directions based on downlink reference signals, and a terminal device performs measurement using different receive beams, such that all beam pairs are traversed. For the uplink beam management, the terminal device sweeps transmitted beams in all directions based on uplink reference signals, and the network device performs measurement using different receive beams, such that all beam pairs are traversed.

Apparently, in the uplink beam management and the downlink beam management, it is necessary to traverse all combinations of transmit beams and receive beams to select the optional beams, such that the overhead and the latency are increased.

### SUMMARY

Embodiments of the present disclosure provide methods for wireless communication and devices thereof, the terminal device supports predicting uplink spatial filters based on a downlink measurement result, and/or, the terminal device supports predicting downlink spatial filters based on an uplink measurement result, such that the overhead and the latency of uplink spatial filter management and/or downlink spatial filter management are reduced.

In a first aspect, a method for wireless communication is provided. The method is performed by a terminal device, and includes: transmitting first capability information, wherein the first capability information indicates whether the terminal device supports predicting uplink spatial filters based on a downlink measurement result, and/or, the first capability information indicates whether the terminal device supports predicting downlink spatial filters based on an uplink measurement result.

In a second aspect, a method for wireless communication is provided. The method is performed by a network device, and includes: receiving first capability information, wherein the first capability information indicates whether a terminal device supports predicting uplink spatial filters based on a downlink measurement result, and/or, the first capability information indicates whether a terminal device supports predicting downlink spatial filters based on an uplink measurement result.

In a third aspect, a method for wireless communication is provided. The method is performed by a first communication device, and includes: inputting a first measurement dataset to a first network model to acquire a first prediction dataset, wherein the first measurement dataset includes at least one of link quality information measured based on a downlink reference signal measurement set, or indices of downlink reference signal resources corresponding to link quality information measured based on a downlink reference signal measurement set, and the first prediction dataset includes at least one of identification information of K₁ predicted uplink transmit spatial filters, or identification information of K₁ predicted uplink transmit spatial filters and identification information of K₁ predicted uplink receive spatial filters, wherein K₁ is a positive integer; or the first measurement dataset includes at least one of link quality information measured based on an uplink reference signal measurement set, or indices of uplink reference signal resources corresponding to link quality information measured based on an uplink reference signal measurement set, and the first prediction dataset includes at least one of identification information of K₂ predicted downlink transmit spatial filters, or identification information of K₂ predicted downlink transmit spatial filters and identification information of K₂ predicted downlink receive spatial filters, wherein K₂ is a positive integer.

In a fourth aspect, a terminal device is provided. The terminal device is applicable to implementing the method in the first aspect. Specifically, the terminal device includes functional modules for implementing the method in the first aspect.

In a fifth aspect, a network device is provided. The network device is applicable to implementing the method in the second aspect. Specifically, the network device includes functional modules for implementing the method in the second aspect.

In a sixth aspect, a communication device is provided. The communication device is a first communication device, and is applicable to implementing the method in the third aspect. Specifically, the communication device includes functional modules for implementing the method in the third aspect.

In a seventh aspect, a terminal device is provided. The terminal device includes a processor and a memory storing one or more computer programs; wherein the processor is configured to call and run the one or more computer programs in the memory to cause the terminal device to perform the method in the first aspect.

In an eighth aspect, a network device is provided. The network device includes a processor and a memory storing one or more computer programs; wherein the processor is configured to call and run the one or more computer programs in the memory to cause the network device to perform the method in the second aspect.

In a ninth aspect, a communication device is provided. The communication device is a first communication device, and includes a processor and a memory storing one or more computer programs; wherein the processor is configured to call and run the one or more computer programs in the memory to cause the communication device to perform the method in the third aspect.

In a tenth aspect, a device is provided. The device includes a processor and a memory storing one or more computer programs; wherein the processor is configured to call and run the one or more computer programs in the memory to cause the device to perform the method in any of the first aspect, the second aspect, or the third aspect.

In an eleventh aspect, a computer-readable storage medium is provided. The computer-readable storage medium stores one or more computer programs, wherein the one or more computer programs cause a computer to perform the method in any of the first aspect, the second aspect, or the third aspect.

In a twelfth aspect, a computer program product is provided. The computer program product includes one or more computer programs, wherein the one or more computer programs cause a computer to perform the method in any of the first aspect, the second aspect, or the third aspect.

In a thirteenth aspect, a computer program is provided. The computer program, when loaded and run, causes a computer to perform the method in any of the first aspect, the second aspect, or the third aspect.

According to the technical solutions in the first aspect and the second aspect, the terminal device supports predicting the uplink spatial filters based on the downlink measurement result, and predicts the uplink spatial filters based on the downlink measurement result using a first network model; and/or, the terminal device supports predicting the downlink spatial filters based on the uplink measurement result, and predicts the downlink spatial filters based on the uplink measurement result using a second network model, such that the overhead and the latency of the uplink spatial filter management and/or the downlink spatial filter management are reduced.

According to the technical solutions in the third aspect, the first communication device predicts the uplink spatial filters based on the downlink measurement result using a first network model, /or, the first communication device predicts the downlink spatial filters based on the uplink measurement result using a second network model, such that the overhead and the latency of the uplink spatial filter management and/or the downlink spatial filter management are reduced.

### BRIEF DESCRIPTION OF DRAWINGS

FIG. 1 is a schematic diagram of an architecture of a communication system according to some embodiments of the present disclosure;
FIG. 2 is a schematic diagram of connection of neurons in a neural network according to some embodiments of the present disclosure;
FIG. 3 is a schematic structural diagram of a neural network according to some embodiments of the present disclosure;
FIG. 4 is a schematic diagram of a convolutional neural network according to some embodiments of the present disclosure;
FIG. 5 is a schematic structural diagram of a long-short term memory (LSTM) unit according to some embodiments of the present disclosure;
FIG. 6 is a schematic diagram of a downlink beam sweeping process according to some embodiments of the present disclosure;
FIG. 7 is a schematic diagram of a downlink beam sweeping process according to some embodiments of the present disclosure;
FIG. 8 is a schematic diagram of a downlink beam sweeping process according to some embodiments of the present disclosure;
FIG. 9 is a schematic interaction diagram of a spatial-domain beam prediction model according to some embodiments of the present disclosure;
FIG. 10 is a schematic interaction diagram of a spatial-domain beam prediction model according to some embodiments of the present disclosure;
FIG. 11 is a schematic interaction diagram of a time-domain beam prediction model according to some embodiments of the present disclosure;
FIG. 12 is a schematic diagram of downlink beam management according to some embodiments of the present disclosure;
FIG. 13 is a schematic diagram of downlink beam management according to some embodiments of the present disclosure;
FIG. 14 is a schematic flowchart of a method for wireless communication according to some embodiments of the present disclosure;
FIG. 15 is a schematic diagram of measurement of a downlink beam (pair) and prediction of an uplink beam (pair) according to some embodiments of the present disclosure;
FIG. 16 is a schematic diagram of prediction of an uplink beam (pair) according to some embodiments of the present disclosure;
FIG. 17 is a schematic diagram of prediction of an uplink beam (pair) according to some embodiments of the present disclosure;
FIG. 18 is a schematic diagram of measurement of a downlink beam (pair) and prediction of an uplink beam (pair) according to some embodiments of the present disclosure;
FIG. 19 is a schematic diagram of measurement of an uplink beam (pair) and prediction of a downlink beam (pair) according to some embodiments of the present disclosure;
FIG. 20 is a schematic diagram of prediction of a downlink beam (pair) according to some embodiments of the present disclosure;;
FIG. 21 is a schematic diagram of prediction of a downlink beam (pair) according to some embodiments of the present disclosure;;
FIG. 22 is a schematic diagram of measurement of an uplink beam (pair) and prediction of a downlink beam (pair) according to some embodiments of the present disclosure;
FIG. 23 is a schematic flowchart of a method for wireless communication according to some embodiments of the present disclosure;
FIG. 24 is a schematic block diagram of a terminal device according to some embodiments of the present disclosure;
FIG. 25 is a schematic block diagram of a network device according to some embodiments of the present disclosure;
FIG. 26 is a schematic block diagram of a communication device according to some embodiments of the present disclosure;
FIG. 27 is a schematic block diagram of a communication device according to some embodiments of the present disclosure;
FIG. 28 is a schematic block diagram of a device according to some embodiments of the present disclosure; and
FIG. 29 is a schematic block diagram of a communication system according to some embodiments of the present disclosure.

### DETAILED DESCRIPTION

The technical solutions according to the embodiments of the present disclosure are described hereinafter in combination with the accompanying drawings for the embodiments of the present disclosure. It is obvious that the described embodiments are merely part but not all of the embodiments of the present disclosure. All other embodiments derived by persons of ordinary skill in the art without creative efforts based on the embodiments in the present disclosure are within the protection scope of the disclosure.

The technical solutions according to the embodiments of the present disclosure are applicable to various communication systems, such as a global system of mobile communication (GSM), a code-division a plurality of access (CDMA) system, a wideband code-division a plurality of access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, an universal mobile telecommunication system (UMTS), a wireless local area network (WLAN), Internet of things (IoT), a wireless fidelity (Wi-Fi), a 5^{th} generation (5G) communication system, a 6^{th} generation (6G) communication system, or other communication systems.

In general, communications supported by the traditional communication system are limited and are easy to implement. However, with the development of the communication technologies, the mobile communication system supports traditional communications, and also supports, for example, device-to-device (D2D) communications, machine-to-machine (M2M) communications, machine-type communications (MTC), vehicle-to-vehicle (V2V) communications, sidelink (SL) communications, vehicle-to-everything (V2X) communications, and the like. The embodiments of the present disclosure are also applicable to such communication systems.

In some embodiments, the communication systems according to the embodiments of the present disclosure are also applicable to a carrier aggregation (CA) scenario, a dual connectivity (DC) scenario, a standalone (SA) networking scenario, or a non-standalone (NSA) networking scenario.

In some embodiments, the communication systems according to the embodiments of the present disclosure are also applicable to an unlicensed spectrum. The unlicensed spectrum is also a shared spectrum. Alternatively, the communication systems according to the embodiments of the present disclosure are also applicable to a licensed spectrum. The licensed spectrum is also a non-shared spectrum.

In some embodiments, the communication system according to the embodiments of the present disclosure is appliable to an FR1 frequency band (corresponding to a frequency band range of 410 MHz to 7.125 GHz), is also appliable to an FR2 frequency band (corresponding to a frequency band range of 24.25 GHz to 52.6 GHz), is also appliable to new frequency bands, such as high-frequency bands corresponding to a frequency band range of 52.6 GHz to 71GHz or a frequency band range of 71GHz to 114.25 GHz.

Various embodiments are described in conjunction with a network device and a terminal device in the embodiments of the present disclosure. The terminal device is also referred to as a user equipment (UE), an access terminal, a subscriber unit, a subscriber station, a rover station, a mobile station, a remote station, a remote terminal, a mobile device, a user terminal, a terminal, a wireless communication device, a user agent, a user apparatus, or the like.

The terminal device may be a station (STA) in the WLAN, for example, a cellular phone, a cordless phone, a Session Initiation Protocol (SIP) phone, a wireless local loop (WLL) ST, a personal digital assistant (PDA) device, a handheld device with a wireless communication capability, a computing device or other processing devices connected to a wireless modem, an in-vehicle device, a wearable device, a next generation communication system, such as a terminal device in the NR network, or a terminal device in an evolved public land mobile network (PLMN) network.

In the embodiments of the present disclosure, the terminal device is deployed on land (for example, indoors or outdoors, or handheld, wearable, or vehicle-mounted deployment); or the terminal device is deployed on water (for example, on a ship); or the terminal device may be deployed in air (for example, on an aircraft, a balloon, or a satellite).

In the embodiments of the present disclosure, the terminal device is a mobile phone, a pad, a computer with a radio transceiver function, a virtual reality (VR) terminal device, an augmented reality (AR) terminal device, a wireless terminal device in industrial control, a wireless terminal device in self-driving, a wireless terminal device in remote medical, a wireless terminal in smart grid, a wireless terminal in transportation safety, a wireless terminal in smart city, a wireless terminal device in smart home, an in-vehicle communication device, or an application-specific integrated circuit (ASIC)/a system on chip (SoC).

As examples instead of limitations, in the embodiments of the present disclosure, the terminal device may be a wearable device. The wearable device may also be referred to as a wearable smart device, and is a generic name for wearable devices such as glasses, gloves, watches, clothes, and shoes that are developed by applying wearable technologies for smart designs of daily wear. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a device with full functionality and a large size that is capable of implementing all or part of functions without relying on a smart phone, for example, a smart watch or smart glasses; and includes a device that specializes in specific application functions and needs to be used with another device such as a smart phone, for example, various smart bracelets or smart jewelry for vital sign monitoring.

In the embodiments of the present disclosure, the network device is a device for communicating with the mobile device, and the network device is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, a network device, a gNB, or a transmission reception point (TRP) in an NR network (gNB), or a network device in a future evolutional PLMN network or in an NTN network.

As examples instead of limitations, the terminal device has mobility in the embodiments of the present disclosure. For example, the network device is a mobile device. In some embodiments, the network device is a satellite or a balloon station. For example, the satellite is a low earth orbit (LEO) satellite, a medium Earth orbit (MEO) satellite, a geostationary Earth orbit (GEO) satellite, a high elliptical orbit (HEO) satellite, or the like. In some embodiments, the network device is also an NB located on land, water, or the like.

In the embodiments of the present disclosure, the network device provides services for cells, and the terminal device communicates with the network device over the transmission resources (such as frequency-domain resources, or spectrum resources) used in the cells. The cell is a cell corresponding to the network device (for example, the NB), and the cell belongs to a macro NB or an NB corresponding to a small cell. The small cell includes a metro cell, a micro cell, a pico cell, a femto cell, or the like. The small cells have the small coverage and low transmission power, and are suitable for providing high-speed data transmission services.

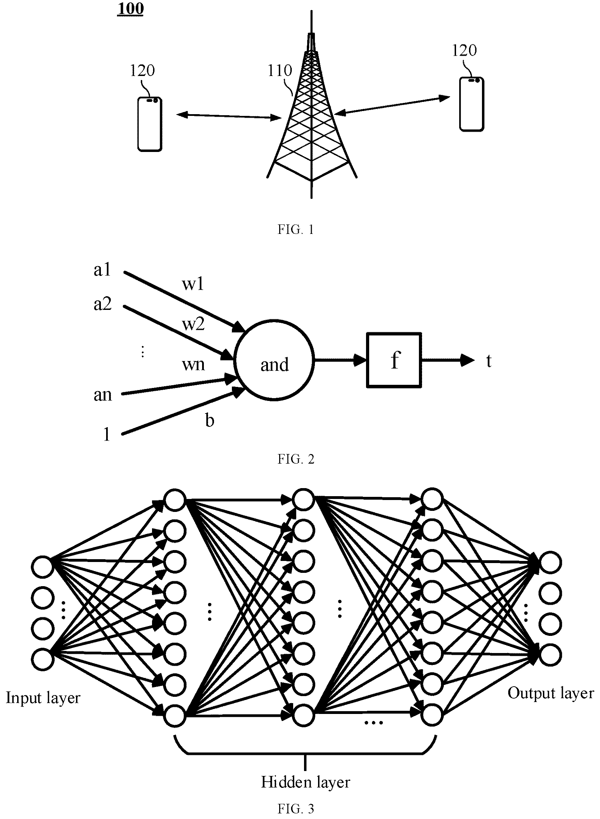

Illustratively, a communication system 100 according to some embodiments of the present disclosure is illustrated in FIG. 1. The communication system 100 includes a network device 110, and the network device 110 is a device that is capable of communicating with a terminal device 120 (also referred to as a communication terminal or a terminal). The network device 110 provides communication coverage for a specific geographical area, and is capable of communicating with the terminal device in the coverage area.

FIG. 1 illustrates one network device and two terminal devices. In some embodiments, the communication system 100 includes a plurality of network devices, and another quantity of terminal devices are included within a coverage range of each of the network devices, which is not limited in the embodiments of the present disclosure.

In some embodiments, the communication system 100 further includes another network entity such as a network controller, a mobile management entity, or the like, which is not limited in the embodiments of the present disclosure.

It should be understood that devices with the communication function in the network/system in the embodiments of the present disclosure are referred to as the communication devices. Using the communication system 100 illustrated in FIG. 1 as an example, the communication device includes the network device 110 and the terminal device 120 that have the communication function, and the network device 110 and the terminal device 120 are specific devices as described above, which are not repeated herein. The communication device further includes another device in the communication system 100, for example, another network device such as a network controller, a mobile management entity, or the like, which is not limited in the embodiments of the present disclosure.

It should be understood that the terms "system" and "network" herein are interchangeably herein. The term "and/or" herein merely indicates an association relation describing associated objects, that is, three types of relations. For example, the phrase "A and/or B" indicates (A), (B), or (A and B). In addition, the character "/" generally indicates an "or" relation between the associated objects.

It should be understood that the present disclosure involves a first communication device and a second communication device. The first communication device is a terminal device, such as a mobile phone, a machine facility, a customer premise equipment (CPE), an industrial device, a vehicle, and the like. The second communication device is a peer communication device of the first communication device, such as a network device, a mobile phone, an industrial device, a vehicle, and the like. In the embodiments of the present disclosure, the first communication device is a terminal device, and the second communication device is a network device (i.e., uplink communication or downlink communication). Alternatively, the first communication device is a first terminal, and the second communication device is a second terminal (i.e., sidelink communication).

The terms in the embodiments of the present disclosure are only for explaining the specific embodiments of the present disclosure and are not intended to limit the present disclosure. The terms "first," "second," "third," "fourth," and the like in the specification, claims, and the accompanying drawings of the present disclosure are used to distinguish different objects rather than to describe a specific order. Furthermore, the terms "include," "have," and any variations thereof are intended to cover non-exclusive inclusion.

It should be understood that the term "indicate" in the embodiments of the present disclosure means the direct indication, indirect indication, or an associated relation. For example, A indicating B means that A directly indicates B, for example, B is acquired by A; A indirectly indicates B, for example, A indicates C and B is acquired by C; A and B are associated.

In the description of the embodiments of the present disclosure, the term "corresponding" mean that there is a direct correspondence relation or indirect correspondence relation between two objects, an association relation between two objects, a relation of indicating or being indicated, or a relation of configuring and being configured.

In the embodiments of the present disclosure, the term "predefined" or "preconfigured" are achieved by prestoring corresponding codes or forms in the device (for example, including the terminal device and the network device) or other means for indicating relevant information, and the specific implementations are not limited in the present disclosure. For example, the predefinition is defined in the protocol.

In the embodiments of the present disclosure, the term "protocol" indicates a standard protocol in the field of communications, for example, an LTE protocol, an NR protocol, or a related protocol applied to the future communication system, which is not limited in the present disclosure.

For convenient understanding of the embodiments of the present disclosure, the neural networks and machine learning in the present disclosure are described.

A neural network (NN) is an operational model composed of a plurality of neuron nodes interconnected with each other. The connections between the nodes represent weighted values from input signals to output signals, and are also referred to as weights. On each node, weighted summation (SUM) is performed on different input signals for output using a specific activation function (f). FIG. 2 is a schematic diagram of a neuron structure. a1, a2,..., and an represent the input signals, wl, w2,..., and wn represent the weights, "f" represents an excitation function, and "t" represents the output.

FIG. 3 is a simple neural network. The neural network includes an input layer, a hidden layer, and an output layer. Depending on different connection modes of the plurality of neurons, weights and activation have different outputs, such that a mapping relation from input to output is fit. Each upper-level node is connected to all lower-level nodes. The neural network is a fully connected neural network and is also referred to as a deep neural network (DNN).

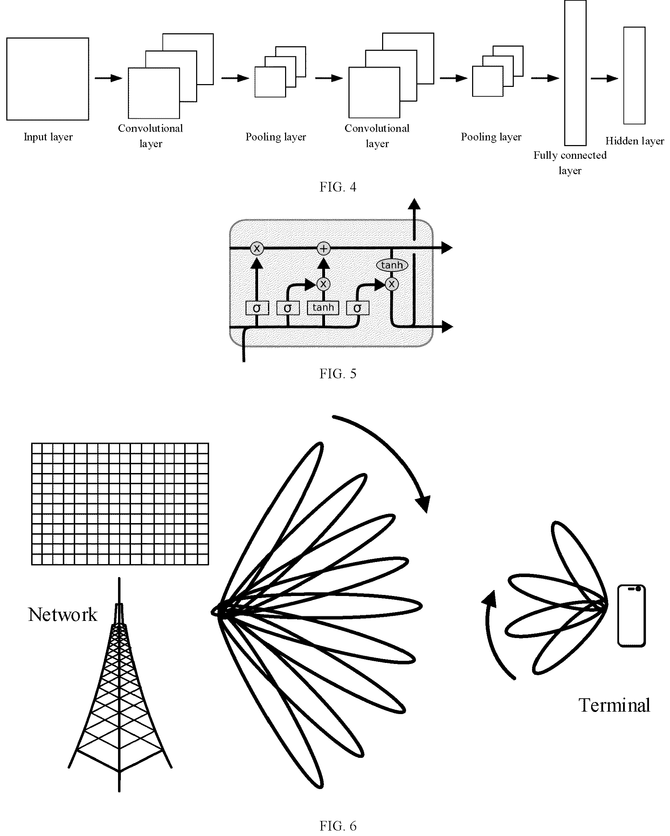

A convolutional neural network (CNN) basically includes an input layer, a plurality of convolutional layers, a plurality of pooling layers, a fully connected layer, and an output layer, as illustrated in FIG. 4. Each neuron of a convolutional kernel in the convolutional layer is locally connected to its input. Furthermore, the pooling layers are introduced to extract local maximum or average value features from a specific layer, such that parameters of the network are effectively reduced, and local features are mined. In this way, the convolutional neural network converges rapidly and achieves excellent performance.

Deep learning adopts deep neural networks having a plurality of hidden layers, such that the network has significantly enhanced capabilities of learning features and is capable of fitting complex nonlinear mapping from input to output. Therefore, deep learning has found widespread application in fields of speech and image processing. In addition to deep neural networks, to address different tasks, deep learning also encompasses other common fundamental structures commonly used basic structures, such as a convolutional neural network (CNN), a recurrent neural network (RNN), and the like.

A convolutional neural network basically includes an input layer, a plurality of convolutional layers, a plurality of pooling layers, a fully connected layer, and an output layer, as illustrated in FIG. 4. Each neuron of a convolutional kernel in the convolutional layer is locally connected to its input. Furthermore, the pooling layers are introduced to extract local maximum or average value features from a specific layer, such that parameters of the network are effectively reduced, and local features are mined. In this way, the convolutional neural network converges rapidly and achieves excellent performance.

The RNN is a neural network that models sequential data and has gained remarkable achievements in the field of natural language processing, such as machine translation, speech recognition, and the like. Specifically, the network device memorizes information of past moments, and uses the information in calculation of current output. That is, nodes between the hidden layers are not unconnected but connected, and input to the hidden layer includes not only the input from the input layer and the output from the hidden layer at the previous moment. A common RNNS includes a long short-term memory (LSTM), a gated recurrent unit (GRU), and other structures. FIG. 5 is a basic LSTM unit structure, and the basic LSTM unit structure includes a tanh activation function. Unlike the RNN that only considers recent states, a cell state of the LSTM may determine which states should be maintained and which states should be ignored, such that defects of a traditional RNN in long-term memory are addressed.

Neural network (NN) models are trained and acquired by construction, training, validation, and testing of datasets, and other processes. Herein, it is assumed that the NN models have been pre-trained by offline training or online training. It should be noted that the offline training and the online training are not mutually exclusive. Firstly, a network (NW) acquires static training results through offline training of the datasets, which is referred to as offline training herein. During use of the NN by the NW or the UE, as the UE further performs measurement and/or reporting, the NN model continues to acquire more data and performs real-time online training to optimize parameters of the NN model, such that great inference and prediction results are achieved.

For convenient understanding of the embodiments of the present disclosure, the NR beam management in the present disclosure is described.

In the NR system, communication in the millimeter wave frequency band is introduced, and a corresponding beam management mechanism is also introduced. The beam management mechanism includes uplink beam management and downlink beam management. The downlink beam management includes downlink beam sweeping, terminal (UE) beam measurement and reporting, downlink beam indication of the network (NW), and other processes.

The downlink beam sweeping may include three processes, i.e., P1, P2, and P3 processes. In the P1 process, the network device sweeps different transmit beams and the UE sweeps different receive beams. In the P2 process, the network device sweeps different transmit beams and the UE uses the same receive beam. In the P3 process, the network device uses the same transmit beam and the UE sweeps different receive beams. In general, the network device performs the beam sweeping by transmitting downlink reference signals. In some embodiments, the downlink reference signal includes, but is not limited to, a synchronization signal block (SSB) and/or a channel state information reference signal (CSI-RS).

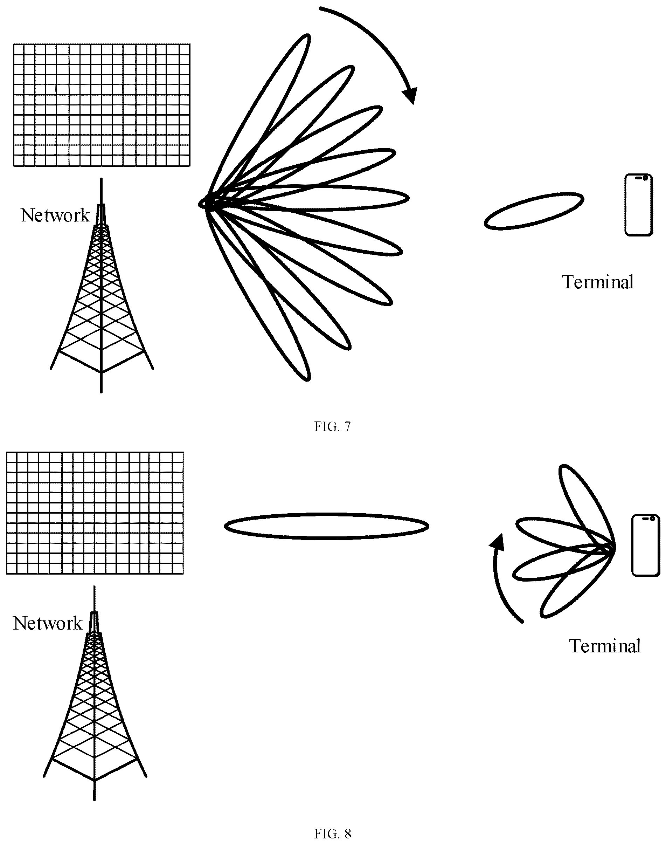

FIG. 6 is a schematic diagram of the P1 process (or referred to as a downlink full sweeping process), FIG. 7 is a schematic diagram of the P2 process, and FIG. 8 is a schematic diagram of the P3 process.

As illustrated in FIG. 6, in the P1 process, the network device traverses all transmit beams to transmit downlink reference signals, and the UE traverses all receive beams for measurement to determine corresponding measurement results.

As illustrated in FIG. 7, in the P2 process, the network device traverses all transmit beams to transmit downlink reference signals, and the UE uses specific receive beams for measurement to determine corresponding measurement results.

As illustrated in FIG. 8, in the P3 process, the network device uses specific transmit beams to transmit downlink reference signals, and the UE traverses all receive beams for measurement to determine corresponding measurement results.

The beam reporting indication mechanism in the NR is that the UE selects K transmit beams with the highest layer1 reference signal received power (L1-RSRP) and performance thereof by measuring a plurality of transmit beams (the P2 process) or transmitting the receive beam pairs (the P1 process), and reports channel state information (CSI) to the NW.

Subsequent to decoding beam information reported by the UE, the NW considers the downlink transmission channel and the signal, and performs beam information indication for the UE by carrying a transmission configuration indicator (TCI) state (including an index of an SSB resource or CSI-RS resource used as a reference for the UE) in a medium access control (MAC) and/or downlink control information signaling. The UE uses receive beams corresponding to the transmit beams for the indicated SSB or CSI-RS for downlink reception.

Correspondingly, the NR also defines three uplink beam sweeping processes, i.e., U1, U2, and U3 processes. In the U1 process, the UE sweeps different transmit beams and the NW sweeps different receive beams. In the U2 process, the UE uses the same transmit beam and the NW sweeps different receive beams. In the U3 process, the UE sweeps different transmit beams and the NW uses the same receive beam.

For the uplink beam sweeping process, the NW measures the beams from the UE, and thus the beam reporting by the UE is not required. The NW selects an appropriate uplink beam indicator or configuration from the measured uplink beams and assigns the appropriate uplink beam indicator or configuration to the UE for uplink transmission. Meanwhile, the NW also prepares the corresponding receive beams.

For convenient understanding of the embodiments of the present disclosure, beam management based on artificial intelligence/machine learning (AI/ML) in the present disclosure is described.

The beam management based on AI/ML may be downlink beam prediction in the spatial domain and beam prediction in the time domain (BM-Case2).

The beam prediction in the spatial domain (also known as a beam management example 1 (BBM-Case1)). That is, the spatial domain of the downlink beam in the prediction dataset A (set A) is predicted through beams in the measurement dataset B (set B). The set B is a subset of the set A, or the set B and the set A are two different beam sets. The set B can be understood as a partial subset of beams (pairs), and the set A can be understood as a complete set of beams (pairs).

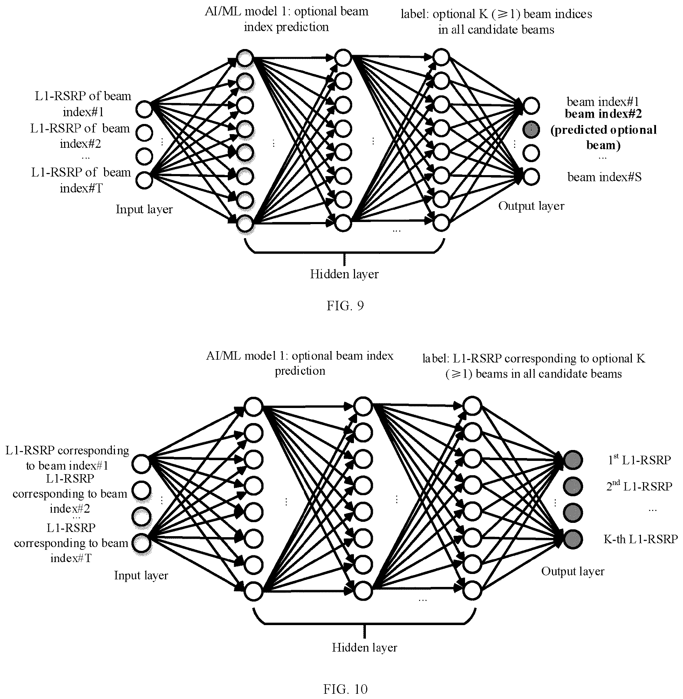

FIG. 9 is a schematic diagram of an input and output relation of a beam prediction model. It can be considered that the model solves a multi-classification problem, i.e., the relation from input L1-RSRP of the partial subset (i.e., set B) to the L1-RSRPs of the optional K beams. The partial beam measurement set (i.e., set B, as part of the L1-RSRP measured in the set A) is used as the input of the model. The outputs of the model are indices of the optional K beams selected from the complete set (set A), i.e., the K beams with the highest L1-RSRP. The labels of the model are the indices of the optional K beams (i.e., the highest L1-RSRP) measured in the complete set (set A). Specifically, as illustrated in FIG. 9, the measurement dataset B (set B) includes L1-RSRPs corresponding to indices of T beams, the prediction dataset A (set A) includes indices of S beams, and the AI/ML model 1 predicts indices of the optional K beams (beam index#2 in FIG. 9). It should be noted that the beam in FIG. 9 may also be replaced by a beam pair. The specific description is similar to that of the beam and is not repeated herein.

FIG. 10 is a schematic diagram of an optional beam quality prediction model, which can be understood as a linear regression problem. The input-output relation of the model defines how L1-RSRP inputs from a partial subset (i.e., set B) are mapped to the L1-RSRPs of the optimal K beams. The input is similar to the input of the beam prediction model in FIG. 9, while the output of the model is K (K≥1) optional L1-RSRPs. The labels are the optional K L1-RSRPs measured in the complete Set (i.e., set A) and the indices of the corresponding K beams. Specifically, as illustrated in FIG. 10, the measurement dataset B (set B) includes L1-RSRPs corresponding to indices of T beams, the prediction dataset A (set A) includes L1-RSRPs corresponding to indices of S beams, and the AI/ML model 2 predicts K (K≥1) optional L1-RSRPs. It should be noted that the beam in FIG. 10 may also be replaced by a beam pair. The specific description is similar to that of the beam and is not repeated herein.

Beam prediction in the time domain (also referred to as a beam management example 2 (BM-Case2)). That is, the time-domain prediction of the downlink beam in the prediction dataset A (set A) is performed using beams in the history measurement dataset B (set B). The set B is a subset of the set A, or the set B and the set A are the same set of beams. The set B may be understood as a partial subset of beams (pairs), and the set A may be understood as a complete set of beams (pairs).

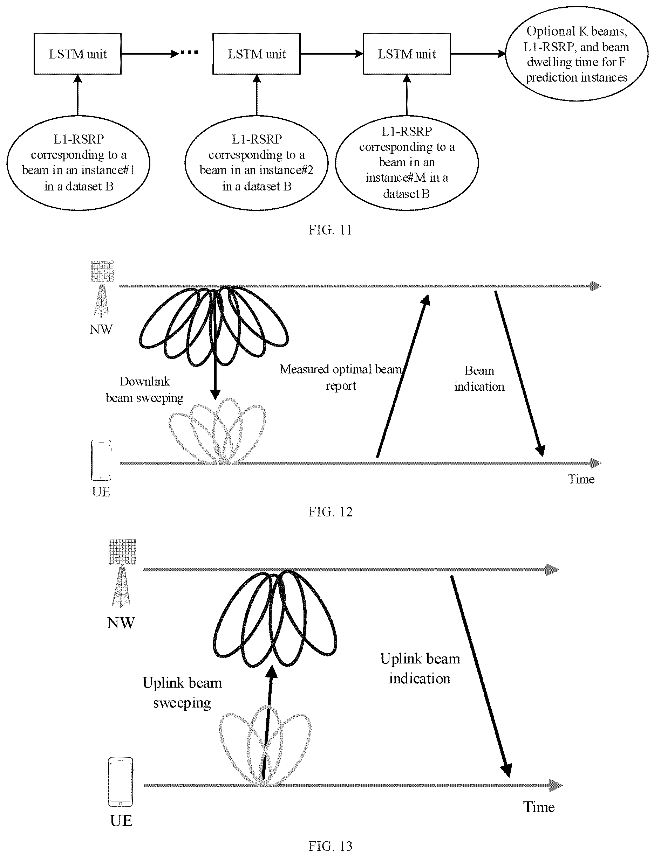

Using the prediction of beams (pairs) and performance thereof in the time domain as an example, selection of the LSTM model is illustrated in FIG. 11. The LSTM model I extended to M instances as input in the time domain, which is equivalent to cascading of M LSTM units. The input of each LSTM unit is the L1-RSRP of the beam (pair) of an instance m (set Bm) in the dataset B. 1 ≤ m ≤ M.

It should be noted that the index of the beam (pair) of the set Bm is implicitly input in a fixed order of L1-RSRPs. Upon input of performance of M instances, the LSTM model predicts the optional beams (pairs) of the next F instances, the performance of the optional beams (pairs) (i.e., link quality information), and the dwelling time of the optional beams (pairs).

For convenient understanding of the embodiments of the present disclosure, the problem to be solved in the present disclosure is described.

For the beam sweeping process of the NR, sweeping of a large number of spatial beams (pairs) in the downlink causes a large amount of overheads and measurement latencies of reference signals. For example, it is assumed that the NW deploys 64 different downlink transmission directions in FR2 (carried by at most 64 SSBs), the UE uses a plurality of antenna panels (including a receive beam panel) in a receiving process to concurrently sweep the receive beams, and each antenna panel has four receive beams. The UE needs to measure at least 64*4, i.e., 256 beam pairs. That is, downlink resource overheads of 256 resources are required, and the sweeping process needs approximate 80 milliseconds (one SSB period each 20ms, and a total of four periods). Therefore, examples for beam (pair) prediction in the spatial-domain and the time domain are defined in the NR evolution. Similarly, the uplink beam sweeping process also faces the same problems of overhead and latency.

Specifically, in the NR system, the downlink beam management includes downlink beam sweeping, optional beam reporting on the terminal, downlink beam indication on the NW, and the like, as illustrated in FIG. 12. The uplink beam management includes uplink beam sweeping, uplink beam indication on the NW, and the like, as illustrated in FIG. 13. Specifically, for the downlink beam management, the network device sweeps all transmit beam directions through the downlink reference signal, and the terminal device uses different receive beams for measurement, such that all beam pairs are traversed. For the uplink beam management, the terminal device sweeps all transmit beam directions through the uplink reference signal, and the network device uses different receive beams for measurement, such that all beam pairs are traversed.

It can be seen that in the uplink beam management and the downlink beam management, it is necessary to traverse all combinations of transmit beams and receive beams to select the optional beam, such that the overhead and the latency are increased.

All examples defined in the current NR are downlink beam sweeping to reduce the overhead and latency. The uplink beam sweeping process is not optimized. Therefore, beam symmetry between the uplink channel and the downlink channel considered in the present disclosure, that is, correspondence is present between the optional downlink beam pair and the optional uplink beam pair. The machine learning technology extracts the correspondence to predict the optional uplink beam (pair) through downlink measurement, and vice versa, such that the beam sweeping overhead in one direction (uplink or downlink) is reduced.

Based on the above problems, the present disclosure provides beam (pair) prediction solutions designed based on the AI/ML model. The terminal device supports predicting the uplink spatial filters based on the downlink measurement result, and/or, the terminal device supports predicting the downlink spatial filters based on the uplink measurement result, such that the overhead and the latency of the uplink spatial filter management and/or the downlink spatial filter management are reduced.

It should be noted that the term "beam (pair)" means the "beam" or the "beam pair". Specifically, in the embodiments of the present disclosure, the beam refers to a transmit beam or a receive beam, and the beam pair refers to a pair of transmit beam and receive beam. In the embodiments of the present disclosure, the spatial filter replaces the beam that tends to implementation. For the AI/ML model, the output may be understood as inference or prediction. In the present disclosure, inference and prediction have the same meaning and are interchangeable.

For convenient understanding of the technical solutions according to the embodiments of the present disclosure, the technical solutions according to the present disclosure are described in detail hereinafter in conjunction with specific embodiments. The following related technologies, as optional solutions, can be combined arbitrarily with the technical solutions according to the embodiments of the present disclosure, and all fall within the scope of protection of the embodiments of the present disclosure. The embodiments of the present disclosure include at least part of the following contents.

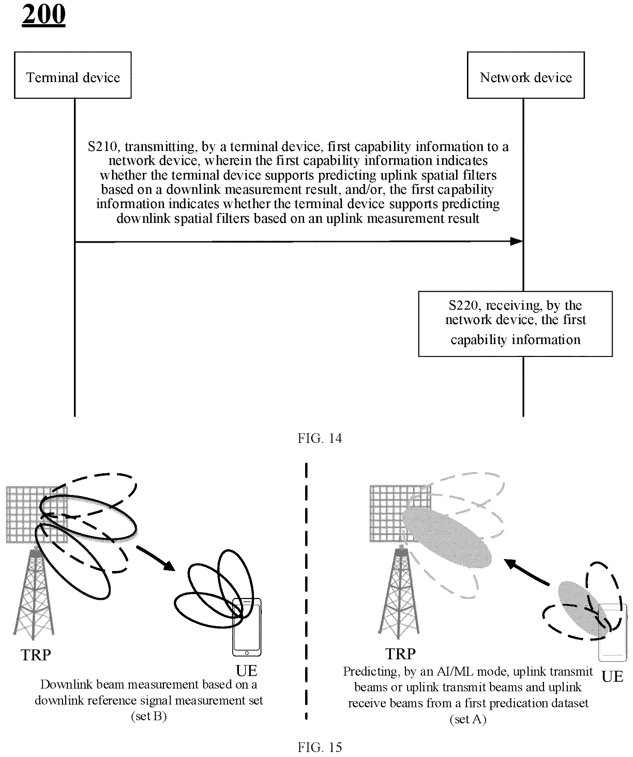

FIG. 14 is a schematic flowchart of a method 200 for wireless communication according to some embodiments of the present disclosure. As illustrated in FIG. 14, the method 200 for wireless communication includes at least the following processes.

In S210, a terminal device transmits first capability information to a network device, wherein the first capability information indicates whether the terminal device supports predicting uplink spatial filters based on a downlink measurement result, and/or, the first capability information indicates whether the terminal device supports predicting downlink spatial filters based on an uplink measurement result.

In S220, the network device receives the first capability information.

In some embodiments, in a case where the terminal device supports predicting the uplink spatial filters based on the downlink measurement result, the terminal device inputs a first measurement dataset to a first network model to acquire a first prediction dataset.

The first measurement dataset includes at least one of link quality information measured based on a downlink reference signal measurement set, or indices of downlink reference signal resources corresponding to link quality information measured based on a downlink reference signal measurement set. The first prediction dataset includes at least one of identification information of K₁ predicted uplink transmit spatial filters, or identification information of K₁ predicted uplink transmit spatial filters and identification information of K₁ predicted uplink receive spatial filters. K₁ is a positive integer.

In some embodiments, in a case where the terminal device supports predicting the downlink spatial filters based on the uplink measurement result, the network device inputs a second measurement dataset to a second network model to acquire a second prediction dataset.

The second measurement dataset includes at least one of link quality information measured based on an uplink reference signal measurement set, or indices of uplink reference signal resources corresponding to link quality information measured based on an uplink reference signal measurement set. The second prediction dataset includes at least one of identification information of K2 predicted downlink transmit spatial filters, or identification information of K2 predicted downlink transmit spatial filters and identification information of K2 predicted downlink receive spatial filters. K2 is a positive integer.

In some embodiments of the present disclosure, the spatial filter is also referred to as a beam, a beam pair, a spatial relation, a spatial setting, and spatial-domain filter, or a reference signal.

In some embodiments, the first network model is the AI/ML model. In some embodiments, the first network model is an AI/ML model for beam prediction in the spatial domain. The specific implementations are illustrated in FIG. 9 or FIG. 10, or FIG. 11.

In some embodiments, the second network model is the AI/ML model. In some embodiments, the second network model is an AI/ML model for beam prediction in the spatial domain. The specific implementations are illustrated in FIG. 9 or FIG. 10, or FIG. 11.

In some embodiments, the transmit spatial filter is also referred to as a transmit beam (Tx beam) or a transmitter spatial-domain filter, and the terms are interchangeable. The receive spatial filter is also referred to as a receive beam (Rx beam) or a receiver spatial-domain filter, and the terms are interchangeable. The combination of the transmit spatial filter and the receive spatial filter is also referred to as a beam pair (i.e., a pair of the Tx beam and the Rx beam), a spatial filter pair, and a spatial filter set, and the terms are interchangeable.

In some embodiments, the identification information of the spatial filter is an index or identifier of the spatial filter.

For example, the identification information of the transmit spatial filter is an index or identifier of the transmit spatial filter.

For example, the identification information of the receive spatial filter is an index or identifier of the receive spatial filter.

For example, the identification information of the combination of the transmit spatial filter and the receive spatial filter is an index of the combination.

In some embodiments, the link quality information includes at least one of an L1-RSRP, a layer1 reference signal received quality (L1-RSRQ), a layer1 signal to interference plus noise ratio (L1-SINR), or a layer1 received signal strength indication (L1-RSSI).

In the embodiments of the present disclosure, for the prediction of the uplink spatial filter based on the downlink measurement result, the first network model is suitable for deployment on the UE. In some embodiments, for the prediction of the uplink spatial filter based on the downlink measurement result, the first network model is deployed on the NW. In this case, the terminal device needs to report the downlink measurement result. The following embodiments are illustrated using an example where the first network model is deployed on the UE, that is, the terminal device predicts the uplink spatial filters based on the downlink measurement result.

In the embodiments of the present disclosure, for the prediction of the downlink spatial filter based on the uplink measurement result, the second network model is suitable for deployment on the NW. In some embodiments, for the prediction of the downlink spatial filter based on the uplink measurement result, the second network model is deployed on the UE. In this case, the network device indicates the uplink measurement result to the terminal device. The following embodiments are illustrated using an example where the second network model is deployed on the NW, that is, the network device predicts the downlink spatial filters based on the uplink measurement result.

In the embodiments of the present disclosure, the terminal device predicts the uplink spatial filters based on the downlink measurement result using the first network model, or, the network device predicts the downlink spatial filters based on the uplink measurement result using the second network model, such that the overhead of the beam (pair) prediction is reduced, and the performance of the beam management system is improved. The embodiments of the present disclosure are implemented based on beam correspondence between uplink and downlink beams.

For example, in a case where the UE supports the beam correspondence between uplink and downlink beams, the UE predicts the optional K1 downlink receive beams using the first network model, and reverses the K1 downlink receive beams based on the beam correspondence between uplink and downlink beams to acquire the optional K1 uplink transmit beams.

For example, in a case where the NW supports the beam correspondence between uplink and downlink beams, the NW predicts the optional K2 uplink receive beams using the second network model, and reverses the K2 uplink receive beams based on the beam correspondence between uplink and downlink beams to acquire the optional K2 downlink transmit beams.

In the embodiments of the present disclosure, downlink measurement assists uplink beam (pair) prediction, or, uplink measurement assists downlink beam (pair) prediction. The term "assist" herein refers to that an amount of downlink or uplink measurement (for example, an index of a measured reference signal resource and/or a value of an L1-RSRP) is used as input of the AI/ML model.

In the embodiment of the present disclosure, in a case where downlink measurement assists uplink beam (pair) prediction, the UE measures a downlink beam sweeping reference signal as input of the model, the model outputs prediction of an index of an optional uplink beam (pair), the UE reports a prediction result of the uplink beam (pair) to the NW, and finally the NW indicates the uplink beam. In a case where uplink measurement assists downlink beam (pair) prediction, the UE transmits an uplink beam sweeping reference signal, the NW measures the uplink beam sweeping reference signal as input of the model, the model outputs prediction of an index of an optional downlink beam (pair), and finally the NW indicates the downlink beam.

It should be noted that the uplink beam (pair) is the uplink transmit beam, or the uplink transmit beam and the uplink receive beam. Similarly, the downlink beam (pair) is the downlink transmit beam, or the downlink transmit beam and the downlink receive beam.

In some embodiments, the terminal device supports predicting the uplink spatial filters based on the downlink measurement result.

That is, in the embodiments, the first measurement dataset includes at least one of link quality information measured based on a downlink reference signal measurement set, or indices of downlink reference signal resources corresponding to link quality information measured based on a downlink reference signal measurement set. The first prediction dataset includes at least one of identification information of K1 predicted uplink transmit spatial filters, or identification information of K1 predicted uplink transmit spatial filters and identification information of K1 predicted uplink receive spatial filters.

Specifically, for example, the first measurement dataset includes the link quality information measured based on the downlink reference signal measurement set, and the first prediction dataset includes at least one of the identification information of the K1 predicted uplink transmit spatial filters, or the identification information of the K1 predicted uplink transmit spatial filters and the identification information of the K1 predicted uplink receive spatial filters.

For example, the first measurement dataset includes the link quality information measured based on the downlink reference signal measurement set and the indices of the downlink reference signal resources corresponding to the link quality information measured based on the downlink reference signal measurement set, and the first prediction dataset includes at least one of the identification information of the K1 predicted uplink transmit spatial filters, or the identification information of the K1 predicted uplink transmit spatial filters and the identification information of the K1 predicted uplink receive spatial filters.

In some embodiments, the downlink reference signal resources in the downlink reference signal measurement set are part or all of downlink reference signal resources in a downlink reference signal resource set. In some embodiments, the downlink reference signal resource set is configured by a network device or agreed by an agreement.

In some embodiments, the downlink reference signal resources in the downlink reference signal measurement set include a CSI-RS resource and/or an SSB resource.

Specifically, for example, it is assumed that the downlink reference signal measurement set is the set B. For prediction of the uplink transmit beam based on the downlink measurement or prediction of the uplink beam pair (i.e., the uplink transmit beam and the uplink receive beam) based on the downlink measurement, the NW transmits the downlink reference signals based on the set B, and the UE needs to measure downlink reference signal resources in the set B, i.e., the CSI-RS resource and/or the SSB resource. It should be noted that resources in the set B are only the downlink reference signal resources (i.e., full beam coverage), or part of resources in the set B are the downlink reference signal resources (i.e., reducing the overhead in the spatial-domain). In addition, on the UE, the UE uses one or more receive beams for measurement based on configuration of reference signal resources in the set B.

Specifically, a schematic diagram of downlink beam (pair) measurement and uplink beam (pair) prediction is illustrated in FIG. 15. The UE measures downlink reference signals from a transmission reception point (TRP) based on the downlink reference signal measurement set (set B), and the UE predicts K1 uplink transmit beams and K1 uplink receive beams based on the first reference signal prediction set (the set A).

In some embodiments, in a case where the first measurement dataset only includes the link quality information measured based on the downlink reference signal measurement set, the link quality information measured based on the downlink reference signal measurement set is input to the first network model based on a first order.

The first order is associated with the indices of the downlink reference signal resources in the downlink reference signal measurement set.

Specifically, for example, input of the first network model includes two modes. An input mode of the model is that the link quality (for example, the L1-RSRP) of the downlink reference signals in the set B is input based on a fixed order (i.e., the first order). Another input mode of the model includes input of the indices of the downlink reference signal resources in the set B and the link quality (for example, the L1-RSRP). In the second model, selection of the set B is more flexible.

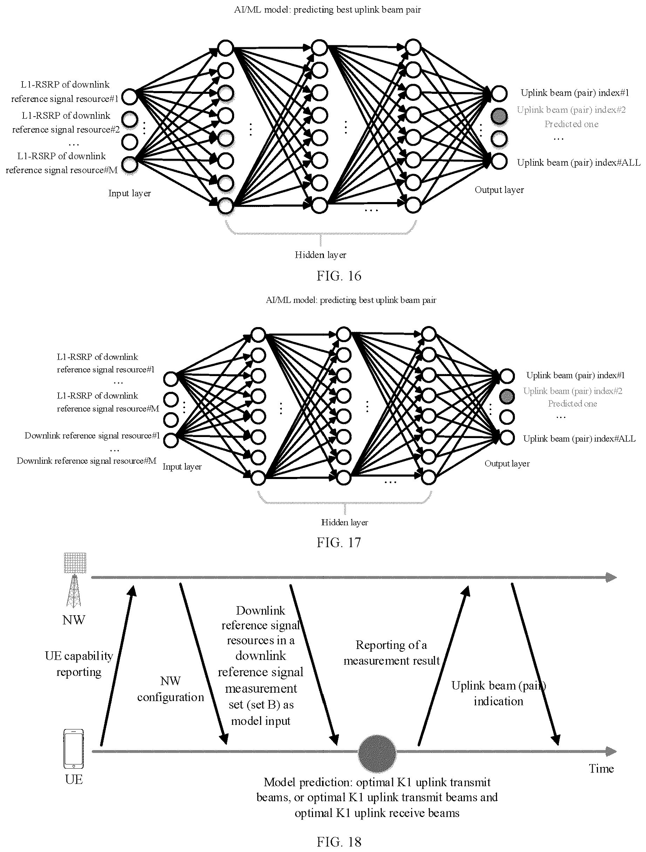

Specifically, in the first input mode of the model, the UE uses the L1-RSRPs (or other performance indicators, such as the L1-SINR, the L1-RSSI, or the L1-RSRQ) of the downlink reference signals measured in the set B in a fixed order (i.e., the first order) as the input of the model, as illustrated in FIG. 16. The output is the index of the K1 optional uplink beam (pair) predicted by the model. FIG. 16 is illustrated using an example where K1 is equal to 1.

Specifically, in the second input mode of the model, the UE uses the L1-RSRP of the downlink reference signals measured in the set B and the index of the downlink reference signal resource in the set B as the input of the model, as illustrated in FIG. 17. Unlike FIG. 16, the indices of the M downlink reference signal resources and the corresponding M link qualities, such as the L1-RSRPs, are used as the input of the model, such that the UE measures the signals more flexibly and does not use the same input for each measurement. Similarly, the output of the model is the index of the predicted K1 optional uplink beam (pair). FIG. 17 is illustrated using an example where K1 is equal to 1.

It should be noted that the output of the model is the K1 optional uplink beams (pairs) in FIG. 16 and FIG. 17, and thus the corresponding RSRP received by the NW in the uplink is not required.

In some embodiments, in the example 1, in a case where the first prediction dataset includes the identification information of the K1 predicted uplink transmit spatial filters, the identification information of the K1 predicted uplink transmit spatial filters is determined based on reference signal resources predicted from a first reference signal prediction set using the first network model.

The reference signal resources in the first reference signal prediction set include at least one of uplink reference signal resources or the downlink reference signal resources. Specifically, for example, the first reference signal prediction set is the set A.

In some embodiments, in the example 1, the identification information of the K1 predicted uplink transmit spatial filters is represented by indices of the reference signal resources predicted from the first reference signal prediction set using the first network model.

In some embodiments, in the example 1, in a case where the reference signal resources in the first reference signal prediction set at least include the uplink reference signal resources, and spatial relation information is configured or activated for the uplink reference signal resources in the first reference signal prediction set, the identification information of the K1 uplink transmit spatial filters is determined based on the spatial relation information corresponding to the uplink reference signal resources predicted from the first reference signal prediction set using the first network model. In some embodiments, uplink receive spatial filters corresponding to the K1 uplink transmit spatial filters are receive spatial filters of the corresponding uplink reference signal resources respectively.

Specifically, for example, an index of a predicted uplink transmit beam corresponds to the uplink reference signal resource (for example, the SRS resource), that is, the reference signal resources in the first reference signal prediction set at least include the uplink reference signal resource (for example, the SRS resource). In a case where the spatial relation information is configured and/or activated for the SRS resource, the UE uses the spatial relation information as the uplink transmit beam. Correspondingly, the NW uses the receive beam that receives the SRS resource for reception.

In some embodiments, in the example 1, in a case where the reference signal resources in the first reference signal prediction set at least include the uplink reference signal resources, and spatial relation information is not configured or activated for the uplink reference signal resources in the first reference signal prediction set, the identification information of the K1 uplink transmit spatial filters indicates transmit spatial filters corresponding to the uplink reference signal resources predicted from the first reference signal prediction set using the first network model. In some embodiments, uplink receive spatial filters corresponding to the K1 uplink transmit spatial filters are determined by a first uplink sweep mode (for example, the U3 process). In the first uplink sweep mode, the uplink reference signals are transmitted by uplink transmit spatial filters corresponding to the predicted uplink reference signal resources and are received by different receive spatial filters, and an optional receive spatial filter is determined based on signal qualities of the received uplink reference signals.

Specifically, for example, an index of a predicted uplink transmit beam corresponds to the uplink reference signal resource (for example, the SRS resource), that is, the reference signal resources in the first reference signal prediction set at least include the uplink reference signal resource (for example, the SRS resource). In a case where spatial relation information is not configured and/or activated for he SRS resource (for example, an SRS resource in an SRS resource set for uplink beam sweeping), the UE only knows a transmission direction of the SRS resource, and the NW does not know how to receive the SRS resource in advance. In this case, the UE needs to perform uplink beam sweeping, for example, the UE fixes a direction of an optional uplink beam in the U3 process, and the NW uses different receive beams for reception, such that an optional receive beam corresponding to the SRS resource is found.

In some embodiments, in the example 1, in a case where the reference signal resources in the first reference signal prediction set at least include the downlink reference signal resources, and a TCI state is configured or activated for the downlink reference signal resources (for example, the CSI-RS resource) in the first reference signal prediction set, or the downlink reference signal resources (for example, the SSB resource) in the first reference signal prediction set are pre-measured, the identification information of the K1 uplink transmit spatial filters indicates receive spatial filters corresponding to the downlink reference signal resources predicted from the first reference signal prediction set using the first network model. In some embodiments, uplink receive spatial filters corresponding to the K1 uplink transmit spatial filters are transmit spatial filters of the corresponding downlink reference signal resources respectively.

Specifically, for example, an index of a predicted uplink transmit beam corresponds to the downlink reference signal resource (for example, the CSI-RS resource or the SSB resource), that is, the reference signal resources in the first reference signal prediction set at least include the downlink reference signal resource (for example, the CSI-RS resource or the SSB resource). In a case where the TCI state is configured and/or activated for the CSI-RS resource, or the SSB resource is pre-measured by the UE, the UE uses the corresponding receive beam as the uplink transmit beam, and the NW uses the transmit beam of the CSI-RS resource or the SSB resource as the uplink receive beam.

In some embodiments, in the example 1, in a case where the reference signal resources in the first reference signal prediction set at least include the downlink reference signal resources, and a TCI state is not configured or activated for the downlink reference signal resources in the first reference signal prediction set or the downlink reference signal resources in the first reference signal prediction set are not pre-measured, the identification information of the K1 uplink transmit spatial filters is identification information of downlink receive spatial filters determined by a first downlink sweep mode (for example, the P3 process). In the first downlink sweep mode, the downlink reference signals are transmitted by downlink transmit spatial filters corresponding to the predicted downlink reference signal resources and are received by different receive spatial filters, and an optional receive spatial filter is determined based on signal qualities of the received downlink reference signals. In some embodiments, uplink receive spatial filters corresponding to the K1 uplink transmit spatial filters are the downlink transmit spatial filters corresponding to the predicted downlink reference signal resources respectively.

Specifically, for example, an index of a predicted uplink transmit beam corresponds the downlink reference signal resource (for example, the CSI-RS resource or the SSB resource), that is, the reference signal resources in the first reference signal prediction set at least include the downlink reference signal resource (for example, the CSI-RS resource or the SSB resource). In a case where the TCI state is not configured and/or activated for the CSI-RS resource in advance, or the SSB resource is not pre-measured by the UE, the downlink beam sweeping process, for example, the P3 process, is required. The NW uses a fixed transmit beam, and the UE uses different receive beams to find the optional receive beam of the fixed transmit beam and uses the downlink receive beam as the optional uplink transmit beam.

In some embodiments, in the example 2, in a case where the first prediction dataset includes the identification information of the K1 predicted uplink transmit spatial filters and the identification information of the K1 predicted uplink receive spatial filters, the identification information of the K1 predicted uplink transmit spatial filters is determined based on uplink reference signal resources predicted from a first reference signal prediction set using the first network model, and the identification information of the K1 predicted uplink receive spatial filters is determined based on downlink reference signal resources predicted from the first reference signal prediction set using the first network model. That is, the reference signal resources in the first reference signal prediction set include the uplink reference signal resource and the downlink reference signal resource.

In some embodiments, in the example 2, the identification information of the K1 predicted uplink transmit spatial filters is represented by indices of the uplink reference signal resources predicted from the first reference signal prediction set using the first network model, and the identification information of the K1 predicted uplink receive spatial filters is represented by indices of the downlink reference signal resources predicted from the first reference signal prediction set using the first network model.

In some embodiments, in the example 2, the identification information of the K1 uplink transmit spatial filters is determined based on spatial relation information corresponding to the uplink reference signal resources predicted from the first reference signal prediction set using the first network model; and/or the identification information of the K1 predicted uplink receive spatial filters is identification information of downlink transmit spatial filters corresponding to the downlink reference signal resources predicted from the first reference signal prediction set using the first network model.

Specifically, for example, the model outputs the uplink transmit beam and the uplink receive beam, i.e., an index of an uplink beam pair. An abstract index of the beam pair index or the index of the resource in NR is used to represent the predicted beam pair. For example, the transmit beam in the beam pair corresponds to the SRS resource (configured with the spatial relation information), and the receive beam corresponds to the SRS resource through the CSI-RS resource (configured with the TCI state) or the SSB resource, which means that the UE uses the beam of the predicted optional SRS resource as the uplink transmit beam, and the NW reverses the corresponding transmit beam of the CSI-RS or SSB as the uplink receive beam.

In some embodiments, the reference signal resources in the first reference signal prediction set are part or all of the reference signal resources in the pre-configured reference signal resource set. In some embodiments, the downlink reference signal resources in the first reference signal prediction set include the CSI-RS resource and/or the SSB resource, and/or, the uplink reference signal resources in the first reference signal prediction set include the SRS resource.

In some embodiments, the first communication device transmits first prediction information. The first prediction information includes part or all of indices of the reference signal resources predicted from the first reference signal prediction set using the first network model.

In some embodiments, the first prediction information is carried by at least one of a radio resource control (RRC) signaling, uplink control information (UCI), or a MAC control element (MAC CE) signaling.

In some embodiments, in the example 1, an index of a predicted uplink transmit beam corresponds to the uplink reference signal resource (for example, the SRS resource) and/or the downlink reference signal resource (for example, the CSI-RS resource or the SSB resource), and thus the first prediction information includes the CSI-RS resource and/or the SSB resource, and the SRS resource in a case where the first prediction dataset includes the identification information of the K1 predicted uplink transmit spatial filters.

Specifically, for example, the first prediction information is reported and carried by an RRC, and the first prediction information includes an CSI-RS resource indicator (CRI) (i.e., an index of the CSI-RS resource) or an SSB resource indicator (SSBRI) (i.e., an index of the SSB resource), or the L1-RSRPs corresponding to the CRI or SSBRI are concurrently reported. The CRI or SSBRI represents the receive beam corresponding to the uplink transmit beam of the UE, as listed in Table 1. The report formats include the L1-RSRP and the differential L1-RSRP (corresponding downlink quality), or do not include the L1-RSRP and the differential L1-RSRP (adding []).

**Table 1 Report of downlink reference signal resources as uplink receive beams**

| **CSI report number** | **CSI fields** |
|---|---|
| CSI report#n | CRI or SSBRI #1, if reported |
| | CRI or SSBRI #2, if reported |
| | CRI or SSBRI #3, if reported |
| | CRI or SSBRI #4, if reported |
| | [L1-RSRP #1, if reported ] |
| | [ Differential L1-RSRP #2, if reported ] |
| | [ Differential L1-RSRP #3, if reported ] |
| | [ Differential L1-RSRP #4, if reported ] |

It should be noted that in Table 1, the L1-RSRP corresponding to the CRI or SSBRI #1 is L1-RSRP #1, the L1-RSRP corresponding to the CRI or SSBRI #2 is L1-RSRP #2, the L1-RSRP corresponding to the CRI or SSBRI #3 is L1-RSRP #3, the L1-RSRP corresponding to the CRI or SSBRI #4 is L1-RSRP #4, Differential L1-RSRP #2 is a difference between L1-RSRP #2 and L1-RSRP #1, Differential L1-RSRP #3 is a difference between L1-RSRP #3 and L1-RSRP #1, and Differential L1-RSRP #4 is a difference between L1-RSRP #4 and L1-RSRP #1.

Specifically, for example, the first prediction information is reported and carried by an CSI, and the first prediction information includes an index of the SRS resource. The index of the SRS resource represents the optional uplink transmit beam predicted by the model, as listed in Table 2. In a case where the NW knows how to receive the SRS resource, the NW receives the SRS resource based on the spatial relation information of the SRS resource (i.e., the uplink beam information). Otherwise, the NW sweeps the receive beam of the SRS resource to find the appropriate uplink receive beam.

**Table 2 Report of uplink reference signal resources as uplink transmit beams**

| **CSI report number** | **CSI fields** |
|---|---|
| CSI report #n | SRS resource Index #1, if reported |
| | SRS resource Index #2, if reported |
| | SRS resource Index #3, if reported |
| | SRS resource Index #4, if reported |

In some embodiments, in the example 2, the index of the predicted uplink transmit beam corresponds to the uplink reference signal resource (for example, the SRS resource), and the index of the predicted uplink receive beam corresponds to the downlink reference signal resource (for example, the CSI-RS resource or the SSB resource), such that the first prediction information includes the CSI-RS resource and/or the SSB resource, and the SRS resource in a case where the first prediction dataset includes the identification information of the K1 predicted uplink transmit spatial filters and the identification information of the K1 predicted uplink receive spatial filters.

Specifically, for example, in a case where the first prediction dataset includes the identification information of the K1 predicted uplink transmit spatial filters and the identification information of the K1 predicted uplink receive spatial filters, the transmit beam (associated with the SRS resource) and the receive beam (associated with the CSI-RS resource or the SSB resource). Referring to Table 3, the first CRI or SSBRI corresponds to the first index of the SRS resource, the second CRI or SSBRI corresponds to the second index of the SRS resource, and so forth.

**Table 3 Report of uplink reference signal resources as uplink transmit beams**

| **CSI report number** | **CSI fields** |
|---|---|
| CSI report #n | CRI or SSBRI #1, if reported |
| | CRI or SSBRI #2, if reported |
| | CRI or SSBRI #3, if reported |
| | CRI or SSBRI #4, if reported |
| | SRS resource Index #1, if reported |
| | SRS resource Index #2, if reported |
| | SRS resource Index #3, if reported |
| | SRS resource Index #4, if reported |

Specifically, for example, in a case where the first prediction dataset includes the identification information of the K1 predicted uplink transmit spatial filters and the identification information of the K1 predicted uplink receive spatial filters, only the receive beam (associated with the CSI-RS resource or the SSB resource) is reported, and the transmit beam as implementation of the UE does not need to be reported. For the specific report format, reference may be made to Table 1, which is not repeated herein.

In some embodiments, subsequent to transmitting the first prediction information, the first communication device receives first indication information.

The first indication information indicates identification information of used uplink transmit spatial filters in the identification information of the K1 uplink transmit spatial filters, or, the first indication information indicates identification information of used uplink transmit spatial filters in the identification information of the K1 uplink transmit spatial filters and identification information of used uplink receive spatial filters in the identification information of the K1 uplink receive spatial filters.

In some embodiments, in a case where the first indication information indicates the identification information of the used uplink transmit spatial filters in the identification information of the K1 uplink transmit spatial filters, the first indication information includes at least one TCI state indicator or indices of the uplink reference signal resources.

In some embodiments, in a case where the first indication information indicates the identification information of the used uplink transmit spatial filters in the identification information of the K1 uplink transmit spatial filters and the identification information of the used uplink receive spatial filters in the identification information of the K1 uplink receive spatial filters, the first indication information includes the indices of the downlink reference signal resources and indices of the uplink reference signal resources.

In some embodiments, the first indication information is carried by at least one of an RRC signaling, a MAC CE signaling, or DCI.

Specifically, for example, after the UE reports the uplink transmit beam or the uplink beam pair, the NW indicates the transmit beam based on reporting of the UE. In the NR, indication based on the spatial relationship information is used, or indication of a unified TCI state (an uplink TCI state or a joint TCI state) is used. The indication focuses on the transmit beam of the UE, and the transmit beam includes a downlink reference signal resource (for example, the CSI-RS resource or SSB resource reported by the UE) or an uplink reference signal resource (for example, the SRS resource reported by the UE) on a specific bandwidth part (BWP) in a specific component carrier (CC).

In some embodiments, prior to predicting the spatial filters using the first network model, the first communication device transmits the first capability information. The first capability information indicates that the first communication device supports predicting the uplink spatial filters based on the downlink measurement result.

Specifically, before the NW configures the measurement resources required by the model for the UE, the UE needs to inform the NW, by capability reporting, whether the UE supports predicting the uplink beam (pair) based on the downlink measurement.

In some embodiments, the first capability information further includes at least one of: a maximum quantity of downlink reference signal measurement sets supported on all preconfigured CCs or all preconfigured BWPs; a maximum quantity of supported and configured downlink reference signal measurement sets; a maximum quantity of downlink reference signal measurement sets supported and concurrently measured; a maximum quantity of reference signal measurement sets supported on all preconfigured CCs or all preconfigured BWPs; a maximum quantity of downlink reference signal measurement sets supported on a CC or a BWP; a maximum quantity of downlink reference signal resources in supported downlink reference signal measurement sets; a maximum quantity of reference signal prediction sets supported on a CC or a BWP; a maximum value of K1; or a quantity of reference signal prediction sets on a CC or a BWP being equal to a quantity of downlink reference signal measurement sets on the CC or the BWP.

Specifically, before the NW configures the measurement resources required by the model for the UE, the UE needs to report, by a capability, whether the UE supports predicting the uplink beam (pair) based on the downlink measurement. In a case where the UE supports predicting the uplink beam (pair) based on the downlink measurement, the capability reported by the UE includes, but is not limited to, at least one of: a maximum quantity of beam (pair) measurement sets supported on all CCs/BWPs, including a maximum quantity of configured measurement sets and a maximum quantity of measurement sets measurable by the UE concurrently; a maximum quantity of beam (pair) measurement sets supported on all CCs/BWPs; a maximum quantity of beam (pair) measurement sets supported on a CC/BWP, i.e., Nmax; a maximum quantity of SSB downlink resources and/or CSI-RS resources that are measurable in each measurement set (set B) (1 ≤n≤N); a maximum quantity of beam (pair) prediction sets supported on a CC/BWP, i.e., Pmax; a maximum quantity of beams (pairs) that are predictable in each prediction set (set Ap) (1≤p≤P); or a quantity P of prediction sets on a CC/BWP being equal to a quantity N of measurement sets on the CC or the BWP (P=N), and the beam (pair) prediction sets are in one-to-one mapping with the beam (pair) measurement sets.

In some embodiments, the first capability information is carried by at least one of an RRC signaling, a MAC CE signaling, or UCI.

In some embodiments, in a case where the UE supports predicting the uplink beam (pair) based on the downlink measurement, and the model used for the prediction is a cell-specified model, the NW transmits the model adapted to the actual deployment environment and beam (pair) configuration to the UE. The signaling transmitted by the model is an signaling in a 3GPP framework. For example, the NW describes a structure of one or more models and initial parameters of various nodes based on an open format of the RRC signaling. Then, the NW indicates a dedicated model identifier (ID) (an ID defined in a lifecycle management of the model to identify different models) to the UE through the RRC, the MAC CE, or the DCI. In some embodiments, the UE starts a pre-prepared model, and optionally informs the NW of description information of the model, for example, through the open format or a more concise model ID. In the process of using the model ID as the model communication, it is important to assume that the NW and the UE clearly know and understand details of the model expressed by model ID.

In some embodiments, prior to predicting the spatial filters using the first network model, the first communication device receives first information. The first information is used to configure at least one of the downlink reference signal measurement set or the first reference signal prediction set, or the first information is used to activate at least one of the downlink reference signal measurement set in a plurality of preconfigured downlink reference signal measurement sets or the first reference signal prediction set in a plurality of preconfigured reference signal prediction sets.

Specifically, for example, the NW configures and/or activates the measurement set (the set B) required in the input of the model for the UE. The NW configures one or more sets (set Bn) (1≤n≤N) for the UE through the RRC signaling. The set Bn, as a beam (pair) measurement set, includes the CSI-RS resource and/or the SSB resource. In a case where the NW configures a plurality of sets (set Bn) (1 ≤n≤N) for the UE, the NW further needs to activate one set (set B) in the plurality of sets of configurations through the MAC CE signaling based on the actual deployment and antenna configuration. Otherwise, the UE only uses a set (set B) configured by the NW.

Specifically, for example, the NW configures and/or activates the uplink beam (pair) prediction set (set A) output by the model for UE. The NW configures one or more uplink beam (pair) prediction sets (set Ap) (1 ≤p≤P) for the UE through the RRC signaling. The set Ap, as the beam (pair) prediction set, includes the CSI-RS resource, the SSB resource, and/or the SRS resource. In a case where the NW configures a plurality of sets (set Ap) (1 ≤p≤P), the NW further needs to activate one set (set A) in the plurality of sets of configurations through the MAC CE signaling based on the actual deployment and antenna configuration. Otherwise, the UE only uses a set (set A) configured by the NW.

In some embodiments, the first information is carried by at least one of an RRC signaling, a MAC CE signaling, or DCI.

In some embodiments, a flowchart of prediction of an uplink beam based on a downlink prediction result is illustrated in FIG. 18.

In some embodiments, the terminal device supports predicting the downlink spatial filters based on the uplink measurement result.

That is, in the embodiments, the second measurement dataset includes at least one of link quality information measured based on an uplink reference signal measurement set, or indices of uplink reference signal resources corresponding to link quality information measured based on an uplink reference signal measurement set, and the second prediction dataset includes at least one of identification information of K2 predicted downlink transmit spatial filters, or identification information of K2 predicted downlink transmit spatial filters and identification information of K2 predicted downlink receive spatial filters, wherein K2 is a positive integer.

Specifically, for example, the second measurement dataset includes the link quality information measured based on the uplink reference signal measurement set, and the second prediction dataset includes at least one of the identification information of the K2 predicted downlink transmit spatial filters, or the identification information of the K2 predicted downlink transmit spatial filters and the identification information of the K2 predicted downlink receive spatial filters.

Specifically, for example, the second measurement dataset includes the link quality information measured based on the uplink reference signal measurement set and the indices of the uplink reference signal resources corresponding to the link quality information measured based on the uplink reference signal measurement set, and the second prediction dataset includes at least one of the identification information of the K2 predicted downlink transmit spatial filters, or the identification information of the K2 predicted downlink transmit spatial filters and the identification information of the K2 predicted downlink receive spatial filters.

In some embodiments, the uplink reference signal resources in the uplink reference signal measurement set are part or all of uplink reference signal resources in an uplink reference signal resource set. In some embodiments, the uplink reference signal resource set is configured by a network device or agreed by an agreement.

In some embodiments, the uplink reference signal resources in the uplink reference signal measurement set include the SRS resource.

Specifically, for example, it is assumed that the uplink reference signal measurement set is a set D. For prediction of the downlink transmit beam based on the uplink measurement or prediction of the downlink beam pair (i.e., the downlink transmit beam and the downlink receive beam) based on the uplink measurement, the UE transmits the uplink reference signal based on the set D, and the NW needs to measure the uplink reference signal resource in the set D, i.e., the SRS resource. It should be noted that resources in the set D are only the uplink reference signal resources (i.e., full beam coverage), or part of resources in the set D are the uplink reference signal resources (i.e., reducing the overhead in the spatial-domain). In addition, on the NW, the NW uses one or more receive beams for measurement based on configuration of reference signal resources in the set D.

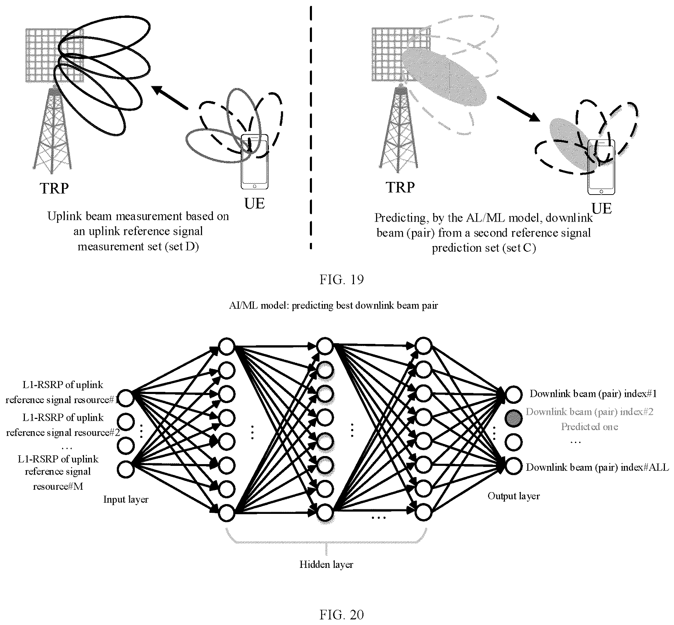

Specifically, a schematic diagram of uplink beam (pair) measurement and downlink beam (pair) prediction is illustrated in FIG. 19. The TRP (NW) measures uplink reference signals from the UE based on the uplink reference signal measurement set (set D), and the TRP (NW) predicts K2 downlink transmit beams and K2 downlink receive beams based on the second reference signal prediction set (set C).

In some embodiments, in a case where the second measurement dataset only includes the link quality information measured based on the uplink reference signal measurement set, the link quality information measured based on the uplink reference signal measurement set is input to the second network model based on a second order.

The second order is associated with the indices of the uplink reference signal resources in the uplink reference signal measurement set.

Specifically, for example, input of the second network model includes two modes. An input mode of the model is that the link quality (for example, the L1-RSRP) of the downlink reference signals (for example, the SRS) in the set D is input based on a fixed order (i.e., the second order). Another input mode of the model includes input of the indices of the resources (for example, the SRS resource) of the uplink reference signals in the set D and the link quality (for example, the L1-RSRP). In the second model, selection of the set D is more flexible.

Specifically, in the first input mode of the model, the NW uses the L1-RSRPs (or other performance indicators, such as the L1-SINR, the L1-RSSI, or the L1-RSRQ) of the uplink reference signals measured in the set D in a fixed order (i.e., the second order) as the input of the model, as illustrated in FIG. 20. The output is the index of the K2 optional downlink beam (pair) predicted by the model. FIG. 20 is illustrated using an example where K2 is equal to 1.

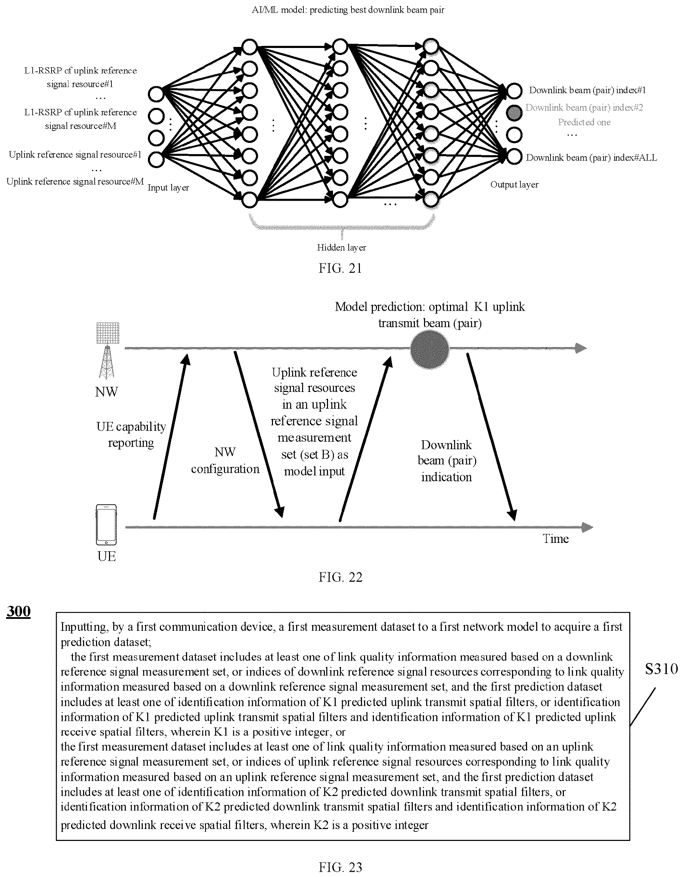

Specifically, in the second input mode of the model, the NW uses the L1-RSRP of the uplink reference signals measured in the set D and the index of the uplink reference signal resource in the set D as the input of the model, as illustrated in FIG. 21. Unlike FIG. 20, the indices of the M uplink reference signal resources and the corresponding M link qualities, such as the L1-RSRPs, are used as the input of the model, such that the NW measures the signals more flexibly and does not use the same input for each measurement. Similarly, the output of the model is the index of the predicted K2 optional downlink beam (pair). FIG. 21 is illustrated using an example where K2 is equal to 1.

It should be noted that the output of the model is the K2 optional downlink beams (pairs) in FIG. 20 and FIG. 21, and thus the corresponding RSRP received by the NW in the downlink is not required.

In some embodiments, in the example 3, in a case where the second prediction dataset includes the identification information of the K2 predicted downlink transmit spatial filters, the identification information of the K2 predicted downlink transmit spatial filters is determined based on reference signal resources predicted from a second reference signal prediction set using the second network model.

Specifically, the reference signal resources in the second reference signal prediction set include the downlink reference signal resources. In some embodiments, the downlink reference signal resources in the second reference signal prediction set include the CSI-RS resource and/or the SSB resource. Specifically, for example, the second reference signal prediction set is the set C.

In some embodiments, in the example 3, in a case where an TCI state is configured or activated for the downlink reference signal resources (for example, the CSI-RS resource) in the second reference signal prediction set, or the downlink reference signal resources (for example, the SSB resource) in the second reference signal prediction set are pre-measured, the identification information of the K2 downlink transmit spatial filters indicates receive spatial filters corresponding to the downlink reference signal resources predicted from the second reference signal prediction set using the second network model.

Specifically, for example, the downlink optional transmit beam output by the model corresponds to the downlink reference signal. In a case where the TCI state is configured and/or activated for the CSI-RS resource, or the SSB resource is pre-measured by the UE and the UE knows to use the corresponding receive beam, the UE uses the corresponding receive beam for reception.

In some embodiments, in the example 3, in a case where the TCI state is not configured or activated for the downlink reference signal resources in the second reference signal prediction set or the downlink reference signal resources in the second reference signal prediction set are not pre-measured, the identification information of the K2 downlink transmit spatial filters is identification information of downlink receive spatial filters determined by a second downlink sweep mode. In the second downlink sweep mode (for example, the P2 process), the downlink reference signals are transmitted by downlink transmit spatial filters corresponding to the predicted downlink reference signal resources and are received by different receive spatial filters, and an optional receive spatial filter is determined based on signal qualities of the received downlink reference signals.

Specifically, for example, the downlink optional transmit beam output by the model corresponds to the downlink reference signal. In a case where the TCI state is not configured and/or activated for the CSI-RS resource, or the SSB resource is not pre-measured by the UE and the UE does not know which corresponding receive beam is to be used, the NW needs to perform the downlink beam sweeping process, i.e., the P2 process. The NW adopts a fixed predicted transmit beam direction for transmission, and the UE uses different receive beams for reception, such that the receive beam corresponding to the optional downlink transmit beam is found.

In some embodiments, in the example 4, in a case where the second prediction dataset includes the identification information of the K2 predicted downlink transmit spatial filters and the identification information of the K2 predicted downlink receive spatial filters, the identification information of the K2 predicted downlink transmit spatial filters is determined based on downlink reference signal resources predicted from the second reference signal prediction set using the second network model, and the identification information of the K2 predicted downlink receive spatial filters is determined based on uplink reference signal resources predicted from the second reference signal prediction set using the second network model. In some embodiments, the uplink reference signal resources in the second reference signal prediction set include the SRS resource.

In some embodiments, in the example 4, the identification information of the K2 predicted downlink receive spatial filters is determined based on spatial relation information corresponding to the uplink reference signal resources predicted from the second reference signal prediction set using the second network model; and/or the identification information of the K2 predicted downlink transmit spatial filters is identification information of downlink transmit spatial filters corresponding to the downlink reference signal resources predicted from the second reference signal prediction set using the second network model.

Specifically, for example, the model only outputs the transmit beam in the optional downlink beam pair, i.e., the index of the CSI-RS resource and/or SSB on the premise that the UE needs to pre-measure the predicted SSB resource and the TCI state with the configured and/or activated CSI-RS. That is, the UE knows which receive beam is to be used for reception.

Specifically, for example, the model further outputs the downlink transmit beams (corresponding to the CSI-RS and/or SSB) and the downlink receive beams (corresponding to the SRS). For the receive beams, the UE needs to reverse the transmit beams of the SRS as the downlink receive beams.

In some embodiments, the network device transmits second indication information to the terminal device.

The second indication information indicates identification information of used downlink receive spatial filters in identification information of the K2 downlink receive spatial filters, or, the second indication information indicates identification information of used downlink transmit spatial filters in identification information of the K2 downlink transmit spatial filters and identification information of used downlink receive spatial filters in identification information of K2 downlink receive spatial filters.

In some embodiments, in a case where the second indication information indicates the identification information of the used downlink receive spatial filters in the identification information of the K2 downlink receive spatial filters, the second indication information includes at least one TCI state indicator or indices of the downlink reference signal resources; or
in a case where the second indication information indicates the identification information of the used downlink transmit spatial filters in the identification information of the K2 downlink transmit spatial filters and the identification information of the used downlink receive spatial filters in the identification information of the K2 downlink receive spatial filters, the second indication information includes indices of the downlink reference signal resources and the indices of the uplink reference signal resources.

Specifically, the NW indicates the downlink transmit beam based on a traditional TCI state or a unified TCI state.

Specifically, the NW indicates the downlink beam pair based on the TCI state in a case where the model only outputs the indices of the CSI-RS and/or the SSB on the premise that the UE needs to know the corresponding receive beam in advance. In a case where the model outputs a combination of the indices of the CSI-RS and/or the SSB (indicating the transmit beam) and the index of the SRS (indicating the receive beam), the traditional beam indication based on the TCI state is insufficient, and thus the receive beam in the beam pair is represented by the SRS resource.

Specifically, the index of the SRS resource is carried in a second unified TCI state in the MAC CE and/or the DCI indicated by the NW. The UE uses the transmit beam of the SRS resource in the second unified TCI state as the downlink receive beam.

In some embodiments, the second indication information is carried by at least one of an RRC signaling, a MAC CE signaling, or DCI.

In some embodiments, prior to predicting the spatial filters using the second network model, the network device receives second capability information from the terminal device.

The second capability information further includes at least one of: a maximum quantity of uplink reference signal measurement sets supported on all preconfigured CCs or all preconfigured BWPs; a maximum quantity of supported and configured uplink reference signal measurement sets; a maximum quantity of uplink reference signal measurement sets supported and concurrently transmitted; a maximum quantity of reference signal measurement sets supported on all preconfigured CCs or all preconfigured BWPs; a maximum quantity of uplink reference signal measurement sets supported on a CC or a BWP; a maximum quantity of uplink reference signal resources in supported uplink reference signal measurement sets; a maximum quantity of reference signal prediction sets supported on a CC or a BWP; a maximum value of K2; or a quantity of reference signal prediction sets on a CC or a BWP being equal to a quantity of uplink reference signal measurement sets on the CC or the BWP.

Specifically, before the NW configures the measurement resources required by the model for the UE, the UE needs to report a capability to the NW. It should be noted that the agreement supports capability reporting regarding sweeping the uplink beams based on the SRS by the UE, and thus the UE does not need to report whether the UE supports predicting the downlink beams (pairs) based on the uplink measurement. The capability reported by the UE includes, but is not limited to, at least one of: a maximum quantity of beam (pair) measurement sets supported on all CCs/BWPs, including a maximum quantity of configured measurement sets and a maximum quantity of measurement sets measurable by the UE concurrently; a maximum quantity of beam (pair) measurement sets supported on all CCs/BWPs; a maximum quantity of beam (pair) measurement sets supported on a CC/BWP, i.e., Smax; a maximum quantity of SSB uplink resources that are transmittable in each measurement set (set Ds) (1 ≤ s ≤ S); a maximum quantity of beam (pair) prediction sets supported on a CC/BWP, i.e., Tmax; a maximum quantity of beams (pairs) that are predictable in each prediction set (set Ct) (1 ≤ t ≤ T)); or a quantity T of prediction sets on a CC/BWP being equal to a quantity S of measurement sets on the CC or the BWP (S=T), and the beam (pair) prediction sets are in one-to-one mapping with the beam (pair) measurement sets.

In some embodiments, the second capability information is carried by at least one of an RRC signaling, a MAC CE signaling, or UCI.

In the embodiments, the model is deployed on the NW, and is not required for transmission from the NW to the UE.

In some embodiments, prior to predicting the spatial filters using the second network model, the network device transmits second information to the terminal device.

The second information is used to configure at least one of the uplink reference signal measurement set or the second reference signal prediction set, or the second information is used to activate at least one of the uplink reference signal measurement set in a plurality of preconfigured uplink reference signal measurement sets or the second reference signal prediction set in a plurality of preconfigured reference signal prediction sets.

Specifically, for example, the NW configures and/or activates the measurement set (set D) based on the SRS for UE. The NW configures one or more sets (set Ds) (1 ≤ s ≤ S) for the UE through the RRC signaling. The set Ds, as the uplink beam (pair) measurement set, includes the SRS resource. In a case where the NW configures a plurality of sets (set Ds) (1 ≤ s ≤ S) for the UE, the NW further needs to activate one set (set D) in the plurality of sets of configurations through the MAC CE signaling based on the actual deployment and antenna configuration. Otherwise, the UE only uses a set (set D) configured by the NW.

Specifically, for example, the NW configures and/or activates the downlink beam (pair) prediction set (the set C) output by the model for UE ( configuring of the prediction set for the UE is not to cause the UE to predict the downlink beam (pair) but to cause the UE to know the range indicated by the NW for the downlink beam (pair)). The NW configures one or more uplink beam (pair) prediction set (set Ct) (1 ≤ t ≤ T) for the UE through the RRC signaling. The set Ct, as the downlink beam (pair) prediction set, includes the CSI-RS resource, the SSB resource, and/or the SRS resource. In a case where the NW configures a plurality of sets (set Ct) (1 ≤t≤T) for the UE, the NW further needs to activate one set (set C) in the plurality of sets of configurations through the MAC CE signaling based on the actual deployment and antenna configuration. Otherwise, the UE only uses a set (set C) configured by the NW.

In some embodiments, the second information is carried by at least one of an RRC signaling, a MAC CE signaling, or DCI.

In some embodiments, a flowchart of prediction of a downlink beam based on an uplink prediction result is illustrated in FIG. 22.

Thus, in the embodiments of the present disclosure, the terminal device supports predicting the uplink spatial filters based on the downlink measurement result, and predicts the uplink spatial filters based on the downlink measurement result using a first network model; and/or, the terminal device supports predicting the downlink spatial filters based on the uplink measurement result, and predicts the downlink spatial filters based on the uplink measurement result using a second network model, such that the overhead and the latency of the uplink spatial filter management and/or the downlink spatial filter management are reduced. The embodiments of the present disclosure are implemented based on beam correspondence between uplink and downlink beams.

FIG. 23 is a schematic flowchart of a method 300 for wireless communication according to some embodiments of the present disclosure. As illustrated in FIG. 23, the method 300 for wireless communication includes at least the following processes.

In S310, a first communication device inputs a first measurement dataset to a first network model to acquire a first prediction dataset.

The first measurement dataset includes at least one of link quality information measured based on a downlink reference signal measurement set, or indices of downlink reference signal resources corresponding to link quality information measured based on a downlink reference signal measurement set, and the first prediction dataset includes at least one of identification information of K1 predicted uplink transmit spatial filters, or identification information of K1 predicted uplink transmit spatial filters and identification information of K1 predicted uplink receive spatial filters. K1 is a positive integer.

Alternatively, the first measurement dataset includes at least one of link quality information measured based on an uplink reference signal measurement set, or indices of uplink reference signal resources corresponding to link quality information measured based on an uplink reference signal measurement set, and the first prediction dataset includes at least one of identification information of K2 predicted downlink transmit spatial filters, or identification information of K2 predicted downlink transmit spatial filters and identification information of K2 predicted downlink receive spatial filters. K2 is a positive integer.

In some embodiments of the present disclosure, the spatial filter is also referred to as a beam, a beam pair, a spatial relation, a spatial setting, and spatial-domain filter, or a reference signal.

In some embodiments, the first network model is the AI/ML model. In some embodiments, the first network model is an AI/ML model for beam prediction in the spatial-domain. The specific implementations are illustrated in FIG. 9 or FIG. 10, or FIG. 11.

In some embodiments, the transmit spatial filter is also referred to as a transmit beam (Tx beam) or a transmitter spatial-domain filter, and the terms are interchangeable. The receive spatial filter is also referred to as a receive beam (Rx beam) or a receiver spatial-domain filter, and the terms are interchangeable. The combination of the transmit spatial filter and the receive spatial filter is also referred to as a beam pair (i.e., a pair of the Tx beam and the Rx beam), a spatial filter pair, and a spatial filter set, and the terms are interchangeable.

In some embodiments, the identification information of the spatial filter is an index or identifier of the spatial filter.

For example, the identification information of the transmit spatial filter is an index or identifier of the transmit spatial filter.

For example, the identification information of the receive spatial filter is an index or identifier of the receive spatial filter.

For example, the identification information of the combination of the transmit spatial filter and the receive spatial filter is an index of the combination.

In some embodiments, the link quality information includes at least one of an L1-RSRP, an L1-RSRQ, an L1-SINR, or an L1-RSSI.

In some embodiments, the first communication device is a terminal device or a network device.

In the embodiments of the present disclosure, for the prediction of the uplink spatial filter based on the downlink measurement result, the first network model is suitable for deployment on the UE. That is, the first communication device is the terminal device. In some embodiments, for the prediction of the uplink spatial filter based on the downlink measurement result, the first network model is deployed on the network. In this case, the terminal device needs to report the downlink measurement result. The following embodiments are illustrated using an example where the first network model is deployed on the UE, that is, the terminal device predicts the uplink spatial filters based on the downlink measurement result.

In the embodiments of the present disclosure, for the prediction of the downlink spatial filter based on the uplink measurement result, the first network model is suitable for deployment on the NW. That is, the first communication device is the network device. In some embodiments, for the prediction of the downlink spatial filter based on the uplink measurement result, the first network model is deployed on the UE. In this case, the network device needs to indicate the uplink measurement result to the terminal device. The following embodiments are illustrated using an example where the first network model is deployed on the NW, that is, the network device predicts the downlink spatial filters based on the uplink measurement result.

In the embodiments of the present disclosure, in a case where the first communication device is the terminal device, the first measurement dataset includes at least one of link quality information measured based on a downlink reference signal measurement set, or indices of downlink reference signal resources corresponding to link quality information measured based on a downlink reference signal measurement set. The first prediction dataset includes at least one of identification information of K1 predicted uplink transmit spatial filters, or identification information of K1 predicted uplink transmit spatial filters and identification information of K1 predicted uplink receive spatial filters. K1 is a positive integer.

In the embodiments of the present disclosure, in a case where the first communication device is the network device, the first measurement dataset includes at least one of link quality information measured based on an uplink reference signal measurement set, or indices of uplink reference signal resources corresponding to link quality information measured based on an uplink reference signal measurement set, and the second prediction dataset includes at least one of identification information of K2 predicted downlink transmit spatial filters, or identification information of K2 predicted downlink transmit spatial filters and identification information of K2 predicted downlink receive spatial filters. K2 is a positive integer.

In the embodiments of the present disclosure, the first communication device predicts the uplink spatial filters based on the downlink measurement result using the first network model, or, the first communication device predicts the downlink spatial filters based on the uplink measurement result using the first network model, such that the overhead of the beam (pair) prediction based on the first network model is reduced, and the performance of the beam management system is improved. The embodiments of the present disclosure are implemented based on beam correspondence between uplink and downlink beams.

For example, in a case where the UE supports the beam correspondence between uplink and downlink beams, the UE predicts the optional K1 downlink receive beams using the first network model, and reverses the K1 downlink receive beams based on the beam correspondence between uplink and downlink beams to acquire the optional K1 uplink transmit beams.

For example, in a case where the NW supports the beam correspondence between uplink and downlink beams, the NW predicts the optional K2 uplink receive beams using the first network model, and reverses the K2 uplink receive beams based on the beam correspondence between uplink and downlink beams to acquire the optional K2 downlink transmit beams.

In the embodiments of the present disclosure, downlink measurement assists uplink beam (pair) prediction, or, uplink measurement assists downlink beam (pair) prediction. The term "assist" herein refers to that an amount of downlink or uplink measurement (for example, an index of a measured reference signal resource and/or a value of an L1-RSRP) is used as input of the AI/ML model.

In the embodiment of the present disclosure, in a case where downlink measurement assists uplink beam (pair) prediction, the UE measures a downlink beam sweeping reference signal as input of the model, the model outputs prediction of an index of an optional uplink beam (pair), the UE reports a prediction result of the uplink beam (pair) to the NW, and finally the NW indicates the uplink beam. In a case where uplink measurement assists downlink beam (pair) prediction, the UE transmits an uplink beam sweeping reference signal, the NW measures the uplink beam sweeping reference signal as input of the model, the model outputs prediction of an index of an optional downlink beam (pair), and finally the NW indicates the downlink beam.

It should be noted that the uplink beam (pair) is the uplink transmit beam, or the uplink transmit beam and the uplink receive beam. Similarly, the downlink beam (pair) is the downlink transmit beam, or the downlink transmit beam and the downlink receive beam.

In some embodiments, in a case where information in the first measurement dataset is acquired based on the downlink reference signal measurement set, the first communication device supports predicting the uplink spatial filters based on the downlink measurement result. In some embodiments, the first communication device is the terminal device.

That is, in the embodiments, the first measurement dataset includes at least one of link quality information measured based on a downlink reference signal measurement set, or indices of downlink reference signal resources corresponding to link quality information measured based on a downlink reference signal measurement set. The first prediction dataset includes at least one of identification information of K1 predicted uplink transmit spatial filters, or identification information of K1 predicted uplink transmit spatial filters and identification information of K1 predicted uplink receive spatial filters.

Specifically, for example, the first measurement dataset includes the link quality information measured based on the downlink reference signal measurement set, and the first prediction dataset includes at least one of the identification information of the K1 predicted uplink transmit spatial filters, or the identification information of the K1 predicted uplink transmit spatial filters and the identification information of the K1 predicted uplink receive spatial filters.

For example, the first measurement dataset includes the link quality information measured based on the downlink reference signal measurement set and the indices of the downlink reference signal resources corresponding to the link quality information measured based on the downlink reference signal measurement set, and the first prediction dataset includes at least one of the identification information of the K1 predicted uplink transmit spatial filters, or the identification information of the K1 predicted uplink transmit spatial filters and the identification information of the K1 predicted uplink receive spatial filters.

In some embodiments, the downlink reference signal resources in the downlink reference signal measurement set are part or all of downlink reference signal resources in a downlink reference signal resource set. In some embodiments, the downlink reference signal resource set is configured by a network device or agreed by an agreement.

In some embodiments, the downlink reference signal resources in the downlink reference signal measurement set include a CSI-RS resource and/or an SSB resource.

Specifically, for example, it is assumed that the downlink reference signal measurement set is the set B. For prediction of the uplink transmit beam based on the downlink measurement or prediction of the uplink beam pair (i.e., the uplink transmit beam and the uplink receive beam) based on the downlink measurement, the NW transmits the downlink reference signals based on the set B, and the UE needs to measure downlink reference signal resources in the set B, i.e., the CSI-RS resource and/or the SSB resource. It should be noted that resources in the set B are only the downlink reference signal resources (i.e., full beam coverage), or part of resources in the set B are the downlink reference signal resources (i.e., reducing the overhead in the spatial-domain). In addition, on the UE, the UE uses one or more receive beams for measurement based on configuration of reference signal resources in the set B.

Specifically, a schematic diagram of downlink beam (pair) measurement and uplink beam (pair) prediction is illustrated in FIG. 15. The UE measures downlink reference signals from a TRP based on the downlink reference signal measurement set (the set B), and the UE predicts K1 uplink transmit beams and K1 uplink receive beams based on the first reference signal prediction set (set A).

In some embodiments, in a case where the first measurement dataset only includes the link quality information measured based on the downlink reference signal measurement set, the link quality information measured based on the downlink reference signal measurement set is input to the first network model based on a first order.

The first order is associated with the indices of the downlink reference signal resources in the downlink reference signal measurement set.

Specifically, for example, input of the first network model includes two modes. An input mode of the model is that the link quality (for example, the L1-RSRP) of the downlink reference signals in the set B is input based on a fixed order (i.e., the first order). Another input mode of a model includes input of the indices of the downlink reference signal resources in the set B and the link quality (for example, the L1-RSRP). In the second model, selection of the set B is more flexible.

Specifically, in the first input mode of the model, the UE uses the L1-RSRPs (or other performance indicators, such as the L1-SINR, the L1-RSSI, or the L1-RSRQ) of the downlink reference signals measured in the set B in a fixed order (i.e., the first order) as the input of the model, as illustrated in FIG. 16. The output is the index of the K1 optional uplink beam (pair) predicted by the model. FIG. 16 is illustrated using an example where K1 is equal to 1.

Specifically, in the second input mode of the model, the UE uses the L1-RSRP of the downlink reference signals measured in the set B and the index of the downlink reference signal resource in the set B as the input of the model, as illustrated in FIG. 17. Unlike FIG. 16, the indices of the M downlink reference signal resources and the corresponding M link qualities, such as the L1-RSRPs, are used as the input of the model, such that the UE measures the signals more flexibly and does not use the same input for each measurement. Similarly, the output of the model is the index of the predicted K1 optional uplink beam (pair). FIG. 17 is illustrated using an example where K1 is equal to 1.

It should be noted that the output of the model is the K1 optional uplink beams (pairs) in FIG. 16 and FIG. 17, and thus the corresponding RSRP received by the NW in the uplink is not required.

In some embodiments, in the example 1, in a case where the first prediction dataset includes the identification information of the K1 predicted uplink transmit spatial filters, the identification information of the K1 predicted uplink transmit spatial filters is determined based on reference signal resources predicted from a first reference signal prediction set using the first network model.

The reference signal resources in the first reference signal prediction set include at least one of uplink reference signal resources or the downlink reference signal resources. Specifically, for example, the first reference signal prediction set is the set A.

In some embodiments, in the example 1, the identification information of the K1 predicted uplink transmit spatial filters is represented by indices of the reference signal resources predicted from the first reference signal prediction set using the first network model.

In some embodiments, in the example 1, in a case where the reference signal resources in the first reference signal prediction set at least include the uplink reference signal resources, and spatial relation information is configured or activated for the uplink reference signal resources in the first reference signal prediction set, the identification information of the K1 uplink transmit spatial filters is determined based on the spatial relation information corresponding to the uplink reference signal resources predicted from the first reference signal prediction set using the first network model. In some embodiments, uplink receive spatial filters corresponding to the K1 uplink transmit spatial filters are receive spatial filters of the corresponding uplink reference signal resources respectively.

Specifically, for example, an index of a predicted uplink transmit beam corresponds to the uplink reference signal resource (for example, the SRS resource), that is, the reference signal resources in the first reference signal prediction set at least include the uplink reference signal resource (for example, the SRS resource). In a case where the spatial relation information is configured and/or activated for the SRS resource, the UE uses the spatial relation information as the uplink transmit beam. Correspondingly, the NW uses the receive beam that receives the SRS resource for reception.

In some embodiments, in the example 1, in a case where the reference signal resources in the first reference signal prediction set at least include the uplink reference signal resources, and spatial relation information is not configured or activated for the uplink reference signal resources in the first reference signal prediction set, the identification information of the K1 uplink transmit spatial filters indicates transmit spatial filters corresponding to the uplink reference signal resources predicted from the first reference signal prediction set using the first network model. In some embodiments, uplink receive spatial filters corresponding to the K1 uplink transmit spatial filters are determined by a first uplink sweep mode (for example, the U3 process). In the first uplink sweep mode, the uplink reference signals are transmitted by uplink transmit spatial filters corresponding to the predicted uplink reference signal resources and are received by different receive spatial filters, and an optional receive spatial filter is determined based on signal qualities of the received uplink reference signals.

Specifically, for example, an index of a predicted uplink transmit beam corresponds to the uplink reference signal resource (for example, the SRS resource), that is, the reference signal resources in the first reference signal prediction set at least include the uplink reference signal resource (for example, the SRS resource). In a case where the spatial relation information is not configured or activated for the SRS resource (for example, an SRS resource in an SRS resource set for uplink beam sweeping), the UE only knows a transmission direction of the SRS resource, and the NW does not know how to receive the SRS resource in advance. In this case, the UE needs to perform uplink beam sweeping, for example, the UE fixes a direction of an optional uplink beam in the U3 process, and the NW uses different receive beams for reception, such that an optional receive beam corresponding to the SRS resource is found.

In some embodiments, in the example 1, in a case where the reference signal resources in the first reference signal prediction set at least include the downlink reference signal resources, and a TCI state is configured or activated for the downlink reference signal resources (for example, the CSI-RS resource) in the first reference signal prediction set, or the downlink reference signal resources (for example, the SSB resource) in the first reference signal prediction set are pre-measured, the identification information of the K1 uplink transmit spatial filters indicates receive spatial filters corresponding to the downlink reference signal resources predicted from the first reference signal prediction set using the first network model. In some embodiments, uplink receive spatial filters corresponding to the K1 uplink transmit spatial filters are transmit spatial filters of the corresponding downlink reference signal resources respectively.

Specifically, for example, an index of a predicted uplink transmit beam corresponds to the downlink reference signal (for example, the CSI-RS resource or the SSB resource), that is, the reference signal resources in the first reference signal prediction set at least include the downlink reference signal resource (for example, the CSI-RS resource or the SSB resource). In a case where the TCI state is configured and/or activated for the CSI-RS resource, or the SSB resource is pre-measured by the UE, the UE uses the corresponding receive beam as the uplink transmit beam, and the NW uses the transmit beam of the CSI-RS resource or the SSB resource as the uplink receive beam.

In some embodiments, in the example 1, in a case where the reference signal resources in the first reference signal prediction set at least include the downlink reference signal resources, and a TCI state is not configured or activated for the downlink reference signal resources in the first reference signal prediction set or the downlink reference signal resources in the first reference signal prediction set are not pre-measured, the identification information of the K1 uplink transmit spatial filters is identification information of downlink receive spatial filters determined by a first downlink sweep mode (for example, the P3 process). In the first downlink sweep mode, the downlink reference signals are transmitted by downlink transmit spatial filters corresponding to the predicted downlink reference signal resources and are received by different receive spatial filters, and an optional receive spatial filter is determined based on signal qualities of the received downlink reference signals. In some embodiments, uplink receive spatial filters corresponding to the K1 uplink transmit spatial filters are the downlink transmit spatial filters corresponding to the predicted downlink reference signal resources respectively.

Specifically, for example, an index of a predicted uplink transmit beam corresponds to resource the downlink reference signal (for example, the CSI-RS resource or the SSB resource), that is, the reference signal resources in the first reference signal prediction set at least include the downlink reference signal resource (for example, the CSI-RS resource or the SSB resource). In a case where the TCI state is not configured and/or activated for the CSI-RS resource in advance, or the SSB resource is not pre-measured by the UE, the downlink beam sweeping process, for example, the P3 process, is required. The NW uses a fixed transmit beam, and the UE uses different receive beams to find the optional receive beam of the fixed transmit beam and uses the downlink receive beam used a s the optional uplink transmit beam.

In some embodiments, in the example 2, in a case where the first prediction dataset includes the identification information of the K1 predicted uplink transmit spatial filters and the identification information of the K1 predicted uplink receive spatial filters, the identification information of the K1 predicted uplink transmit spatial filters is determined based on uplink reference signal resources predicted from a first reference signal prediction set using the first network model, and the identification information of the K1 predicted uplink receive spatial filters is determined based on downlink reference signal resources predicted from the first reference signal prediction set using the first network model. That is, the reference signal resources in the first reference signal prediction set include the uplink reference signal resource and the downlink reference signal resource.

In some embodiments, in the example 2, the identification information of the K1 predicted uplink transmit spatial filters is represented by indices of the uplink reference signal resources predicted from the first reference signal prediction set using the first network model, and the identification information of the K1 predicted uplink receive spatial filters is represented by indices of the downlink reference signal resources predicted from the first reference signal prediction set using the first network model.

In some embodiments, in the example 2, the identification information of the K1 uplink transmit spatial filters is determined based on spatial relation information corresponding to the uplink reference signal resources predicted from the first reference signal prediction set using the first network model; and/or the identification information of the K1 predicted uplink receive spatial filters is identification information of downlink transmit spatial filters corresponding to the downlink reference signal resources predicted from the first reference signal prediction set using the first network model.

Specifically, for example, the model outputs the uplink transmit beam and the uplink receive beam, i.e., an index of an uplink beam pair. An abstract index of the beam pair index or the index of the resource in NR is used to represent the predicted beam pair. For example, the transmit beam in the beam pair corresponds to the SRS resource (configured with the spatial relation information), and the receive beam corresponds to the SRS resource through the CSI-RS resource (configured with the TCI state) or the SSB resource, which means that the UE uses the beam of the predicted optional resource of the SRS resource as the uplink transmit beam, and the NW reverses the corresponding transmit beam of the CSI-RS or SSB as the uplink receive beam.

In some embodiments, the reference signal resources in the first reference signal prediction set are part or all of the reference signal resources in the pre-configured reference signal resource set. In some embodiments, the downlink reference signal resources in the first reference signal prediction set include the CSI-RS resource and/or the SSB resource, and/or, the uplink reference signal resources in the first reference signal prediction set include the SRS resource.

In some embodiments, the first communication device transmits first prediction information. The first prediction information includes part or all of indices of the reference signal resources predicted from the first reference signal prediction set using the first network model.

In some embodiments, the first prediction information is carried by at least one of an RRC signaling, UCI, or a MAC CE signaling.

In some embodiments, in the example 1, an index of a predicted uplink transmit beam corresponds to the uplink reference signal resource (for example, the SRS resource) and/or the downlink reference signal resource (for example, the CSI-RS resource or the SSB resource), and thus the first prediction information includes the CSI-RS resource and/or the SSB resource, and the SRS resource in a case where the first prediction dataset includes the identification information of the K1 predicted uplink transmit spatial filters.

Specifically, for example, the first prediction information is reported and carried by an RRC, and the first prediction information includes an CSI-RS resource indicator (CRI) (i.e., an index of the CSI-RS resource) or an SSB resource indicator (SSBRI) (i.e., an index of the SSB resource), or the L1-RSRPs corresponding to the CRI or SSBRI are concurrently reported. The CRI or SSBRI represents the receive beam corresponding to the uplink transmit beam of the UE, as listed in Table 1. The report formats include the L1-RSRP and the differential L1-RSRP (corresponding downlink quality), or do not include the L1-RSRP and the differential L1-RSRP (adding []).

**Table 1 Report of downlink reference signal resources as uplink receive beams**

| **CSI report number** | **CSI fields** |
|---|---|
| CSI report#n | CRI or SSBRI #1, if reported |
| | CRI or SSBRI #2, if reported |
| | CRI or SSBRI #3, if reported |
| | CRI or SSBRI #4, if reported |
| | [ L1-RSRP #1, if reported ] |
| | [ Differential L1-RSRP #2, if reported ] |
| | [ Differential L1-RSRP #3, if reported ] |
| | [ Differential L1-RSRP #4, if reported ] |

It should be noted that in Table 1, the L1-RSRP corresponding to the CRI or SSBRI #1 is L1-RSRP #1, L1-RSRP corresponding to the CRI or SSBRI #2 is L1-RSRP#2, the L1-RSRP corresponding to the CRI or SSBRI #3 is L1-RSRP #3, the L1-RSRP corresponding to the CRI or SSBRI #4 is L1-RSRP #4, Differential L1-RSRP #2 is a difference between L1-RSRP #2 and L1-RSRP #1, Differential L1-RSRP #3 is a difference between L1-RSRP #3 and L1-RSRP #1, and the Differential L1-RSRP #4 is a difference between L1-RSRP #4 and L1-RSRP #1.

Specifically, for example, the first prediction information is reported and carried by an CSI, and the first prediction information includes an index of the SRS resource. The index of the SRS resource represents the optional uplink transmit beam predicted by the model, as listed in Table 2. In a case where the NW knows how to receive the SRS resource, the NW receives the SRS resource based on the spatial relation information of the SRS resource (i.e., the uplink beam information). Otherwise, the NW sweeps the receive beam of the SRS resource to find the appropriate uplink receive beam.

**Table 2 Report of uplink reference signal resources as uplink transmit beams**

| **CSI report number** | **CSI fields** |
|---|---|
| CSI report #n | SRS resource Index #1, if reported |
| | SRS resource Index #2, if reported |
| | SRS resource Index #3, if reported |
| | SRS resource Index #4, if reported |

In some embodiments, in the example 2, the index of the predicted uplink transmit beam corresponds to the uplink reference signal resource (for example, the SRS resource), and the index of the predicted uplink receive beam corresponds to the downlink reference signal resource (for example, the CSI-RS resource or the SSB resource), such that the first prediction information includes the CSI-RS resource and/or the SSB resource, and the SRS resource in a case where the first prediction dataset includes the identification information of the K1 predicted uplink transmit spatial filters and the identification information of the K1 predicted uplink receive spatial filters.

Specifically, for example, in a case where the first prediction dataset includes the identification information of the K1 predicted uplink transmit spatial filters and the identification information of the K1 predicted uplink receive spatial filters, the transmit beam (associated with the SRS resource) and the receive beam (associated with the CSI-RS resource or the SSB resource). Referring to Table 3, the first CRI or SSBRI corresponds to the first index of the SRS resource, the second CRI or SSBRI corresponds to the second index of the SRS resource, and the like.

**Table 3 Report of uplink reference signal resources as uplink transmit beams**

| **CSI report number** | **CSI fields** |
|---|---|
| CSI report #n | CRI or SSBRI #1, if reported |
| | CRI or SSBRI #2, if reported |
| | CRI or SSBRI #3, if reported |
| | CRI or SSBRI #4, if reported |
| | SRS resource Index #1, if reported |
| | SRS resource Index #2, if reported |
| | SRS resource Index #3, if reported |
| | SRS resource Index #4, if reported |

Specifically, for example, in a case where the first prediction dataset includes the identification information of the K1 predicted uplink transmit spatial filters and the identification information of the K1 predicted uplink receive spatial filters, only the receive beam (associated with the CSI-RS resource or the SSB resource) is reported, and the transmit beam is not required for report as implementation of the UE. For the specific report format, reference may be made to Table 1, which is not repeated herein.

In some embodiments, upon transmitting the first prediction information, the first communication device receives first indication information.

The first indication information indicates identification information of used uplink transmit spatial filters in the identification information of the K1 uplink transmit spatial filters, or, the first indication information indicates identification information of used uplink transmit spatial filters in the identification information of the K1 uplink transmit spatial filters and identification information of used uplink receive spatial filters in the identification information of the K1 uplink receive spatial filters.

In some embodiments, in a case where the first indication information indicates the identification information of the used uplink transmit spatial filters in the identification information of the K1 uplink transmit spatial filters, the first indication information includes at least one TCI state indicator or indices of the uplink reference signal resources.

In some embodiments, in a case where the first indication information indicates the identification information of the used uplink transmit spatial filters in the identification information of the K1 uplink transmit spatial filters and the identification information of the used uplink receive spatial filters in the identification information of the K1 uplink receive spatial filters, the first indication information includes the indices of the downlink reference signal resources and indices of the uplink reference signal resources.

In some embodiments, the first indication information is carried by at least one of an RRC signaling, a MAC CE signaling, or DCI.

Specifically, for example, after the UE reports the uplink transmit beam or the uplink beam pair, the NW indicates the transmit beam based on report of the UE. In the NR, indication based on the spatial relationship information is used, or indication of a unified TCI state (an uplink TCI state or a joint TCI state) is used. The indication focuses on the transmit beam of the UE, and the transmit beam includes a resource of a downlink reference signal resource (for example, the CSI-RS resource or SSB resource reported by the UE) or an uplink reference signal resource (for example, the SRS resource reported by the UE) on a specific BWP in a specific CC.

In some embodiments, prior to predicting the spatial filters using the first network model, the first communication device transmits the first capability information. The first capability information indicates that the first communication device supports predicting the uplink spatial filters based on the downlink measurement result.

Specifically, before the NW configures the measurement resources required by the model for the UE, the UE needs to inform the NW, by capability reporting, whether the UE supports predicting the uplink beam (pair) based on the downlink measurement.

In some embodiments, the first capability information further includes at least one of: a maximum quantity of downlink reference signal measurement sets supported on all preconfigured CCs or all preconfigured BWPs; a maximum quantity of downlink reference signal measurement sets supported and configured; a maximum quantity of downlink reference signal measurement sets supported and concurrently measured; a maximum quantity of reference signal measurement sets supported on all preconfigured CCs or all preconfigured BWPs; a maximum quantity of downlink reference signal measurement sets supported on a CC or a BWP; a maximum quantity of downlink reference signal resources in supported downlink reference signal measurement sets; a maximum quantity of reference signal prediction sets supported on a CC or a BWP; a maximum value of K1; or a quantity of reference signal prediction sets on a CC or a BWP being equal to a quantity of downlink reference signal measurement sets on the CC or the BWP.

Specifically, before the NW configures the measurement resources required by the model for the UE, the UE needs to report, by a capability, whether the UE supports predicting the uplink beam (pair) based on the downlink measurement. In a case where the UE supports predicting the uplink beam (pair) based on the downlink measurement, the capability reported by the UE includes, but is not limited to, at least one of: a maximum quantity of beam (pair) measurement sets supported on all CCs/BWPs, including a maximum quantity of configured measurement sets and a maximum quantity of measurement sets measurable by the UE concurrently; a maximum quantity of beam (pair) measurement sets supported on all CCs/BWPs; a maximum quantity of beam (pair) measurement sets supported on a CC/BWP, i.e., Nmax; a maximum quantity of SSB downlink resources and/or CSI-RS resources that are measurable in each measurement set (set Bn) (1 ≤n≤N); a maximum quantity of beam (pair) prediction sets supported on a CC/BWP, i.e., Pmax; a maximum quantity of beams (pairs) that are predictable in each prediction set (set Ap) (1≤p≤P); or a quantity P of prediction sets on a CC/BWP being equal to a quantity N of measurement sets on the CC or the BWP (P=N), and the beam (pair) prediction sets are in one-to-one mapping with the beam (pair) measurement sets.

In some embodiments, the first capability information is carried by at least one of an RRC signaling, a MAC CE signaling, or UCI.

In some embodiments, in a case where the UE supports predicting the uplink beam (pair) based on the downlink measurement, and the model used for the prediction is a cell-specified model, the NW transmits the model adapted to the actual deployment environment and beam (pair) configuration to the UE. The signaling transmitted by the model is an signaling in a 3GPP framework. For example, the NW describes a structure of one or more models and initial parameters of various nodes based on an open format of the RRC signaling. Then, the NW indicates a dedicated model ID (an ID defined in a lifecycle management of the model to identify different models) to the UE through the RRC, the MAC CE, or the DCI. In some embodiments, the UE starts a pre-prepared model, and optionally informs the NW of description information of the model, for example, through the open format or a more concise model ID. In the process of using the model ID as the model communication, it is important to assume that the NW and the UE clearly know and understand details of the model expressed by model ID.

In some embodiments, prior to predicting the spatial filters using the first network model, the first communication device receives first information. The first information is used to configure at least one of the downlink reference signal measurement set or the first reference signal prediction set, or the first information is used to activate at least one of the downlink reference signal measurement set in a plurality of preconfigured downlink reference signal measurement sets or the first reference signal prediction set in a plurality of preconfigured reference signal prediction sets.

Specifically, for example, the NW configures and/or activates the measurement set (set B) required in the input of the model for the UE. The NW configures one or more sets (set Bn) (1 ≤n≤N) for the UE through the RRC signaling. The set Bn, as a beam (pair) measurement set, includes the CSI-RS resource and/or the SSB resource. In a case where the NW configures a plurality of sets (set Bn) (1≤n≤N) for the UE, the NW further needs to activate one set (the set B) in the plurality of sets of configurations through the MAC CE signaling based on the actual deployment and antenna configuration. Otherwise, the UE only uses a set (set B) configured by the NW.

Specifically, for example, the NW configures and/or activates the uplink beam (pair) prediction set (set A) output by the model for UE. The NW configures one or more uplink beam (pair) prediction sets (set Ap) (1 ≤p≤P) for the UE through the RRC signaling. The set Ap, as the beam (pair) prediction set, includes the CSI-RS resource, the SSB resource, and/or the SRS resource. In a case where the NW configures a plurality of sets (set Ap) (1 ≤p≤P), the NW further needs to activate one set (the set A) in the plurality of sets of configurations through the MAC CE signaling based on the actual deployment and antenna configuration. Otherwise, the UE only uses a set (set A) configured by the NW.

In some embodiments, the first information is carried by at least one of an RRC signaling, a MAC CE signaling, or DCI.

In some embodiments, a flowchart of prediction of an uplink beam based on a downlink prediction result is illustrated in FIG. 18.

In some embodiments, in a case where information in the first measurement dataset is acquired based on the uplink reference signal measurement set, the first communication device supports predicting the downlink spatial filters based on the uplink measurement result. In some embodiments, the first communication device is the network device.

That is, in the embodiments, the first measurement dataset includes at least one of link quality information measured based on an uplink reference signal measurement set, or indices of uplink reference signal resources corresponding to link quality information measured based on an uplink reference signal measurement set, and the first prediction dataset includes at least one of identification information of K2 predicted downlink transmit spatial filters, or identification information of K2 predicted downlink transmit spatial filters and identification information of K2 predicted downlink receive spatial filters, wherein K2 is a positive integer.

Specifically, for example, the first measurement dataset includes the link quality information measured based on the uplink reference signal measurement set, and the first prediction dataset includes at least one of the identification information of the K2 predicted downlink transmit spatial filters, or the identification information of the K2 predicted downlink transmit spatial filters and the identification information of the K2 predicted downlink receive spatial filters.

Specifically, for example, the first measurement dataset includes the link quality information measured based on the uplink reference signal measurement set and the indices of the uplink reference signal resources corresponding to the link quality information measured based on the uplink reference signal measurement set, and the first prediction dataset includes at least one of the identification information of the K2 predicted downlink transmit spatial filters, or the identification information of the K2 predicted downlink transmit spatial filters and the identification information of the K2 predicted downlink receive spatial filters.

In some embodiments, the uplink reference signal resources in the uplink reference signal measurement set are part or all of uplink reference signal resources in an uplink reference signal resource set. In some embodiments, the uplink reference signal resource set is configured by a network device or agreed by an agreement.

In some embodiments, the uplink reference signal resources in the uplink reference signal measurement set include the SRS resources.

Specifically, for example, it is assumed that the uplink reference signal measurement set is a set D. For prediction of the downlink transmit beam based on the uplink measurement or prediction of the downlink beam pair (i.e., the downlink transmit beam and the downlink receive beam) based on the uplink measurement, the UE transmits the uplink reference signal based on the set D, and the NW needs to measure the uplink reference signal resource in the set D, i.e., the SRS resource. It should be noted that resources in the set D are only the uplink reference signal resources (i.e., full beam coverage), or part of resources in the set D are the uplink reference signal resources (i.e., reducing the overhead in the spatial-domain). In addition, on the NW, the NW uses one or more receive beams for measurement based on configuration of reference signal resources in the set D.

Specifically, a schematic diagram of uplink beam (pair) measurement and downlink beam (pair) prediction is illustrated in FIG. 19. The TRP (NW) measures uplink reference signals from the UE based on the uplink reference signal measurement set (the set D), and the TRP (NW) predicts K2 downlink transmit beams and K2 downlink receive beams based on the second reference signal prediction set (the set C).

In some embodiments, in a case where the first measurement dataset only includes the link quality information measured based on the uplink reference signal measurement set, the link quality information measured based on the uplink reference signal measurement set is input to the first network model based on a second order.

The second order is associated with the indices of the uplink reference signal resources in the uplink reference signal measurement set.

Specifically, for example, input of the first network model includes two modes. An input mode of the model is that the link quality (for example, the L1-RSRP) of the downlink reference signals (for example, the SRS) in the set D is input based on a fixed order (i.e., the second order). Another input mode of a model includes input of the indices of the resources (for example, the SRS resource) of the uplink reference signals in the set D and the link quality (for example, the L1-RSRP). In the second model, selection of the set D is more flexible.

Specifically, in the first input mode of the model, the NW uses the L1-RSRPs (or other performance indicators, such as the L1-SINR, the Ll-RSSI, or the L1-RSRQ) of the uplink reference signals measured in the set D in a fixed order (i.e., the second order) as the input of the model, as illustrated in FIG. 20. The output is the index of the K2 optional downlink beam (pair) predicted by the model. FIG. 20 is illustrated using an example where K2 is equal to 1.

Specifically, in the second input mode of the model, the NW uses the L1-RSRP of the uplink reference signals measured in the set D and the index of the uplink reference signal resource in the set D as the input of the model, as illustrated in FIG. 21. Unlike FIG. 20, the indices of the M uplink reference signal resources and the corresponding M link qualities, such as the L1-RSRPs, are used as the input of the model, such that the NW measures the signals more flexibly and does not use the same input for each measurement. Similarly, the output of the model is the index of the predicted K2 optional downlink beam (pair). FIG. 21 is illustrated using an example where K2 is equal to 1.

It should be noted that the output of the model is the K2 optional downlink beams (pairs) in FIG. 20 and FIG. 21, and thus the corresponding RSRP received by the NW in the downlink is not required.

In some embodiments, in the example 3, in a case where the first prediction dataset includes the identification information of the K2 predicted downlink transmit spatial filters, the identification information of the K2 predicted downlink transmit spatial filters is determined based on reference signal resources predicted from the second reference signal prediction set using the first network model.

Specifically, the reference signal resources in the second reference signal prediction set include the downlink reference signal resources. In some embodiments, the downlink reference signal resources in the second reference signal prediction set include the CSI-RS resource and/or the SSB resource. Specifically, for example, the second reference signal prediction set is the set C.

In some embodiments, in the example 3, in a case where a TCI state is configured or activated for the downlink reference signal resources (for example, the CSI-RS resource) in the second reference signal prediction set, or the downlink reference signal resources (for example, the SSB resource) in the second reference signal prediction set are pre-measured, the identification information of the K2 downlink transmit spatial filters indicates receive spatial filters corresponding to the downlink reference signal resources predicted from the second reference signal prediction set using the first network model.

Specifically, for example, the downlink optional transmit beam output by the model corresponds to the downlink reference signal. In a case where the TCI state is configured and/or activated for the CSI-RS resource, or the SSB resource is pre-measured by the UE and the UE knows to use the corresponding receive beam, the UE uses the corresponding receive beam for reception.

In some embodiments, in the example 3, in a case where the TCI state is not configured or activated for the downlink reference signal resources in the second reference signal prediction set or the downlink reference signal resources in the second reference signal prediction set are not pre-measured, the identification information of the K2 downlink transmit spatial filters is identification information of downlink receive spatial filters determined by a second downlink sweep mode. In the second downlink sweep mode (for example, the P2 process), the downlink reference signals are transmitted by downlink transmit spatial filters corresponding to the predicted downlink reference signal resources and are received by different receive spatial filters, and an optional receive spatial filter is determined based on signal qualities of the received downlink reference signals.

Specifically, for example, the downlink optional transmit beam output by the model corresponds to the downlink reference signal. In a case where the TCI state is not configured and/or activated for the CSI-RS resource, or the SSB resource is not pre-measured by the UE and the UE does not know to use the corresponding receive beam, the NW needs to perform the downlink beam sweeping process, i.e., the P2 process. The NW adopts a fixed predicted transmit beam direction for transmission, and the UE uses different receive beams for reception, such that the corresponding receive beam corresponding to the optional downlink transmit beam is found.

In some embodiments, in the example 4, in a case where the first prediction dataset includes the identification information of the K2 predicted downlink transmit spatial filters and the identification information of the K2 predicted downlink receive spatial filters, the identification information of the K2 predicted downlink transmit spatial filters is determined based on downlink reference signal resources predicted from the second reference signal prediction set using the first network model, and the identification information of the K2 predicted downlink receive spatial filters is determined based on uplink reference signal resources predicted from the second reference signal prediction set using the first network model. In some embodiments, the uplink reference signal resources in the second reference signal prediction set include the SRS resource.

In some embodiments, in the example 4, the identification information of the K2 predicted downlink receive spatial filters is determined based on spatial relation information corresponding to the uplink reference signal resources predicted from the second reference signal prediction set using the first network model; and/or the identification information of the K2 predicted downlink transmit spatial filters is identification information of downlink transmit spatial filters corresponding to the downlink reference signal resources predicted from the second reference signal prediction set using the first network model.

Specifically, for example, the model only outputs the transmit beams in the optional downlink beam pair, i.e., the index of the CSI-RS resource and/or SSB on the premise that the UE needs to pre-measure the predicted SSB resource and the TCI state with the configured and/or activated CSI-RS. That is, the UE knows which receive beam to use for reception.

Specifically, for example, the model further outputs the downlink transmit beams (corresponding to the CSI-RS and/or SSB) and the downlink receive beam (corresponding to the SRS). For the receive beam, the UE needs to reverse the transmit beam of the SRS as the downlink receive beam.

In some embodiments, the first communication device transmits second indication information.

The second indication information indicates identification information of used downlink receive spatial filters in identification information of the K2 downlink receive spatial filters, or, the second indication information indicates identification information of used downlink transmit spatial filters in identification information of the K2 downlink transmit spatial filters and identification information of used downlink receive spatial filters in identification information of K2 downlink receive spatial filters.

In some embodiments, in a case where the second indication information indicates the identification information of the used downlink receive spatial filters in the identification information of the K2 downlink receive spatial filters, the second indication information includes at least one TCI state indicator or indices of the downlink reference signal resources; or
in a case where the second indication information indicates the identification information of the used downlink transmit spatial filters in the identification information of the K2 downlink transmit spatial filters and the identification information of the used downlink receive spatial filters in the identification information of the K2 downlink receive spatial filters, the second indication information includes indices of the downlink reference signal resources and the indices of the uplink reference signal resources.

Specifically, the NW indicates the downlink transmit beam based on a traditional TCI state or an unified TCI state.

Specifically, the NW indicates the downlink beam pair based on the TCI state in a case where the model only outputs the indies of the CSI-RS and/or the SSB on the premise that the UE needs to know the corresponding receive beam in advance. In a case where the model outputs a combination of the indices of the CSI-RS and/or the SSB (indicating the transmit beam) and the index of the SRS (indicating the receive beam), the traditional beam indication based on the TCI state is insufficient, and thus the receive beam in the beam pair is represented by the SRS resource.

Specifically, the index of the SRS resource is carried in a second unified TCI state in the MAC CE and/or the DCI indicated by the NW. The UE uses the transmit beam of the SRS resource in the second unified TCI state as the downlink receive beam.

In some embodiments, the second indication information is carried by at least one of an RRC signaling, a MAC CE signaling, or DCI.

In some embodiments, prior to predicting the spatial filters using the first network model, the first communication device receives second capability information from the terminal device.

The second capability information further includes at least one of: a maximum quantity of uplink reference signal measurement sets supported on all preconfigured CCs or all preconfigured BWPs; a maximum quantity of uplink reference signal measurement sets supported and configured; a maximum quantity of uplink reference signal measurement sets supported and concurrently transmitted; a maximum quantity of reference signal measurement sets supported on all preconfigured CCs or all preconfigured BWPs; a maximum quantity of uplink reference signal measurement sets supported on a CC or a BWP; a maximum quantity of uplink reference signal resources in supported uplink reference signal measurement sets; a maximum quantity of reference signal prediction sets supported on a CC or a BWP; a maximum value of K2; or a quantity of reference signal prediction sets on a CC or a BWP being equal to a quantity of uplink reference signal measurement sets on the CC or the BWP.

Specifically, before the NW configures the measurement resources required by the model for the UE, the UE needs to report a capability to the NW. It should be noted that the agreement supports capability report of sweeping the uplink beams based on the SRS by the UE, and thus the UE does not need to report whether the UE supports predicting the downlink beams (pairs) based on the uplink measurement. The capability reported by the UE includes, but is not limited to, at least one of: a maximum quantity of beam (pair) measurement sets supported on all CCs/BWPs, including a maximum quantity of configured measurement sets and a maximum quantity of measurement sets measurable by the UE concurrently; a maximum quantity of beam (pair) measurement sets supported on all CCs/BWPs; a maximum quantity of beam (pair) measurement sets supported on a CC/BWP, i.e., Smax; a maximum quantity of SSB uplink resources that are transmittable in each measurement set (set Ds) (1 ≤ s ≤ S); a maximum quantity of beam (pair) prediction sets supported on a CC/BWP, i.e., Tmax; a maximum quantity of beams (pairs) that are predictable in each prediction set (set Ct) (1≤t≤T)); or a quantity T of prediction sets on a CC/BWP being equal to a quantity S of measurement sets on the CC or the BWP (S=T), and the beam (pair) prediction sets are in one-to-one mapping with the beam (pair) measurement sets.

In some embodiments, the second capability information is carried by at least one of an RRC signaling, a MAC CE signaling, or UCI.

In the embodiments, the model is deployed on the NW, and is not required for transmission from the NW to the UE.

In some embodiments, prior to predicting the spatial filters using the first network model, the first communication device transmits second information.

The second information is used to configure at least one of the uplink reference signal measurement set or the second reference signal prediction set, or the second information is used to activate at least one of the uplink reference signal measurement set in a plurality of preconfigured uplink reference signal measurement sets or the second reference signal prediction set in a plurality of preconfigured reference signal prediction sets.

Specifically, for example, the NW configures and/or activates the measurement set (set D) based on the SRS for UE. The NW configures one or more sets (set Ds) (1 ≤ s ≤ S) for the UE through the RRC signaling. The set Ds, as the uplink beam (pair) measurement set, includes the SRS resource. In a case where the NW configures a plurality of sets (set Ds) (1 ≤ s ≤ S) for the UE, the NW further needs to activate one set (set D) in the plurality of sets of configurations via the MAC CE signaling based on the actual deployment and antenna configuration. Otherwise, the UE only uses a set (set D) configured by the NW.

Specifically, for example, the NW configures and/or activates the downlink beam (pair) prediction set (the set C) output by the model for UE (configuring of the prediction set for the UE is not to cause the UE to predict the downlink beam (pair) but to cause the UE to know the range indicated by the NW for the downlink beam (pair)). The NW configures one or more uplink beam (pair) prediction set (set Ct) (1 ≤ t ≤ T) for the UE through the RRC signaling. The set Ct, as the downlink beam (pair) prediction set, includes the CSI-RS resource, the SSB resource, and/or the SRS resource. In a case where the NW configures a plurality of sets (set Ct) (1≤t≤T) for the UE, the NW further needs to activate one set (set C) in the plurality of sets of configurations via the MAC CE signaling based on the actual deployment and antenna configuration. Otherwise, the UE only uses a set (set C) configured by the NW.

In some embodiments, the second information is carried by at least one of an RRC signaling, a MAC CE signaling, or DCI.

In some embodiments, a flowchart of prediction of a downlink beam based on an uplink prediction result is illustrated in FIG. 22.

Thus, in the embodiments of the present disclosure, the first communication device supports predicting the uplink spatial filters based on the downlink measurement result, and predicts the uplink spatial filters based on the downlink measurement result using a first network model; and/or, the terminal device supports predicting the downlink spatial filters based on the uplink measurement result, and predicts the downlink spatial filters based on the uplink measurement result using a second network model, such that the overhead and the latency of the uplink spatial filter management and/or the downlink spatial filter management are reduced. The embodiments of the present disclosure are implemented based on beam correspondence between uplink and downlink beams.

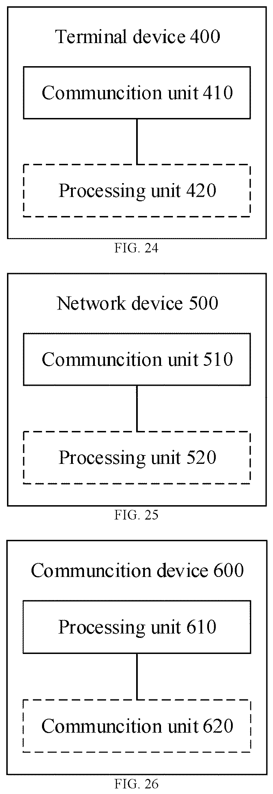

The method embodiments of the present disclosure are detailed above in conjunction with FIG. 14 to FIG. 23, and the apparatus embodiments of the present disclosure will be detailed hereinafter in conjunction with FIG. 24 to FIG. 29. It should be understood that the apparatus embodiments correspond to the method embodiments, and thus reference may be made to the method embodiments for similar description.

FIG. 24 is a schematic block diagram of a terminal device 400 according to some embodiments of the present disclosure. As illustrated in FIG. 24, the terminal device 400 includes the following units.

A communication unit 410 is configured to transmit first capability information, wherein the first capability information indicates whether the terminal device supports predicting uplink spatial filters based on a downlink measurement result, and/or, the first capability information indicates whether the terminal device supports predicting downlink spatial filters based on an uplink measurement result.

In some embodiments, in a case where the terminal device supports predicting the uplink spatial filters based on the downlink measurement result, the terminal device 400 further includes a processing unit 420, wherein the processing unit 420 is configured to input a first measurement dataset to a first network model to acquire a first prediction dataset, wherein the first measurement dataset includes at least one of link quality information measured based on a downlink reference signal measurement set, or indices of downlink reference signal resources corresponding to link quality information measured based on a downlink reference signal measurement set, and the first prediction dataset includes at least one of identification information of K1 predicted uplink transmit spatial filters, or identification information of K1 predicted uplink transmit spatial filters and identification information of K1 predicted uplink receive spatial filters, wherein K1 is a positive integer.

In some embodiments, the downlink reference signal resources in the downlink reference signal measurement set are part or all of downlink reference signal resources in a downlink reference signal resource set.

In some embodiments, the downlink reference signal resource set is configured by a network device or agreed by an agreement.

In some embodiments, in a case where the first measurement dataset only includes the link quality information measured based on the downlink reference signal measurement set, the link quality information measured based on the downlink reference signal measurement set is input to the first network model based on a first order, wherein the first order is associated with the indices of the downlink reference signal resources in the downlink reference signal measurement set.

In some embodiments, in a case where the first prediction dataset includes the identification information of the K1 predicted uplink transmit spatial filters, the identification information of the K1 predicted uplink transmit spatial filters is determined based on reference signal resources predicted from a first reference signal prediction set using the first network model, wherein the reference signal resources in the first reference signal prediction set include at least one of uplink reference signal resources or the downlink reference signal resources.

In some embodiments, in a case where the reference signal resources in the first reference signal prediction set at least include the uplink reference signal resources, and spatial relation information is configured or activated for the uplink reference signal resources in the first reference signal prediction set, the identification information of the K1 uplink transmit spatial filters is determined based on the spatial relation information corresponding to the uplink reference signal resources predicted from the first reference signal prediction set using the first network model.

In some embodiments, uplink receive spatial filters corresponding to the K1 uplink transmit spatial filters are receive spatial filters of the corresponding uplink reference signal resources respectively.

In some embodiments, in a case where the reference signal resources in the first reference signal prediction set at least include the uplink reference signal resources, and spatial relation information is not configured or activated for the uplink reference signal resources in the first reference signal prediction set, the identification information of the K1 uplink transmit spatial filters indicates transmit spatial filters corresponding to the uplink reference signal resources predicted from the first reference signal prediction set using the first network model.

In some embodiments, uplink receive spatial filters corresponding to the K1 uplink transmit spatial filters are determined by a first uplink sweep mode, wherein in the first uplink sweep mode, the uplink reference signals are transmitted by uplink transmit spatial filters corresponding to the predicted uplink reference signal resources and are received by different receive spatial filters, and an optional receive spatial filter is determined based on signal qualities of the received uplink reference signals.

In some embodiments, in a case where the reference signal resources in the first reference signal prediction set at least include the downlink reference signal resources, and a TCI state is configured or activated for the downlink reference signal resources in the first reference signal prediction set or the downlink reference signal resources in the first reference signal prediction set are pre-measured, the identification information of the K1 uplink transmit spatial filters indicates receive spatial filters corresponding to the downlink reference signal resources predicted from the first reference signal prediction set using the first network model.

In some embodiments, uplink receive spatial filters corresponding to the K1 uplink transmit spatial filters are transmit spatial filters of the corresponding downlink reference signal resources respectively.

In some embodiments, in a case where the reference signal resources in the first reference signal prediction set at least include the downlink reference signal resources, and a TCI state is not configured or activated for the downlink reference signal resources in the first reference signal prediction set or the downlink reference signal resources in the first reference signal prediction set are not pre-measured, the identification information of the K1 uplink transmit spatial filters is identification information of downlink receive spatial filters determined by a first downlink sweep mode, wherein in the first downlink sweep mode, the downlink reference signals are transmitted by downlink transmit spatial filters corresponding to the predicted downlink reference signal resources and are received by different receive spatial filters, and an optional receive spatial filter is determined based on signal qualities of the received downlink reference signals.

In some embodiments, uplink receive spatial filters corresponding to the K1 uplink transmit spatial filters are the downlink transmit spatial filters corresponding to the predicted downlink reference signal resources respectively.

In some embodiments, in a case where the first prediction dataset includes the identification information of the K1 predicted uplink transmit spatial filters and the identification information of the K1 predicted uplink receive spatial filters, the identification information of the K1 predicted uplink transmit spatial filters is determined based on uplink reference signal resources predicted from a first reference signal prediction set using the first network model, and the identification information of the K1 predicted uplink receive spatial filters is determined based on downlink reference signal resources predicted from the first reference signal prediction set using the first network model.

In some embodiments, the identification information of the K1 uplink transmit spatial filters is determined based on spatial relation information corresponding to the uplink reference signal resources predicted from the first reference signal prediction set using the first network model; and/or the identification information of the K1 predicted uplink receive spatial filters is identification information of downlink transmit spatial filters corresponding to the downlink reference signal resources predicted from the first reference signal prediction set using the first network model.

In some embodiments, the communication unit 410 is further configured to transmit first prediction information, wherein the first prediction information includes part or all of indices of the reference signal resources predicted from the first reference signal prediction set using the first network model.

In some embodiments, the communication unit 410 is further configured to receive first indication information, wherein the first indication information indicates identification information of used uplink transmit spatial filters in the identification information of the K1 uplink transmit spatial filters, or, the first indication information indicates identification information of used uplink transmit spatial filters in the identification information of the K1 uplink transmit spatial filters and identification information of used uplink receive spatial filters in the identification information of the K1 uplink receive spatial filters.

In some embodiments, in a case where the first indication information indicates the identification information of the used uplink transmit spatial filters in the identification information of the K1 uplink transmit spatial filters, the first indication information includes at least one TCI state indicator or indices of the uplink reference signal resources; or in a case where the first indication information indicates the identification information of the used uplink transmit spatial filters in the identification information of the K1 uplink transmit spatial filters and the identification information of the used uplink receive spatial filters in the identification information of the K1 uplink receive spatial filters, the first indication information includes the indices of the downlink reference signal resources and indices of the uplink reference signal resources.

In some embodiments, the downlink reference signal resources in the first reference signal prediction set include CSI-RS resources and/or SSB resources; and/or the uplink reference signal resources in the first reference signal prediction set include SRS resources.

In some embodiments, prior to predicting the spatial filters using the first network model, the communication unit 410 is further configured to receive first information, wherein the first information is used to configure at least one of the downlink reference signal measurement set or the first reference signal prediction set, or the first information is used to activate at least one of the downlink reference signal measurement set in a plurality of preconfigured downlink reference signal measurement sets or the first reference signal prediction set in a plurality of preconfigured reference signal prediction sets.

In some embodiments, in a case where the first capability information indicates that the terminal device supports predicting the uplink spatial filters based on the downlink measurement result, the first capability information further includes at least one of: a maximum quantity of downlink reference signal measurement sets supported on all preconfigured CCs or all preconfigured BWPs; a maximum quantity of downlink reference signal measurement sets supported and configured; a maximum quantity of downlink reference signal measurement sets supported and concurrently measured; a maximum quantity of reference signal measurement sets supported on all preconfigured CCs or all preconfigured BWPs; a maximum quantity of downlink reference signal measurement sets supported on a CC or a BWP; a maximum quantity of downlink reference signal resources in supported downlink reference signal measurement sets; a maximum quantity of reference signal prediction sets supported on a CC or a BWP; a maximum value of K1; or a quantity of reference signal prediction sets on a CC or a BWP being equal to a quantity of downlink reference signal measurement sets on the CC or the BWP.

In some embodiments, in a case where the terminal device supports predicting the downlink spatial filters based on the uplink measurement result, the communication unit 410 is further configured to receive second indication information, wherein the second indication information indicates identification information of used downlink receive spatial filters in identification information of K2 downlink receive spatial filters, or, the second indication information indicates identification information of used downlink transmit spatial filters in identification information of K2 downlink transmit spatial filters and identification information of used downlink receive spatial filters in identification information of K2 downlink receive spatial filters, wherein the identification information of the K2 downlink transmit spatial filters and/or the identification information of the K2 downlink receive spatial filters belong to a second prediction dataset output using a second network model deployed on the NW upon input of a second measurement dataset, wherein the second measurement dataset includes at least one of link quality information measured based on an uplink reference signal measurement set, or indices of uplink reference signal resources corresponding to link quality information measured based on an uplink reference signal measurement set, and the second prediction dataset includes at least one of identification information of K2 predicted downlink transmit spatial filters, or identification information of K2 predicted downlink transmit spatial filters and identification information of K2 predicted downlink receive spatial filters, wherein K2 is a positive integer.

In some embodiments, in a case where the second indication information indicates the identification information of the used downlink receive spatial filters in the identification information of the K2 downlink receive spatial filters, the second indication information is at least one TCI state indicator or indices of the downlink reference signal resources; or in a case where the second indication information indicates the identification information of the used downlink transmit spatial filters in the identification information of the K2 downlink transmit spatial filters and the identification information of the used downlink receive spatial filters in the identification information of the K2 downlink receive spatial filters, the second indication information is indices of the downlink reference signal resources and the indices of the uplink reference signal resources.

In some embodiments, the uplink reference signal resources in the uplink reference signal measurement set are part or all of uplink reference signal resources in an uplink reference signal resource set.

In some embodiments, the uplink reference signal resource set is configured by a network device or agreed by an agreement.

In some embodiments, in a case where the second measurement dataset only includes the link quality information measured based on the uplink reference signal measurement set, the link quality information measured based on the uplink reference signal measurement set is input to the second network model based on a second order, wherein the second order is associated with the indices of the uplink reference signal resources in the uplink reference signal measurement set.

In some embodiments, in a case where the second prediction dataset includes the identification information of the K2 predicted downlink transmit spatial filters, the identification information of the K2 predicted uplink transmit spatial filters is determined based on reference signal resources predicted from a second reference signal prediction set using the second network model, wherein the reference signal resources in the second reference signal prediction set include downlink reference signal resources.

In some embodiments, in a case where a TCI state is configured or activated for the downlink reference signal resources in the second reference signal prediction set or the downlink reference signal resources in the second reference signal prediction set are pre-measured, the identification information of the K2 downlink transmit spatial filters indicates receive spatial filters corresponding to the downlink reference signal resources predicted from the second reference signal prediction set using the second network model.

In some embodiments, in a case where a TCI state is not configured or activated for the downlink reference signal resources in the second reference signal prediction set or the downlink reference signal resources in the second reference signal prediction set are not pre-measured, the identification information of the K2 downlink transmit spatial filters is identification information of downlink receive spatial filters determined by a second downlink sweep mode, wherein in the second downlink sweep mode, the downlink reference signals are transmitted by downlink transmit spatial filters corresponding to the predicted downlink reference signal resources and are received by different receive spatial filters, and an optional downlink receive spatial filter is determined based on signal qualities of the received downlink reference signals.

In some embodiments, in a case where the second prediction dataset includes the identification information of the K2 predicted downlink transmit spatial filters and the identification information of the K2 predicted downlink receive spatial filters, the identification information of the K2 predicted downlink transmit spatial filters is determined based on downlink reference signal resources predicted from a second reference signal prediction set using the second network model, and the identification information of the K2 predicted downlink receive spatial filters is determined based on uplink reference signal resources predicted from the second reference signal prediction set using the second network model.

In some embodiments, the identification information of the K2 predicted downlink receive spatial filters is determined based on spatial relation information corresponding to the uplink reference signal resources predicted from the second reference signal prediction set using the second network model; and/or the identification information of the K2 predicted downlink transmit spatial filters is identification information of downlink transmit spatial filters corresponding to the downlink reference signal resources predicted from the second reference signal prediction set using the second network model.

In some embodiments, the downlink reference signal resources in the second reference signal prediction set include CSI-RS resources and/or SSB resources.

In some embodiments, the uplink reference signal resources in the second reference signal prediction set include SRS resources.

In some embodiments, prior to receiving the second indication information, the communication unit 410 is further configured to receive second information, wherein the second information is used to configure at least one of the uplink reference signal measurement set or the second reference signal prediction set, or the second information is used to activate at least one of the uplink reference signal measurement set in a plurality of preconfigured uplink reference signal measurement sets or the second reference signal prediction set in a plurality of preconfigured reference signal prediction sets.

In some embodiments, the first capability information further includes at least one of: a maximum quantity of uplink reference signal measurement sets supported on all preconfigured CCs or all preconfigured BWPs; a maximum quantity of supported and configured uplink reference signal measurement sets supported and configured; a maximum quantity of uplink reference signal measurement sets supported and concurrently measured; a maximum quantity of reference signal measurement sets supported on all preconfigured CCs or all preconfigured BWPs; a maximum quantity of uplink reference signal measurement sets supported on a CC or a BWP; a maximum quantity of uplink reference signal resources in supported uplink reference signal measurement sets; a maximum quantity of reference signal prediction sets supported on a CC or a BWP; or a maximum value of K2; or a quantity of reference signal prediction sets on a CC or a BWP being equal to a quantity of uplink reference signal measurement sets on the CC or the BWP.

In some embodiments, the communication unit may be a communication interface, a transceiver, a communication chip, or an input/output interface in a communication chip or a system on chip. The processing unit may be one or more processors.

It should be understood that the terminal device 400 according to the embodiments of the present application corresponds to the terminal device in the method embodiments of the present disclosure, and above and other operations and/or functions of the units in the terminal device 400 are applicable to performing the corresponding processes of the terminal device in the method 200 in FIG. 14, which are not described herein again for brevity.

FIG. 25 is a schematic block diagram of a network device 500 according to some embodiments of the present disclosure. As illustrated in FIG. 25, the network device 500 includes a communication unit 510, configured to receive first capability information, wherein the first capability information indicates whether a terminal device supports predicting uplink spatial filters based on a downlink measurement result, and/or, the first capability information indicates whether a terminal device supports predicting downlink spatial filters based on an uplink measurement result.

In some embodiments, in a case where the terminal device supports predicting the uplink spatial filters based on the downlink measurement result, the communication unit 510 is further configured to receive first prediction information, wherein the first prediction information includes at least one of part or all of indices of reference signal resources associated with identification information of K1 uplink transmit spatial filters, or indices of reference signal resources associated with identification information of K1 uplink receive spatial filters, wherein the identification information of the K1 uplink transmit spatial filters and/or the identification information of the K1 uplink receive spatial filters belong to a first prediction dataset output from a first network model deployed on a terminal upon input of a first measurement dataset, wherein the first measurement dataset includes at least one of link quality information measured based on a downlink reference signal measurement set, or indices of downlink reference signal resources corresponding to link quality information measured based on a downlink reference signal measurement set, and the first prediction dataset includes at least one of identification information of K1 predicted uplink transmit spatial filters, or identification information of K1 predicted uplink transmit spatial filters and identification information of K1 predicted uplink receive spatial filters, wherein K1 is a positive integer.

In some embodiments, the downlink reference signal resources in the downlink reference signal measurement set are part or all downlink reference signal resources in a downlink reference signal resource set.

In some embodiments, the downlink reference signal resource set is configured by the network device or agreed by an agreement.

In some embodiments, in a case where the first measurement dataset only includes the link quality information measured based on the downlink reference signal measurement set, the link quality information measured based on the downlink reference signal measurement set is input to the first network model based on a first order, wherein the first order is associated with the indices of the downlink reference signal resources in the downlink reference signal measurement set.

In some embodiments, in a case where the first prediction dataset includes the identification information of the K1 predicted uplink transmit spatial filters, the identification information of the K1 predicted uplink transmit spatial filters is determined based on the reference signal resources predicted from a first reference signal prediction set using the first network model, wherein the reference signal resources in the first reference signal prediction set include at least one of uplink reference signal resources or the downlink reference signal resources.

In some embodiments, in a case where the reference signal resources in the first reference signal prediction set at least include the uplink reference signal resources, and spatial relation information is configured or activated for the uplink reference signal resources in the first reference signal prediction set, the identification information of the K1 uplink transmit spatial filters is determined based on the spatial relation information corresponding to the uplink reference signal resources predicted from the first reference signal prediction set using the first network model.

In some embodiments, uplink receive spatial filters corresponding to the K1 uplink transmit spatial filters are receive spatial filters of the corresponding uplink reference signal resources respectively.

In some embodiments, in a case where the reference signal resources in the first reference signal prediction set at least include the uplink reference signal resources, and spatial relation information is not configured or activated for the uplink reference signal resources in the first reference signal prediction set, the identification information of the K1 uplink transmit spatial filters indicates transmit spatial filters corresponding to the uplink reference signal resources predicted from the first reference signal prediction set using the first network model.

In some embodiments, uplink receive spatial filters corresponding to the K1 uplink transmit spatial filters are determined by a first uplink sweep mode, wherein in the first uplink sweep mode, the uplink reference signals are transmitted by uplink transmit spatial filters corresponding to the predicted uplink reference signal resources and are received by different receive spatial filters, and an optional receive spatial filter is determined based on signal qualities of the received uplink reference signals.

In some embodiments, in a case where the reference signal resources in the first reference signal prediction set at least include the downlink reference signal resources, and a TCI state is configured or activated for the downlink reference signal resources in the first reference signal prediction set or the downlink reference signal resources in the first reference signal prediction set are pre-measured, the identification information of the K1 uplink transmit spatial filters indicates receive spatial filters corresponding to the downlink reference signal resources predicted from the first reference signal prediction set using the first network model.

In some embodiments, uplink receive spatial filters corresponding to the K1 uplink transmit spatial filters are transmit spatial filters of the corresponding downlink reference signal resources respectively.

In some embodiments, in a case where the reference signal resources in the first reference signal prediction set at least include the downlink reference signal resources, and a TCI state is not configured or activated for the downlink reference signal resources in the first reference signal prediction set or the downlink reference signal resources in the first reference signal prediction set are not pre-measured, the identification information of the K1 uplink transmit spatial filters is identification information of downlink receive spatial filters determined by a first downlink sweep mode, wherein in the first downlink sweep mode, the downlink reference signals are transmitted by downlink transmit spatial filters corresponding to the predicted downlink reference signal resources and are received by different receive spatial filters, and an optional receive spatial filter is determined based on signal qualities of the received downlink reference signals.

In some embodiments, uplink receive spatial filters corresponding to the K1 uplink transmit spatial filters are the downlink transmit spatial filters corresponding to the predicted downlink reference signal resources respectively.

In some embodiments, in a case where the first prediction dataset includes the identification information of the K1 predicted uplink transmit spatial filters and the identification information of the K1 predicted uplink receive spatial filters, the identification information of the K1 predicted uplink transmit spatial filters is determined based on uplink reference signal resources predicted from a first reference signal prediction set using the first network model, and the identification information of the K1 predicted uplink receive spatial filters is determined based on downlink reference signal resources predicted from the first reference signal prediction set using the first network model.

In some embodiments, the identification information of the K1 uplink transmit spatial filters is determined based on spatial relation information corresponding to the uplink reference signal resources predicted from the first reference signal prediction set using the first network model; and/or the identification information of the K1 predicted uplink receive spatial filters is identification information of downlink transmit spatial filters corresponding to the downlink reference signal resources predicted from the first reference signal prediction set using the first network model.

In some embodiments, the communication unit 510 is further configured to transmit first indication information, wherein the first indication information indicates identification information of used uplink transmit spatial filters in the identification information of the K1 uplink transmit spatial filters, or, the first indication information indicates identification information of used uplink transmit spatial filters in the identification information of the K1 uplink transmit spatial filters and identification information of used uplink receive spatial filters in the identification information of the K1 uplink receive spatial filters.

In some embodiments, in a case where the first indication information indicates the identification information of the used uplink transmit spatial filters in the identification information of the K1 uplink transmit spatial filters, the first indication information includes at least one TCI state indicator or indices of the uplink reference signal resources; or in a case where the first indication information indicates the identification information of the used uplink transmit spatial filters in the identification information of the K1 uplink transmit spatial filters and the identification information of the used uplink receive spatial filters in the identification information of the K1 uplink receive spatial filters, the first indication information includes the indices of the downlink reference signal resources and indices of the uplink reference signal resources.

In some embodiments, the downlink reference signal resources in the first reference signal prediction set include CSI-RS resources and/or SSB resources; and/or the uplink reference signal resources in the first reference signal prediction set include SRS resources.

In some embodiments, prior to receiving the first prediction information, t the communication unit 510 is further configured to receive first information, wherein the first information is used to configure at least one of the downlink reference signal measurement set or the first reference signal prediction set, or the first information is used to activate at least one of the downlink reference signal measurement set in a plurality of preconfigured downlink reference signal measurement sets or the first reference signal prediction set in a plurality of preconfigured reference signal prediction sets, wherein the first capability information further includes at least one of: a maximum quantity of downlink reference signal measurement sets supported on all preconfigured CCs or all preconfigured BWPs; a maximum quantity of supported and configured downlink reference signal measurement sets supported and configured; a maximum quantity of downlink reference signal measurement sets supported and concurrently measured; a maximum quantity of reference signal measurement sets supported on all preconfigured CCs or all preconfigured BWPs; a maximum quantity of downlink reference signal measurement sets supported on a CC or a BWP; a maximum quantity of downlink reference signal resources in supported downlink reference signal measurement sets; a maximum quantity of reference signal prediction sets supported on a CC or a BWP; a maximum value of K1; or a quantity of reference signal prediction sets on a CC or a BWP being equal to a quantity of downlink reference signal measurement sets on the CC or the BWP.

In some embodiments, in a case where the terminal device supports predicting the downlink spatial filters based on the uplink measurement result, the network device further includes a processing unit 520, wherein the processing unit 520 is configured to input a second measurement dataset to a second network model to acquire a second prediction dataset, wherein the second measurement dataset includes at least one of link quality information measured based on an uplink reference signal measurement set, or indices of uplink reference signal resources corresponding to link quality information measured based on an uplink reference signal measurement set, and the second prediction dataset includes at least one of identification information of K2 predicted downlink transmit spatial filters, or identification information of K2 predicted downlink transmit spatial filters and identification information of K2 predicted downlink receive spatial filters, wherein K2 is a positive integer.

In some embodiments, the uplink reference signal resources in the uplink reference signal measurement set are part or all of uplink reference signal resources in an uplink reference signal resource set.

In some embodiments, the uplink reference signal resource set is configured by a network device or agreed by an agreement.

In some embodiments, in a case where the second measurement dataset only includes the link quality information measured based on the uplink reference signal measurement set, the link quality information measured based on the uplink reference signal measurement set is input to the second network model based on a second order, wherein the second order is associated with the indices of the uplink reference signal resources in the uplink reference signal measurement set.

In some embodiments, in a case where the second prediction dataset includes the identification information of the K2 predicted downlink transmit spatial filters, the identification information of the K2 predicted uplink transmit spatial filters is determined based on reference signal resources predicted from a second reference signal prediction set using the second network model, wherein the reference signal resources in the second reference signal prediction set include downlink reference signal resources.

In some embodiments, in a case where a TCI state is configured or activated for the downlink reference signal resources in the second reference signal prediction set or the downlink reference signal resources in the second reference signal prediction set are pre-measured, the identification information of the K2 downlink transmit spatial filters indicates receive spatial filters corresponding to the downlink reference signal resources predicted from the second reference signal prediction set using the second network model.

In some embodiments, in a case where a TCI state is not configured or activated for the downlink reference signal resources in the second reference signal prediction set or the downlink reference signal resources in the second reference signal prediction set are not pre-measured, the identification information of the K2 downlink transmit spatial filters is identification information of downlink receive spatial filters determined by a second downlink sweep mode, wherein in the second downlink sweep mode, the downlink reference signals are transmitted by downlink transmit spatial filters corresponding to the predicted downlink reference signal resources and are received by different receive spatial filters, and an optional downlink receive spatial filter is determined based on signal qualities of the received downlink reference signals.

In some embodiments, in a case where the second prediction dataset includes the identification information of the K2 predicted downlink transmit spatial filters and the identification information of the K2 predicted downlink receive spatial filters, the identification information of the K2 predicted downlink transmit spatial filters is determined based on downlink reference signal resources predicted from a second reference signal prediction set using the second network model, and the identification information of the K2 predicted downlink receive spatial filters is determined based on uplink reference signal resources predicted from the second reference signal prediction set using the second network model.

In some embodiments, the identification information of the K2 predicted downlink receive spatial filters is determined based on spatial relation information corresponding to the uplink reference signal resources predicted from the second reference signal prediction set using the second network model; and/or the identification information of the K2 predicted downlink transmit spatial filters is identification information of downlink transmit spatial filters corresponding to the downlink reference signal resources predicted from the second reference signal prediction set using the second network model.

In some embodiments, the communication unit 510 is further configured to transmit second indication information, wherein the second indication information indicates identification information of used downlink receive spatial filters in identification information of the K2 downlink receive spatial filters, or, the second indication information indicates identification information of used downlink transmit spatial filters in identification information of the K2 downlink transmit spatial filters and identification information of used downlink receive spatial filters in identification information of K2 downlink receive spatial filters.

In some embodiments, in a case where the second indication information indicates the identification information of the used downlink receive spatial filters in the identification information of the K2 downlink receive spatial filters, the second indication information is at least one TCI state indicator or indices of the downlink reference signal resources; or in a case where the second indication information indicates the identification information of the used downlink transmit spatial filters in the identification information of the K2 downlink transmit spatial filters and the identification information of the used downlink receive spatial filters in the identification information of the K2 downlink receive spatial filters, the second indication information includes indices of the downlink reference signal resources and the indices of the uplink reference signal resources.

In some embodiments, the downlink reference signal resources in the second reference signal prediction set include CSI-RS resources and/or SSB resources.

In some embodiments, the uplink reference signal resources in the second reference signal prediction set include SRS resources.

In some embodiments, prior to predicting the spatial filters using the second network model, the communication unit 510 is further configured to transmit second information, wherein the second information is used to configure at least one of the uplink reference signal measurement set or the second reference signal prediction set, or the second information is used to activate at least one of the uplink reference signal measurement set in a plurality of preconfigured uplink reference signal measurement sets or the second reference signal prediction set in a plurality of preconfigured reference signal prediction sets.

In some embodiments, the first capability information further includes at least one of: a maximum quantity of uplink reference signal measurement sets supported on all preconfigured CCs or all preconfigured BWPs; a maximum quantity of uplink reference signal measurement sets supported and configured; a maximum quantity of uplink reference signal measurement sets supported and concurrently measured; a maximum quantity of reference signal measurement sets supported on all preconfigured CCs or all preconfigured BWPs; a maximum quantity of uplink reference signal measurement sets supported on a CC or a BWP; a maximum quantity of uplink reference signal resources in supported uplink reference signal measurement sets; a maximum quantity of reference signal prediction sets supported on a CC or a BWP; a maximum value of K2; or a quantity of reference signal prediction sets on a CC or a BWP being equal to a quantity of uplink reference signal measurement sets on the CC or the BWP.

In some embodiments, the communication unit may be a communication interface, a transceiver, a communication chip, or an input/output interface in a communication chip or a system on chip. The processing unit may be one or more processors.

It should be understood that the network device 500 according to the embodiments of the present application corresponds to the network device in the method embodiments of the present disclosure, and above and other operations and/or functions of the units in the network device 500 are applicable to performing the corresponding processes of the terminal device in the method 200 in FIG. 14, which are not described herein again for brevity.

FIG. 26 is a schematic block diagram of a communication device 600 according to some embodiments of the present disclosure. The communication device 600 is a first communication device, as illustrated in FIG. 26, the communication device 600 includes a processing unit 610.

The processing unit 610 is configured to input a first measurement dataset to a first network model to acquire a first prediction dataset, wherein the first measurement dataset includes at least one of link quality information measured based on a downlink reference signal measurement set, or indices of downlink reference signal resources corresponding to link quality information measured based on a downlink reference signal measurement set, and the first prediction dataset includes at least one of identification information of K1 predicted uplink transmit spatial filters, or identification information of K1 predicted uplink transmit spatial filters and identification information of K1 predicted uplink receive spatial filters, wherein K1 is a positive integer; or the first measurement dataset includes at least one of link quality information measured based on an uplink reference signal measurement set, or indices of uplink reference signal resources corresponding to link quality information measured based on an uplink reference signal measurement set, and the first prediction dataset includes at least one of identification information of K2 predicted downlink transmit spatial filters, or identification information of K2 predicted downlink transmit spatial filters and identification information of K2 predicted downlink receive spatial filters, wherein K2 is a positive integer.

In some embodiments, in a case where information in the first measurement dataset is acquired based on the downlink reference signal measurement set, the first communication device supports predicting uplink spatial filters based on a downlink measurement result.

In some embodiments, the downlink reference signal resources in the downlink reference signal measurement set are part or all of downlink reference signal resources in a downlink reference signal resource set.

In some embodiments, the downlink reference signal resource set is configured by a network device or agreed by an agreement.

In some embodiments, in a case where the first measurement dataset only includes the link quality information measured based on the downlink reference signal measurement set, the link quality information measured based on the downlink reference signal measurement set is input to the first network model based on a first order, wherein the first order is associated with the indices of the downlink reference signal resources in the downlink reference signal measurement set.

In some embodiments, in a case where the first prediction dataset includes the identification information of the K1 predicted uplink transmit spatial filters, the identification information of the K1 predicted uplink transmit spatial filters is determined based on reference signal resources predicted from a first reference signal prediction set using the first network model, wherein the reference signal resources in the first reference signal prediction set include at least one of uplink reference signal resources or the downlink reference signal resources.

In some embodiments, in a case where the reference signal resources in the first reference signal prediction set at least include the uplink reference signal resources, and spatial relation information is configured or activated for the uplink reference signal resources in the first reference signal prediction set, the identification information of the K1 uplink transmit spatial filters is determined based on the spatial relation information corresponding to the uplink reference signal resources predicted from the first reference signal prediction set using the first network model.

In some embodiments, uplink receive spatial filters corresponding to the K1 uplink transmit spatial filters are receive spatial filters of the corresponding uplink reference signal resources respectively.

In some embodiments, in a case where the reference signal resources in the first reference signal prediction set at least include the uplink reference signal resources, and spatial relation information is not configured or activated for the uplink reference signal resources in the first reference signal prediction set, the identification information of the K1 uplink transmit spatial filters indicates transmit spatial filters corresponding to the uplink reference signal resources predicted from the first reference signal prediction set using the first network model.

In some embodiments, uplink receive spatial filters corresponding to the K1 uplink transmit spatial filters are determined by a first uplink sweep mode, wherein in the first uplink sweep mode, the uplink reference signals are transmitted by uplink transmit spatial filters corresponding to the predicted uplink reference signal resources and are received by different receive spatial filters, and an optional receive spatial filter is determined based on signal qualities of the received uplink reference signals.

In some embodiments, in a case where the reference signal resources in the first reference signal prediction set at least include the downlink reference signal resources, and a TCI state is configured or activated for the downlink reference signal resources in the first reference signal prediction set or the downlink reference signal resources in the first reference signal prediction set are pre-measured, the identification information of the K1 uplink transmit spatial filters indicates receive spatial filters corresponding to the downlink reference signal resources predicted from the first reference signal prediction set using the first network model.

In some embodiments, uplink receive spatial filters corresponding to the K1 uplink transmit spatial filters are transmit spatial filters of the corresponding downlink reference signal resources respectively.

In some embodiments, in a case where the reference signal resources in the first reference signal prediction set at least include the downlink reference signal resources, and a TCI state is not configured or activated for the downlink reference signal resources in the first reference signal prediction set or the downlink reference signal resources in the first reference signal prediction set are not pre-measured, the identification information of the K1 uplink transmit spatial filters is identification information of downlink receive spatial filters determined by a first downlink sweep mode, wherein in the first downlink sweep mode, the downlink reference signals are transmitted by downlink transmit spatial filters corresponding to the predicted downlink reference signal resources and are received by different receive spatial filters, and an optional receive spatial filter is determined based on signal qualities of the received downlink reference signals.

In some embodiments, uplink receive spatial filters corresponding to the K1 uplink transmit spatial filters are the downlink transmit spatial filters corresponding to the predicted downlink reference signal resources respectively.

In some embodiments, in a case where the first prediction dataset includes the identification information of the K1 predicted uplink transmit spatial filters and the identification information of the K1 predicted uplink receive spatial filters, the identification information of the K1 predicted uplink transmit spatial filters is determined based on uplink reference signal resources predicted from a first reference signal prediction set using the first network model, and the identification information of the K1 predicted uplink receive spatial filters is determined based on downlink reference signal resources predicted from the first reference signal prediction set using the first network model.

In some embodiments, the identification information of the K1 uplink transmit spatial filters is determined based on spatial relation information corresponding to the uplink reference signal resources predicted from the first reference signal prediction set using the first network model; and/or the identification information of the K1 predicted uplink receive spatial filters is identification information of downlink transmit spatial filters corresponding to the downlink reference signal resources predicted from the first reference signal prediction set using the first network model.

In some embodiments, the communication device 600 includes a communication unit 620. The communication unit 620 is configured to transmit first prediction information, wherein the first prediction information includes part or all of indices of the reference signal resources predicted from the first reference signal prediction set using the first network model.

In some embodiments, the communication device 600 includes a communication unit 620. The communication unit 620 is configured to receive first indication information, wherein the first indication information indicates identification information of used uplink transmit spatial filters in the identification information of the K1 uplink transmit spatial filters, or, the first indication information indicates identification information of used uplink transmit spatial filters in the identification information of the K1 uplink transmit spatial filters and identification information of used uplink receive spatial filters in the identification information of the K1 uplink receive spatial filters.

In some embodiments, in a case where the first indication information indicates the identification information of the used uplink transmit spatial filters in the identification information of the K1 uplink transmit spatial filters, the first indication information includes at least one TCI state indicator or indices of the uplink reference signal resources; or in a case where the first indication information indicates the identification information of the used uplink transmit spatial filters in the identification information of the K1 uplink transmit spatial filters and the identification information of the used uplink receive spatial filters in the identification information of the K1 uplink receive spatial filters, the first indication information includes the indices of the downlink reference signal resources and indices of the uplink reference signal resources.

In some embodiments, the downlink reference signal resources in the first reference signal prediction set include CSI-RS resources and/or SSB resources; and/or the uplink reference signal resources in the first reference signal prediction set include SRS resources.

In some embodiments, prior to predicting the spatial filters using the first network model, the communication device 600 includes a communication unit 620, configured to transmit first capability information, wherein the first capability information indicates whether the terminal device supports predicting uplink spatial filters based on a downlink measurement result, and/or, the first capability information indicates whether the terminal device supports predicting downlink spatial filters based on an uplink measurement result.

In some embodiments, the first capability information further includes at least one of: a maximum quantity of downlink reference signal measurement sets supported on all preconfigured CCs or all preconfigured BWPs; a maximum quantity of downlink reference signal measurement sets supported and configured; a maximum quantity of downlink reference signal measurement sets supported and concurrently measured; a maximum quantity of reference signal measurement sets supported on all preconfigured CCs or all preconfigured BWPs; a maximum quantity of downlink reference signal measurement sets supported on a CC or a BWP; a maximum quantity of downlink reference signal resources in supported downlink reference signal measurement sets; a maximum quantity of reference signal prediction sets supported on a CC or a BWP; a maximum value of K1; or a quantity of reference signal prediction sets on a CC or a BWP being equal to a quantity of downlink reference signal measurement sets on the CC or the BWP.

In some embodiments, prior to predicting the spatial filters using the first network model, the communication device 600 include a communication unit 620, configured to receive first information, wherein the first information is used to configure at least one of the downlink reference signal measurement set or the first reference signal prediction set, or the first information is used to activate at least one of the downlink reference signal measurement set in a plurality of preconfigured downlink reference signal measurement sets or the first reference signal prediction set in a plurality of preconfigured reference signal prediction sets.

In some embodiments, the first communication device is a terminal device.

In some embodiments, in a case where information in the first measurement dataset is acquired based on the uplink reference signal measurement set, the first communication device supports predicting downlink spatial filters based on an uplink measurement result.

In some embodiments, the uplink reference signal resources in the uplink reference signal measurement set are part or all of uplink reference signal resources in an uplink reference signal resource set.

In some embodiments, the uplink reference signal resource set is configured by a network device or agreed by an agreement.

In some embodiments, in a case where the first measurement dataset only includes the link quality information measured based on the uplink reference signal measurement set, the link quality information measured based on the uplink reference signal measurement set is input to the first network model based on a second order, wherein the second order is associated with the indices of the uplink reference signal resources in the uplink reference signal measurement set.

In some embodiments, in a case where the first prediction dataset includes the identification information of the K2 predicted downlink transmit spatial filters, the identification information of the K2 predicted uplink transmit spatial filters is determined based on reference signal resources predicted from a second reference signal prediction set using the first network model, wherein the reference signal resources in the second reference signal prediction set include downlink reference signal resources.

In some embodiments, in a case where a TCI state is configures or activated for the downlink reference signal resources in the second reference signal prediction set or the downlink reference signal resources in the second reference signal prediction set are pre-measured, the identification information of the K2 downlink transmit spatial filters indicates receive spatial filters corresponding to the downlink reference signal resources predicted from the second reference signal prediction set using the first network model.

In some embodiments, in a case where a TCI state is not configured or activated for the downlink reference signal resources in the second reference signal prediction set or the downlink reference signal resources in the second reference signal prediction set are not pre-measured, the identification information of the K2 downlink transmit spatial filters is identification information of downlink receive spatial filters determined by a second downlink sweep mode, wherein in the second downlink sweep mode, the downlink reference signals are transmitted by downlink transmit spatial filters corresponding to the predicted downlink reference signal resources and are received by different receive spatial filters, and an optional downlink receive spatial filter is determined based on signal qualities of the received downlink reference signals.

In some embodiments, in a case where the second prediction dataset includes the identification information of the K2 predicted downlink transmit spatial filters and the identification information of the K2 predicted downlink receive spatial filters, the identification information of the K2 predicted downlink transmit spatial filters is determined based on downlink reference signal resources predicted from a second reference signal prediction set using the first network model, and the identification information of the K2 predicted downlink receive spatial filters is determined based on uplink reference signal resources predicted from the second reference signal prediction set using the first network model.

In some embodiments, the identification information of the K2 predicted downlink receive spatial filters is determined based on spatial relation information corresponding to the uplink reference signal resources predicted from the second reference signal prediction set using the first network model; and/or the identification information of the K2 predicted downlink transmit spatial filters is identification information of downlink transmit spatial filters corresponding to the downlink reference signal resources predicted from the second reference signal prediction set using the first network model.

In some embodiments, the communication device 600 include a communication unit 620, configured to transmit second indication information, wherein the second indication information indicates identification information of used downlink receive spatial filters in identification information of the K2 downlink receive spatial filters, or, the second indication information indicates identification information of used downlink transmit spatial filters in identification information of the K2 downlink transmit spatial filters and identification information of used downlink receive spatial filters in identification information of K2 downlink receive spatial filters.

In some embodiments, in a case where the second indication information indicates the identification information of the used downlink receive spatial filters in the identification information of the K2 downlink receive spatial filters, the second indication information is at least one TCI state indicator or indices of the downlink reference signal resources; or in a case where the second indication information indicates the identification information of the used downlink transmit spatial filters in the identification information of the K2 downlink transmit spatial filters and the identification information of the used downlink receive spatial filters in the identification information of the K2 downlink receive spatial filters, the second indication information includes indices of the downlink reference signal resources and the indices of the uplink reference signal resources.

In some embodiments, the downlink reference signal resources in the second reference signal prediction set include CSI-RS resources and/or SSB resources.

In some embodiments, the uplink reference signal resources in the second reference signal prediction set include SRS resources.

In some embodiments, prior to predicting the spatial filters using the first network model, the communication device 600 include a communication unit 620, configured to receive second capability information from the terminal device, wherein second capability information further includes at least one of: a maximum quantity of uplink reference signals signal measurement sets supported on all preconfigured CCs or all preconfigured BWPs; a maximum quantity of uplink reference signals signal measurement sets supported and configured; a maximum quantity of uplink reference signal measurement sets supported and concurrently transmitted; a maximum quantity of reference signal measurement sets supported on all preconfigured CCs or all preconfigured BWPs; a maximum quantity of uplink reference signal measurement sets supported on a CC or a BWP; a maximum quantity of uplink reference signal resources in supported uplink reference signal measurement sets; a maximum quantity of reference signal prediction sets supported on a CC or a BWP; a maximum value of K2; or a quantity of reference signal prediction sets on a CC or a BWP being equal to a quantity of uplink reference signal measurement sets on the CC or the BWP.

In some embodiments, prior to predicting the spatial filters using the first network model, the communication device 600 include a communication unit 620, configured to transmit second information, wherein the second information is used to configure at least one of the uplink reference signal measurement set or the second reference signal prediction set, or the second information is used to activate at least one of the uplink reference signal measurement set in a plurality of preconfigured uplink reference signal measurement sets or the second reference signal prediction set in a plurality of preconfigured reference signal prediction sets.

In some embodiments, the first communication device is a network device.

In some embodiments, the communication unit may be a communication interface, a transceiver, a communication chip, or an input/output interface in a communication chip or a system on chip. The processing unit may be one or more processors.

It should be understood that the communication device 600 according to the embodiments of the present application corresponds to the first communication device in the method embodiments of the present disclosure, and above and other operations and/or functions of the units in the communication device 600 are applicable to performing the corresponding processes of the terminal device in the method 300 in FIG. 23, which are not described herein again for brevity.

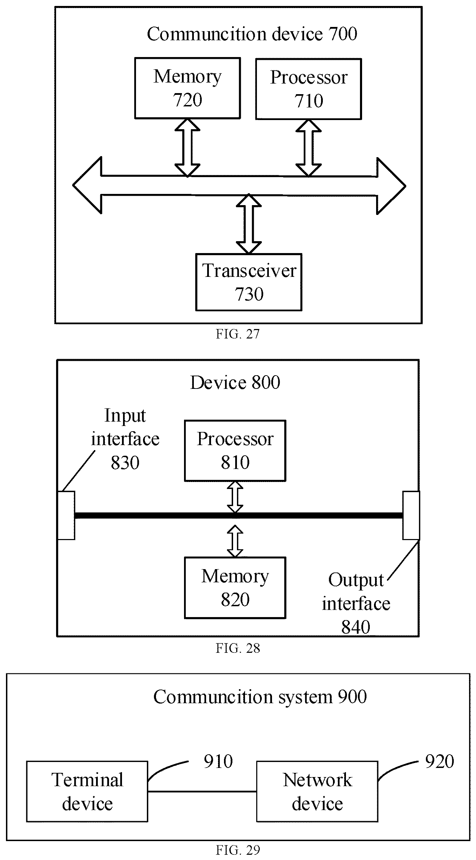

FIG. 27 is a schematic block diagram of a communication device 700 according to some embodiments of the present disclosure. The communication device 700 illustrated in FIG. 27 includes a processor 710. The processor 710 is configured to call and run one or more computer programs in a memory to perform the methods according to the embodiments of the present disclosure.

In some embodiments, as illustrated in FIG. 27, the communication device 700 may further include a memory 720. The processor 710 is configured to call and run one or more computer programs in the memory 720 to perform the methods according to the embodiments of the present disclosure.

The memory 720 may be a device independent of the processor 710, or may be integrated in the processor 710.

In some embodiments, as illustrated in FIG. 27, the communication device 700 may further include a transceiver 730. The processor 710 may control communication of the transceiver 730 with other devices. In particular, the transceiver 730 may transmit information or data to other devices, or receives information or data from other devices.

The transceiver 730 may include a transiter and a receiver. The transceiver 730 may further include one or more antennas.

In some embodiments, the processor 710 is capable of achieving functions of the processing unit in the terminal device, the processor 710 is capable of achieving functions of the processing unit in the network device, or the processor 710 is capable of achieving functions of the processing unit in the first communication device, which are not described herein again for brevity.

In some embodiments, the transceiver 730 is capable of achieving functions of the communication unit in the terminal device, the transceiver 730 is capable of achieving functions of the communication unit in the network device, or the transceiver 730 is capable of achieving functions of the communication unit in the first communication device, which are not described herein again for brevity.

In some embodiments, the communication device 700 may be the terminal device in the embodiments of the present disclosure, and may perform the corresponding processes performed by the terminal device in the methods according to the embodiments of the present disclosure, which are not described herein again for brevity.

In some embodiments, the communication device 700 may be the network device according to the embodiments of the present disclosure, and may perform the corresponding processes performed by the network device in the methods according to the embodiment of the present disclosure, which are not described herein again for brevity.

In some embodiments, the communication device 700 may be the first communication device according to the embodiments of the present disclosure, and may perform the corresponding processes performed by the first communication device in the methods according to the embodiment of the present disclosure, which are not described herein again for brevity.

FIG. 28 is a schematic block diagram of a device according to some embodiments of the present disclosure. The device 800 illustrated in FIG. 28 includes a processor 810. The processor 810 is configured to call and run one or more computer programs in a memory to perform the methods according to the embodiments of the present disclosure.

In some embodiments, as illustrated in FIG. 28, the device 800 may further include a memory 820. The processor 810 is configured to call and run one or more computer programs in the memory 820 to perform the methods according to the embodiments of the present disclosure.

The memory 820 may be a device independent of the processor 810, or may be integrated in the processor 810.

In some embodiments, the processor 810 is capable of achieving functions of the processing unit in the first communication device, the processor 810 is capable of achieving functions of the processing unit in the terminal device, or the processor 810 is capable of achieving functions of the processing unit in the network device, which are not described herein again for brevity.

In some embodiments, the device 800 may further include an input interface 830. The processor 810 may control communication of the input interface 830 with other devices and chips. In particular, the input interface 830 may acquire information or data from other devices and chips. In some embodiments, the processor 810 is disposed in the chip or outside the chip.

In some embodiments, the input interface 830 is capable of achieving functions of the communication unit in the first communication device, the input interface 830 is capable of achieving functions of the communication unit in the terminal device, or the input interface 830 is capable of achieving functions of the communication unit in the network device, which are not described herein again for brevity.

In some embodiments, the device 800 may further include an output interface 840. The processor 810 may control communication of the output interface 840 with other devices and chips. In particular, the output interface 840 may transmit information or data to other devices and chips. In some embodiments, the processor 810 is disposed in the chip or outside the chip.

In some embodiments, the output interface 840 is capable of achieving functions of the communication unit in the first communication device, the output interface 840 is capable of achieving functions of the communication unit in the terminal device, or the output interface 840 is capable of achieving functions of the communication unit in the network device, which are not described herein again for brevity.

In some embodiments, the device 800 is applicable to the first communication device in the embodiments of the present disclosure, and may perform the corresponding processes practiced by the first communication device in the methods according to the embodiments of the present disclosure, which is not described herein again for brevity.

In some embodiments, the device 800 is applicable to the terminal device in the embodiments of the present disclosure, and may perform the corresponding processes practiced by the terminal device in the methods according to the embodiments of the present disclosure, which is not described herein again for brevity.

In some embodiments, the device 800 is applicable to the network device in the embodiments of the present disclosure, and may perform the corresponding processes practiced by the network device in the methods according to the embodiments of the present disclosure, which is not described herein again for brevity.

It should be understood that the device in the embodiments of the present disclosure may also referred to as a chip, for example, a system-level chip, a system chip, a chip system, a system-on-chip, or the like.

FIG. 29 is a schematic block diagram of a communication system 900 according to some embodiments of the present disclosure. As illustrated in FIG. 29, the communication system 900 includes a terminal device 910 and a network device 920.

The terminal device 910 is configured to implement the corresponding functions implemented by the terminal device in the above methods, and the network device 920 is configured to implement the corresponding functions practiced by the first network device and/or the second network device in the method, which are not described herein again for brevity.

It should be understood that the processor in the embodiments of the present disclosure is an integrated circuit chip with a signal processing capability. In the implementations, the processes in the method embodiments are achieved by integrated logic circuits of hardware in the processor or instructions in the software form. The processor is a general processor, a digital signal processor (DSP), an application-specific integrated circuit (ASIC), a field-programmable gate array (FPGA), any other programmable logic device, discrete gate, transistor logic device, or discrete hardware assembly that is capable of achieving or performing various methods, processes, and logic blocks according to the embodiments of the present disclosure. The general processor is a microprocessor, any conventional processor, or the like. The processes in the methods according to the embodiments of the present disclosure may be directly embodied as being processed by a hardware decoding processor or being performed by a combination of hardware and software modules in the decoding processor. The software modules may be disposed in a random-access memory (RAM), a flash memory, a read-only memory (ROM), a programmable read-only memory (PROM), an electrically erasable programmable ROM (EEOROM), a register, and another storage medium mature in the field. The storage medium is disposed in the memory, and the processor reads the information in the memory and combines with its hardware to perform the processes of the method.

It should be understood that the memory in embodiments of the present disclosure may be a volatile or non-volatile memory, or include both the volatile memory and the non-volatile memory. The non-volatile memory may be a ROM, a PROM, an erasable PROM (EPROM), an EEPROM, or a flash memory. The volatile memory is a RAM used as an external cache. By way of example but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). It should be noted that the system and the memory described herein are intended to include, but not limit to these and any other suitable type of memories.

It should be understood that the memory is exemplary but not for limitation. For example, the memory in the embodiments of the present disclosure may also be an SRAM, a DRAM, an SDRAM, a DDR SDRAM, an ESDRAM, an SLDRAM, a DR RAM, or the like. That is, the memory in the embodiments of the present disclosure is intend to include, but not limit to these and any other suitable type of memory.

Some embodiments of the present disclosure further provide a computer-readable storage medium for storing one or more computer programs.

In some embodiments, the computer-readable storage medium is applicable to the terminal device according to the embodiments of the present disclosure, and the one or more computer programs, when loaded and run on a computer, cause the computer to perform the corresponding processes implemented by the terminal device in the methods according to the embodiments of the present disclosure, which are not described herein again for brevity.

In some embodiments, the computer-readable storage medium is applicable to the network device according to the embodiments of the present disclosure, and the one or more computer programs, when loaded and run on a computer, cause the computer to perform the corresponding processes implemented by the network device in the methods according to the embodiments of the present disclosure, which are not described herein again for brevity.

In some embodiments, the computer-readable storage medium is applicable to the first communication device according to the embodiments of the present disclosure, and the one or more computer programs, when loaded and run on a computer, cause the computer to perform the corresponding processes implemented by the first communication device in the methods according to the embodiments of the present disclosure, which are not described herein again for brevity.

Some embodiments of the present disclosure further provide a computer program product including one or more computer program instructions.

In some embodiments, the computer program product is applicable to the terminal device in the embodiments of the present disclosure, and the one or more computer program instructions, when loaded and executed on a computer, cause the computer to perform the corresponding processes implemented by the terminal device in the methods according to the embodiments of the present disclosure, which are not described herein again for brevity.

In some embodiments, the computer program product is applicable to the network device in the embodiments of the present disclosure, and the one or more computer program instructions, when loaded and executed on a computer, cause the computer to perform the corresponding processes implemented by the network device in the methods according to the embodiments of the present disclosure, which are not described herein again for brevity.

In some embodiments, the computer program product is applicable to the first communication device in the embodiments of the present disclosure, and the one or more computer program instructions, when loaded and executed on a computer, cause the computer to perform the corresponding processes implemented by the first communication network device in the methods according to the embodiments of the present disclosure, which are not described herein again for brevity.

Some embodiments of the present disclosure further provide a computer program.

In some embodiments, the computer program is applicable to the terminal device in the embodiments of the present disclosure, and the computer program, when loaded and run on a computer, causes the computer to perform the corresponding processes implemented by the terminal device in the methods according to the embodiment of the present disclosure, which are not described herein again for brevity.

In some embodiments, the computer program is applicable to the network device in the embodiments of the present disclosure, and the computer program, when loaded and run on a computer, causes the computer to perform the corresponding processes implemented by the network device in the methods according to the embodiment of the present disclosure, which are not described herein again for brevity.

In some embodiments, the computer program is applicable to the first communication device in the embodiments of the present disclosure, and the computer program, when loaded and run on a computer, causes the computer to perform the corresponding processes implemented by the first communication device in the methods according to the embodiment of the present disclosure, which are not described herein again for brevity.

It can be understood by those of ordinary skill in the art that the units and algorithmic processes of the examples described in conjunction with the embodiments disclosed herein can be practiced by the electronic hardware, or by a combination of the computer software and the electronic hardware. Whether these functions are achieved by the hardware or the software depends on the specific application and design constraints of the technical solution. For each application, those skilled in the art may use different methods to achieve the described functions, and such implementations should not be considered beyond the scope of the present disclosure.

It can be understood by those skilled in the art that for the specific operation processes of the systems, devices, and units described above, reference may be made to the corresponding processes in the embodiments of the method for convenience and simplicity of description, which are not repeated herein for convenience and brevity.

In the embodiments of the present disclosure, it should be understood that the systems, devices, and methods can be practiced in other ways. For example, the apparatus embodiments are only exemplary. For example, the division of the units is only the logical function division, and the actual implementation may have another division. For example, several units or assemblies can be combined or integrated into another system, or some features can be ignored or not performed. In addition, the coupling, the direct coupling, or the communication connection between each other may be achieved by some interfaces, and an indirect coupling or communication connection between devices or units may be electrical, mechanical or in other form.

The units described as separate parts may or may not be physically separate, and the parts illustrated as the units may or may not be physical units. That is, the parts may be disposed in one place, or distributed in several network units. Some or all of the units can be selected according to actual needs to achieve the purpose of the technical solutions according to the embodiments.

In addition, the functional units in the embodiments of the present disclosure may be integrated in a processing unit or exist physically separately, or two or more units may be integrated in a unit.

In the case that the functions are achieved in the form of software functional units and sold or used as stand-alone products, the functions may be stored in a computer-readable storage medium. Based on the understanding, the nature of the technical solutions of the present disclosure, the part contributed to the prior art, or the part of the technical solutions may be embodied in the form of a software product, and the software product is stored in a storage medium and includes a number of instructions to cause a computer device (which may be a personal computer, a server, a network equipment, or the like) to perform all or part of the processes of the method in various embodiments of the present disclosure. Above storage medium include a U disk, a mobile hard disk, a ROM, a RAM, a disk, a disc, or other media capable of storing program codes.

Described above are merely specific embodiments of the present disclosure, and the scope of protection of the present disclosure is not limited. Any changes or replacements made within the technical scope of the present disclosure by those skilled in the art should be encompassed within the scope of protection of the present disclosure. thus, the scope of protection of the present disclosure shall prevail in the scope of protection of the claims.

## Claims

1. A method for wireless communication, performed by a terminal device, the method comprising:
transmitting first capability information, wherein the first capability information indicates whether the terminal device supports predicting uplink spatial filters based on a downlink measurement result, and/or, the first capability information indicates whether the terminal device supports predicting downlink spatial filters based on an uplink measurement result.

2. The method according to claim 1, wherein in a case where the terminal device supports predicting the uplink spatial filters based on the downlink measurement result, the method further comprises:
inputting a first measurement dataset to a first network model to acquire a first prediction dataset, wherein the first measurement dataset comprises at least one of link quality information measured based on a downlink reference signal measurement set, or indices of downlink reference signal resources corresponding to link quality information measured based on a downlink reference signal measurement set, and the first prediction dataset comprises at least one of identification information of K₁ predicted uplink transmit spatial filters, or identification information of K₁ predicted uplink transmit spatial filters and identification information of K₁ predicted uplink receive spatial filters, wherein K₁ is a positive integer.

3. The method according to claim 2, wherein the downlink reference signal resources in the downlink reference signal measurement set are part or all of downlink reference signal resources in a downlink reference signal resource set.

4. The method according to claim 3, wherein the downlink reference signal resource set is configured by a network device or agreed by an agreement.

5. The method according to any one of claims 2 to 4, wherein in a case where the first measurement dataset only comprises the link quality information measured based on the downlink reference signal measurement set, the link quality information measured based on the downlink reference signal measurement set is input to the first network model based on a first order, wherein the first order is associated with the indices of the downlink reference signal resources in the downlink reference signal measurement set.

6. The method according to any one of claims 2 to 5, wherein in a case where the first prediction dataset comprises the identification information of the K₁ predicted uplink transmit spatial filters, the identification information of the K₁ predicted uplink transmit spatial filters is determined based on reference signal resources predicted from a first reference signal prediction set using the first network model, wherein the reference signal resources in the first reference signal prediction set comprise at least one of uplink reference signal resources or the downlink reference signal resources.

7. The method according to claim 6, wherein in a case where the reference signal resources in the first reference signal prediction set at least comprise the uplink reference signal resources, and spatial relation information is configured or activated for the uplink reference signal resources in the first reference signal prediction set, the identification information of the K₁ uplink transmit spatial filters is determined based on the spatial relation information corresponding to the uplink reference signal resources predicted from the first reference signal prediction set using the first network model.

8. The method according to claim 7, wherein uplink receive spatial filters corresponding to the K₁ uplink transmit spatial filters are receive spatial filters of the corresponding uplink reference signal resources respectively.

9. The method according to claim 6, wherein in a case where the reference signal resources in the first reference signal prediction set at least comprise the uplink reference signal resources, and spatial relation information is not configured or activated for the uplink reference signal resources in the first reference signal prediction set, the identification information of the K₁ uplink transmit spatial filters indicates transmit spatial filters corresponding to the uplink reference signal resources predicted from the first reference signal prediction set using the first network model.

10. The method according to claim 9, wherein uplink receive spatial filters corresponding to the K₁ uplink transmit spatial filters are determined by a first uplink sweep mode, wherein in the first uplink sweep mode, the uplink reference signals are transmitted by uplink transmit spatial filters corresponding to the predicted uplink reference signal resources and are received by different receive spatial filters, and an optional receive spatial filter is determined based on signal qualities of the received uplink reference signals.

11. The method according to claim 6, wherein in a case where the reference signal resources in the first reference signal prediction set at least comprise the downlink reference signal resources, and a transmission configuration indicator (TCI) state is configured or activated for the downlink reference signal resources in the first reference signal prediction set or the downlink reference signal resources in the first reference signal prediction set are pre-measured, the identification information of the K₁ uplink transmit spatial filters indicates receive spatial filters corresponding to the downlink reference signal resources predicted from the first reference signal prediction set using the first network model.

12. The method according to claim 11, wherein uplink receive spatial filters corresponding to the K₁ uplink transmit spatial filters are transmit spatial filters of the corresponding downlink reference signal resources respectively.

13. The method according to claim 6, wherein in a case where the reference signal resources in the first reference signal prediction set at least comprise the downlink reference signal resources, and a transmission configuration indicator (TCI) state is not configured or activated for the downlink reference signal resources in the first reference signal prediction set or the downlink reference signal resources in the first reference signal prediction set are not pre-measured, the identification information of the K₁ uplink transmit spatial filters is identification information of downlink receive spatial filters determined by a first downlink sweep mode, wherein in the first downlink sweep mode, the downlink reference signals are transmitted by downlink transmit spatial filters corresponding to the predicted downlink reference signal resources and are received by different receive spatial filters, and an optional receive spatial filter is determined based on signal qualities of the received downlink reference signals.

14. The method according to claim 13, wherein uplink receive spatial filters corresponding to the K₁ uplink transmit spatial filters are the downlink transmit spatial filters corresponding to the predicted downlink reference signal resources respectively.

15. The method according to any one of claims 2 to 5, wherein in a case where the first prediction dataset comprises the identification information of the K₁ predicted uplink transmit spatial filters and the identification information of the K₁ predicted uplink receive spatial filters, the identification information of the K₁ predicted uplink transmit spatial filters is determined based on uplink reference signal resources predicted from a first reference signal prediction set using the first network model, and the identification information of the K₁ predicted uplink receive spatial filters is determined based on downlink reference signal resources predicted from the first reference signal prediction set using the first network model.

16. The method according to claim 15, wherein
the identification information of the K₁ uplink transmit spatial filters is determined based on spatial relation information corresponding to the uplink reference signal resources predicted from the first reference signal prediction set using the first network model; and/or
the identification information of the K₁ predicted uplink receive spatial filters is identification information of downlink transmit spatial filters corresponding to the downlink reference signal resources predicted from the first reference signal prediction set using the first network model.

17. The method according to any one of claims 6 to 16, further comprising:
transmitting first prediction information, wherein the first prediction information comprises part or all of indices of the reference signal resources predicted from the first reference signal prediction set using the first network model.

18. The method according to claim 17, further comprising:
receiving first indication information, wherein the first indication information indicates identification information of used uplink transmit spatial filters in the identification information of the K₁ uplink transmit spatial filters, or, the first indication information indicates identification information of used uplink transmit spatial filters in the identification information of the K₁ uplink transmit spatial filters and identification information of used uplink receive spatial filters in the identification information of the K₁ uplink receive spatial filters.

19. The method according to claim 18, wherein
in a case where the first indication information indicates the identification information of the used uplink transmit spatial filters in the identification information of the K₁ uplink transmit spatial filters, the first indication information comprises at least one transmission configuration indicator (TCI) state indicator or indices of the uplink reference signal resources; or
in a case where the first indication information indicates the identification information of the used uplink transmit spatial filters in the identification information of the K₁ uplink transmit spatial filters and the identification information of the used uplink receive spatial filters in the identification information of the K₁ uplink receive spatial filters, the first indication information comprises the indices of the downlink reference signal resources and indices of the uplink reference signal resources.

20. The method according to any one of claims 6 to 19, wherein
the downlink reference signal resources in the first reference signal prediction set comprise channel state information reference signal (CSI-RS) resources and/or synchronization signal block (SSB) resources; and/or
the uplink reference signal resources in the first reference signal prediction set comprise sounding reference signal (SRS) resources.

21. The method according to any one of claims 6 to 20, wherein prior to predicting the spatial filters using the first network model, the method further comprises:
receiving first information, wherein the first information is used to configure at least one of the downlink reference signal measurement set or the first reference signal prediction set, or the first information is used to activate at least one of the downlink reference signal measurement set in a plurality of preconfigured downlink reference signal measurement sets or the first reference signal prediction set in a plurality of preconfigured reference signal prediction sets.

22. The method according to any one of claims 1 to 21, wherein in a case where the first capability information indicates that the terminal device supports predicting the uplink spatial filters based on the downlink measurement result, the first capability information further comprises at least one of:
a maximum quantity of downlink reference signal measurement sets supported on all preconfigured component carriers (CCs) or all preconfigured bandwidth parts (BWPs);
a maximum quantity of downlink reference signal measurement sets supported and configured;
a maximum quantity of downlink reference signal measurement sets supported and concurrently measured;
a maximum quantity of reference signal measurement sets supported on all preconfigured CCs or all preconfigured BWPs;
a maximum quantity of downlink reference signal measurement sets supported on a CC or a BWP;
a maximum quantity of downlink reference signal resources in supported downlink reference signal measurement sets;
a maximum quantity of reference signal prediction sets supported on a CC or a BWP;
a maximum value of K₁; or
a quantity of reference signal prediction sets on a CC or a BWP being equal to a quantity of downlink reference signal measurement sets on the CC or the BWP.

23. The method according to claim 1, wherein in a case where the terminal device supports predicting the downlink spatial filters based on the uplink measurement result, the method further comprises:
receiving second indication information, wherein the second indication information indicates identification information of used downlink receive spatial filters in identification information of K₂ downlink receive spatial filters, or, the second indication information indicates identification information of used downlink transmit spatial filters in identification information of K₂ downlink transmit spatial filters and identification information of used downlink receive spatial filters in identification information of K₂ downlink receive spatial filters, wherein the identification information of the K₂ downlink transmit spatial filters and/or the identification information of the K₂ downlink receive spatial filters belong to a second prediction dataset output using a second network model deployed on a network upon input of a second measurement dataset, wherein the second measurement dataset comprises at least one of link quality information measured based on an uplink reference signal measurement set, or indices of uplink reference signal resources corresponding to link quality information measured based on an uplink reference signal measurement set, and the second prediction dataset comprises at least one of identification information of K₂ predicted downlink transmit spatial filters, or identification information of K₂ predicted downlink transmit spatial filters and identification information of K₂ predicted downlink receive spatial filters, wherein K₂ is a positive integer.

24. The method according to claim 23, wherein
in a case where the second indication information indicates the identification information of the used downlink receive spatial filters in the identification information of the K₂ downlink receive spatial filters, the second indication information comprises at least one transmission configuration indicator (TCI) state indicator or indices of the downlink reference signal resources; or
in a case where the second indication information indicates the identification information of the used downlink transmit spatial filters in the identification information of the K₂ downlink transmit spatial filters and the identification information of the used downlink receive spatial filters in the identification information of the K₂ downlink receive spatial filters, the second indication information comprises indices of the downlink reference signal resources and the indices of the uplink reference signal resources.

25. The method according to claim 23 or 24, wherein the uplink reference signal resources in the uplink reference signal measurement set are part or all of uplink reference signal resources in an uplink reference signal resource set.

26. The method according to claim 25, wherein the uplink reference signal resource set is configured by a network device or agreed by an agreement.

27. The method according to any one of claims 23 to 26, wherein in a case where the second measurement dataset only comprises the link quality information measured based on the uplink reference signal measurement set, the link quality information measured based on the uplink reference signal measurement set is input to the second network model based on a second order, wherein the second order is associated with the indices of the uplink reference signal resources in the uplink reference signal measurement set.

28. The method according to any one of claims 23 to 27, wherein in a case where the second prediction dataset comprises the identification information of the K₂ predicted downlink transmit spatial filters, the identification information of the K₂ predicted uplink transmit spatial filters is determined based on reference signal resources predicted from a second reference signal prediction set using the second network model, wherein the reference signal resources in the second reference signal prediction set comprise downlink reference signal resources.

29. The method according to claim 28, wherein in a case where a transmission configuration indicator (TCI) state is configured or activated for the downlink reference signal resources in the second reference signal prediction set or the downlink reference signal resources in the second reference signal prediction set are pre-measured, the identification information of the K₂ downlink transmit spatial filters indicates receive spatial filters corresponding to the downlink reference signal resources predicted from the second reference signal prediction set using the second network model.

30. The method according to claim 28, wherein in a case where a transmission configuration indicator (TCI) state is not configured or activated for the downlink reference signal resources in the second reference signal prediction set or the downlink reference signal resources in the second reference signal prediction set are not pre-measured, the identification information of the K₂ downlink transmit spatial filters is identification information of downlink receive spatial filters determined by a second downlink sweep mode, wherein in the second downlink sweep mode, the downlink reference signals are transmitted by downlink transmit spatial filters corresponding to the predicted downlink reference signal resources and are received by different receive spatial filters, and an optional downlink receive spatial filter is determined based on signal qualities of the received downlink reference signals.

31. The method according to any one of claims 23 to 27, wherein in a case where the second prediction dataset comprises the identification information of the K₂ predicted downlink transmit spatial filters and the identification information of the K₂ predicted downlink receive spatial filters, the identification information of the K₂ predicted downlink transmit spatial filters is determined based on downlink reference signal resources predicted from a second reference signal prediction set using the second network model, and the identification information of the K₂ predicted downlink receive spatial filters is determined based on uplink reference signal resources predicted from the second reference signal prediction set using the second network model.

32. The method according to claim 31, wherein
the identification information of the K₂ predicted downlink receive spatial filters is determined based on spatial relation information corresponding to the uplink reference signal resources predicted from the second reference signal prediction set using the second network model; and/or
the identification information of the K₂ predicted downlink transmit spatial filters is identification information of downlink transmit spatial filters corresponding to the downlink reference signal resources predicted from the second reference signal prediction set using the second network model.

33. The method according to any one of claims 28 to 32, wherein the downlink reference signal resources in the second reference signal prediction set comprise channel state information reference signal (CSI-RS) resources and/or synchronization signal block (SSB) resources.

34. The method according to claim 31 or 32, wherein the uplink reference signal resources in the second reference signal prediction set comprise sounding reference signal (SRS) resources.

35. The method according to any one of claims 28 to 34, wherein prior to receiving the second indication information, the method further comprises:
receiving second information, wherein the second information is used to configure at least one of the uplink reference signal measurement set or the second reference signal prediction set, or the second information is used to activate at least one of the uplink reference signal measurement set in a plurality of preconfigured uplink reference signal measurement sets or the second reference signal prediction set in a plurality of preconfigured reference signal prediction sets.

36. The method according to any one of claims 23 to 35, wherein the first capability information further comprises at least one of:
a maximum quantity of uplink reference signal measurement sets supported on all preconfigured component carriers (CCs) or all preconfigured bandwidth parts (BWPs);
a maximum quantity of uplink reference signal measurement sets supported and configured;
a maximum quantity of uplink reference signal measurement sets supported and concurrently measured;
a maximum quantity of reference signal measurement sets supported on all preconfigured CCs or all preconfigured BWPs;
a maximum quantity of uplink reference signal measurement sets supported on a CC or a BWP;
a maximum quantity of uplink reference signal resources in supported uplink reference signal measurement sets;
a maximum quantity of reference signal prediction sets supported on a CC or a BWP;
a maximum value of K₂; or
a quantity of reference signal prediction sets on a CC or a BWP being equal to a quantity of uplink reference signal measurement sets on the CC or the BWP.

37. A method for wireless communication, performed by a network device, the method comprising:
receiving first capability information, wherein the first capability information indicates whether a terminal device supports predicting uplink spatial filters based on a downlink measurement result, and/or, the first capability information indicates whether a terminal device supports predicting downlink spatial filters based on an uplink measurement result.

38. The method according to claim 37, wherein in a case where the terminal device supports predicting the uplink spatial filters based on the downlink measurement result, the method further comprises:
receiving first prediction information, wherein the first prediction information comprises at least one of part or all of indices of reference signal resources associated with identification information of K₁ uplink transmit spatial filters, or indices of reference signal resources associated with identification information of K₁ uplink receive spatial filters, wherein the identification information of the K₁ uplink transmit spatial filters and/or the identification information of the K₁ uplink receive spatial filters belong to a first prediction dataset output from a first network model deployed on a terminal upon input of a first measurement dataset, wherein the first measurement dataset comprises at least one of link quality information measured based on a downlink reference signal measurement set, or indices of downlink reference signal resources corresponding to link quality information measured based on a downlink reference signal measurement set, and the first prediction dataset comprises at least one of identification information of K₁ predicted uplink transmit spatial filters, or identification information of K₁ predicted uplink transmit spatial filters and identification information of K₁ predicted uplink receive spatial filters, wherein K₁ is a positive integer.

39. The method according to claim 38, wherein the downlink reference signal resources in the downlink reference signal measurement set are part or all downlink reference signal resources in a downlink reference signal resource set.

40. The method according to claim 39, wherein the downlink reference signal resource set is configured by the network device or agreed by an agreement.

41. The method according to any one of claims 38 to 40, wherein in a case where the first measurement dataset only comprises the link quality information measured based on the downlink reference signal measurement set, the link quality information measured based on the downlink reference signal measurement set is input to the first network model based on a first order, wherein the first order is associated with the indices of the downlink reference signal resources in the downlink reference signal measurement set.

42. The method according to any one of claims 38 to 41, wherein in a case where the first prediction dataset comprises the identification information of the K₁ predicted uplink transmit spatial filters, the identification information of the K₁ predicted uplink transmit spatial filters is determined based on the reference signal resources predicted from a first reference signal prediction set using the first network model, wherein the reference signal resources in the first reference signal prediction set comprise at least one of uplink reference signal resources or the downlink reference signal resources.

43. The method according to claim 42, wherein in a case where the reference signal resources in the first reference signal prediction set at least comprise the uplink reference signal resources, and spatial relation information is configured or activated for the uplink reference signal resources in the first reference signal prediction set, the identification information of the K₁ uplink transmit spatial filters is determined based on the spatial relation information corresponding to the uplink reference signal resources predicted from the first reference signal prediction set using the first network model.

44. The method according to claim 43, wherein uplink receive spatial filters corresponding to the K₁ uplink transmit spatial filters are receive spatial filters of the corresponding uplink reference signal resources respectively.

45. The method according to claim 42, wherein in a case where the reference signal resources in the first reference signal prediction set at least comprise the uplink reference signal resources, and spatial relation information is not configured or activated for the uplink reference signal resources in the first reference signal prediction set, the identification information of the K₁ uplink transmit spatial filters indicates transmit spatial filters corresponding to the uplink reference signal resources predicted from the first reference signal prediction set using the first network model.

46. The method according to claim 45, wherein uplink receive spatial filters corresponding to the K₁ uplink transmit spatial filters are determined by a first uplink sweep mode, wherein in the first uplink sweep mode, the uplink reference signals are transmitted by uplink transmit spatial filters corresponding to the predicted uplink reference signal resources and are received by different receive spatial filters, and an optional receive spatial filter is determined based on signal qualities of the received uplink reference signals.

47. The method according to claim 42, wherein in a case where the reference signal resources in the first reference signal prediction set at least comprise the downlink reference signal resources, and a transmission configuration indicator (TCI) state is configured or activated the downlink reference signal resources in the first reference signal prediction set or the downlink reference signal resources in the first reference signal prediction set are pre-measured, the identification information of the K₁ uplink transmit spatial filters indicates receive spatial filters corresponding to the downlink reference signal resources predicted from the first reference signal prediction set using the first network model.

48. The method according to claim 47, wherein uplink receive spatial filters corresponding to the K₁ uplink transmit spatial filters are transmit spatial filters of the corresponding downlink reference signal resources respectively.

49. The method according to claim 42, wherein in a case where the reference signal resources in the first reference signal prediction set at least comprise the downlink reference signal resources, and a transmission configuration indicator (TCI) state is not configured or activated for the downlink reference signal resources in the first reference signal prediction set or the downlink reference signal resources in the first reference signal prediction set are not pre-measured, the identification information of the K₁ uplink transmit spatial filters is identification information of downlink receive spatial filters determined by a first downlink sweep mode, wherein in the first downlink sweep mode, the downlink reference signals are transmitted by downlink transmit spatial filters corresponding to the predicted downlink reference signal resources and are received by different receive spatial filters, and an optional receive spatial filter is determined based on signal qualities of the received downlink reference signals.

50. The method according to claim 49, wherein uplink receive spatial filters corresponding to the K₁ uplink transmit spatial filters are the downlink transmit spatial filters corresponding to the predicted downlink reference signal resources respectively.

51. The method according to any one of claims 38 to 41, wherein in a case where the first prediction dataset comprises the identification information of the K₁ predicted uplink transmit spatial filters and the identification information of the K₁ predicted uplink receive spatial filters, the identification information of the K₁ predicted uplink transmit spatial filters is determined based on uplink reference signal resources predicted from a first reference signal prediction set using the first network model, and the identification information of the K₁ predicted uplink receive spatial filters is determined based on downlink reference signal resources predicted from the first reference signal prediction set using the first network model.

52. The method according to claim 51, wherein
the identification information of the K₁ uplink transmit spatial filters is determined based on spatial relation information corresponding to the uplink reference signal resources predicted from the first reference signal prediction set using the first network model; and/or
the identification information of the K₁ predicted uplink receive spatial filters is identification information of downlink transmit spatial filters corresponding to the downlink reference signal resources predicted from the first reference signal prediction set using the first network model.

53. The method according to any one of claims 38 to 52, further comprising:
transmitting first indication information, wherein the first indication information indicates identification information of used uplink transmit spatial filters in the identification information of the K₁ uplink transmit spatial filters, or, the first indication information indicates identification information of used uplink transmit spatial filters in the identification information of the K₁ uplink transmit spatial filters and identification information of used uplink receive spatial filters in the identification information of the K₁ uplink receive spatial filters.

54. The method according to claim 53, wherein
in a case where the first indication information indicates the identification information of the used uplink transmit spatial filters in the identification information of the K₁ uplink transmit spatial filters, the first indication information comprises at least one transmission configuration indicator (TCI) state indicator or indices of the uplink reference signal resources; or
in a case where the first indication information indicates the identification information of the used uplink transmit spatial filters in the identification information of the K₁ uplink transmit spatial filters and the identification information of the used uplink receive spatial filters in the identification information of the K₁ uplink receive spatial filters, the first indication information comprises the indices of the downlink reference signal resources and indices of the uplink reference signal resources.

55. The method according to any one of claims 42 to 52, wherein
the downlink reference signal resources in the first reference signal prediction set comprise channel state information reference signal (CSI-RS) resources and/or synchronization signal block (SSB) resources; and/or
the uplink reference signal resources in the first reference signal prediction set comprise sounding reference signal (SRS) resources.

56. The method according to any one of claims 42 to 52, wherein prior to receiving the first prediction information, the method further comprises:
receiving first information, wherein the first information is used to configure at least one of the downlink reference signal measurement set or the first reference signal prediction set, or the first information is used to activate at least one of the downlink reference signal measurement set in a plurality of preconfigured downlink reference signal measurement sets or the first reference signal prediction set in a plurality of preconfigured reference signal prediction sets.

57. The method according to any one of claims 38 to 56, wherein the first capability information further comprises at least one of:
a maximum quantity of downlink reference signal measurement sets supported on all preconfigured component carriers (CCs) or all preconfigured bandwidth parts (BWPs);
a maximum quantity of supported and configured downlink reference signal measurement sets supported and configured;
a maximum quantity of downlink reference signal measurement sets supported and concurrently measured;
a maximum quantity of reference signal measurement sets supported on all preconfigured CCs or all preconfigured BWPs;
a maximum quantity of downlink reference signal measurement sets supported on a CC or a BWP;
a maximum quantity of downlink reference signal resources in supported downlink reference signal measurement sets;
a maximum quantity of reference signal prediction sets supported on a CC or a BWP;
a maximum value of K₁; or
a quantity of reference signal prediction sets on a CC or a BWP being equal to a quantity of downlink reference signal measurement sets on the CC or the BWP.

58. The method according to claim 37, wherein in a case where the terminal device supports predicting the downlink spatial filters based on the uplink measurement result, the method further comprises:
inputting a second measurement dataset to a second network model to acquire a second prediction dataset, wherein the second measurement dataset comprises at least one of link quality information measured based on an uplink reference signal measurement set, or indices of uplink reference signal resources corresponding to link quality information measured based on an uplink reference signal measurement set, and the second prediction dataset comprises at least one of identification information of K₂ predicted downlink transmit spatial filters, or identification information of K₂ predicted downlink transmit spatial filters and identification information of K₂ predicted downlink receive spatial filters, wherein K₂ is a positive integer.

59. The method according to claim 58, wherein the uplink reference signal resources in the uplink reference signal measurement set are part or all of uplink reference signal resources in an uplink reference signal resource set.

60. The method according to claim 59, wherein the uplink reference signal resource set is configured by a network device or agreed by an agreement.

61. The method according to any one of claims 58 to 60, wherein in a case where the second measurement dataset only comprises the link quality information measured based on the uplink reference signal measurement set, the link quality information measured based on the uplink reference signal measurement set is input to the second network model based on a second order, wherein the second order is associated with the indices of the uplink reference signal resources in the uplink reference signal measurement set.

62. The method according to any one of claims 58 to 61, wherein in a case where the second prediction dataset comprises the identification information of the K₂ predicted downlink transmit spatial filters, the identification information of the K₂ predicted uplink transmit spatial filters is determined based on reference signal resources predicted from a second reference signal prediction set using the second network model, wherein the reference signal resources in the second reference signal prediction set comprise downlink reference signal resources.

63. The method according to claim 62, wherein in a case where a transmission configuration indicator (TCI) state is configured or activated for the downlink reference signal resources in the second reference signal prediction set or the downlink reference signal resources in the second reference signal prediction set are pre-measured, the identification information of the K₂ downlink transmit spatial filters indicates receive spatial filters corresponding to the downlink reference signal resources predicted from the second reference signal prediction set using the second network model.

64. The method according to claim 63, wherein in a case where a transmission configuration indicator (TCI) state is not configured or activated for the downlink reference signal resources in the second reference signal prediction set or the downlink reference signal resources in the second reference signal prediction set are not pre-measured, the identification information of the K₂ downlink transmit spatial filters is identification information of downlink receive spatial filters determined by a second downlink sweep mode, wherein in the second downlink sweep mode, the downlink reference signals are transmitted by downlink transmit spatial filters corresponding to the predicted downlink reference signal resources and are received by different receive spatial filters, and an optional downlink receive spatial filter is determined based on signal qualities of the received downlink reference signals.

65. The method according to any one of claims 58 to 61, wherein in a case where the second prediction dataset comprises the identification information of the K₂ predicted downlink transmit spatial filters and the identification information of the K₂ predicted downlink receive spatial filters, the identification information of the K₂ predicted downlink transmit spatial filters is determined based on downlink reference signal resources predicted from a second reference signal prediction set using the second network model, and the identification information of the K₂ predicted downlink receive spatial filters is determined based on uplink reference signal resources predicted from the second reference signal prediction set using the second network model.

66. The method according to claim 65, wherein
the identification information of the K₂ predicted downlink receive spatial filters is determined based on spatial relation information corresponding to the uplink reference signal resources predicted from the second reference signal prediction set using the second network model; and/or
the identification information of the K₂ predicted downlink transmit spatial filters is identification information of downlink transmit spatial filters corresponding to the downlink reference signal resources predicted from the second reference signal prediction set using the second network model.

67. The method according to any one of claims 62 to 66, further comprising:
transmitting second indication information, wherein the second indication information indicates identification information of used downlink receive spatial filters in identification information of the K₂ downlink receive spatial filters, or, the second indication information indicates identification information of used downlink transmit spatial filters in identification information of the K₂ downlink transmit spatial filters and identification information of used downlink receive spatial filters in identification information of K₂ downlink receive spatial filters.

68. The method according to claim 67, wherein
in a case where the second indication information indicates the identification information of the used downlink receive spatial filters in the identification information of the K₂ downlink receive spatial filters, the second indication information comprises at least one transmission configuration indicator (TCI) state indicator or indices of the downlink reference signal resources; or
in a case where the second indication information indicates the identification information of the used downlink transmit spatial filters in the identification information of the K₂ downlink transmit spatial filters and the identification information of the used downlink receive spatial filters in the identification information of the K₂ downlink receive spatial filters, the second indication information comprises indices of the downlink reference signal resources and the indices of the uplink reference signal resources.

69. The method according to any one of claims 62 to 68, wherein the downlink reference signal resources in the second reference signal prediction set comprise channel state information reference signal (CSI-RS) resources and/or synchronization signal block (SSB) resources.

70. The method according to claim 65 or 66, wherein the uplink reference signal resources in the second reference signal prediction set comprise sounding reference signal (SRS) resources.

71. The method according to any one of claims 62 to 70, wherein prior to predicting the spatial filters using the second network model, the method further comprises:
transmitting second information, wherein the second information is used to configure at least one of the uplink reference signal measurement set or the second reference signal prediction set, or the second information is used to activate at least one of the uplink reference signal measurement set in a plurality of preconfigured uplink reference signal measurement sets or the second reference signal prediction set in a plurality of preconfigured reference signal prediction sets.

72. The method according to any one of claims 58 to 71, wherein the first capability information further comprises at least one of:
a maximum quantity of uplink reference signal measurement sets supported on all preconfigured component carriers (CCs) or all preconfigured bandwidth parts (BWPs);
a maximum quantity of uplink reference signal measurement sets supported and configured;
a maximum quantity of uplink reference signal measurement sets supported and concurrently measured;
a maximum quantity of reference signal measurement sets supported on all preconfigured CCs or all preconfigured BWPs;
a maximum quantity of uplink reference signal measurement sets supported on a CC or a BWP;
a maximum quantity of uplink reference signal resources in supported uplink reference signal measurement sets;
a maximum quantity of reference signal prediction sets supported on a CC or a BWP;
a maximum value of K₂; or
a quantity of reference signal prediction sets on a CC or a BWP being equal to a quantity of uplink reference signal measurement sets on the CC or the BWP.

73. A method for wireless communication, performed by a first communication device, the method comprising:
inputting a first measurement dataset to a first network model to acquire a first prediction dataset, wherein
the first measurement dataset comprises at least one of link quality information measured based on a downlink reference signal measurement set, or indices of downlink reference signal resources corresponding to link quality information measured based on a downlink reference signal measurement set, and the first prediction dataset comprises at least one of identification information of K₁ predicted uplink transmit spatial filters, or identification information of K₁ predicted uplink transmit spatial filters and identification information of K₁ predicted uplink receive spatial filters, wherein K₁ is a positive integer; or
the first measurement dataset comprises at least one of link quality information measured based on an uplink reference signal measurement set, or indices of uplink reference signal resources corresponding to link quality information measured based on an uplink reference signal measurement set, and the first prediction dataset comprises at least one of identification information of K₂ predicted downlink transmit spatial filters, or identification information of K₂ predicted downlink transmit spatial filters and identification information of K₂ predicted downlink receive spatial filters, wherein K₂ is a positive integer.

74. The method according to claim 73, wherein in a case where information in the first measurement dataset is acquired based on the downlink reference signal measurement set, the first communication device supports predicting uplink spatial filters based on a downlink measurement result.

75. The method according to claim 74, wherein the downlink reference signal resources in the downlink reference signal measurement set are part or all of downlink reference signal resources in a downlink reference signal resource set.

76. The method according to claim 75, wherein the downlink reference signal resource set is configured by a network device or agreed by an agreement.

77. The method according to any one of claims 74 to 76, wherein in a case where the first measurement dataset only comprises the link quality information measured based on the downlink reference signal measurement set, the link quality information measured based on the downlink reference signal measurement set is input to the first network model based on a first order, wherein the first order is associated with the indices of the downlink reference signal resources in the downlink reference signal measurement set.

78. The method according to any one of claims 74 to 77, wherein in a case where the first prediction dataset comprises the identification information of the K₁ predicted uplink transmit spatial filters, the identification information of the K₁ predicted uplink transmit spatial filters is determined based on reference signal resources predicted from a first reference signal prediction set using the first network model, wherein the reference signal resources in the first reference signal prediction set comprise at least one of uplink reference signal resources or the downlink reference signal resources.

79. The method according to claim 78, wherein in a case where the reference signal resources in the first reference signal prediction set at least comprise the uplink reference signal resources, and spatial relation information is configured or activated for the uplink reference signal resources in the first reference signal prediction set, the identification information of the K₁ uplink transmit spatial filters is determined based on the spatial relation information corresponding to the uplink reference signal resources predicted from the first reference signal prediction set using the first network model.

80. The method according to claim 79, wherein uplink receive spatial filters corresponding to the K₁ uplink transmit spatial filters are receive spatial filters of the corresponding uplink reference signal resources respectively.

81. The method according to claim 78, wherein in a case where the reference signal resources in the first reference signal prediction set at least comprise the uplink reference signal resources, and spatial relation information is not configured or activated for the uplink reference signal resources in the first reference signal prediction set, the identification information of the K₁ uplink transmit spatial filters indicates transmit spatial filters corresponding to the uplink reference signal resources predicted from the first reference signal prediction set using the first network model.

82. The method according to claim 81, wherein uplink receive spatial filters corresponding to the K₁ uplink transmit spatial filters are determined by a first uplink sweep mode, wherein in the first uplink sweep mode, the uplink reference signals are transmitted by uplink transmit spatial filters corresponding to the predicted uplink reference signal resources and are received by different receive spatial filters, and an optional receive spatial filter is determined based on signal qualities of the received uplink reference signals.

83. The method according to claim 78, wherein in a case where the reference signal resources in the first reference signal prediction set at least comprise the downlink reference signal resources, and a transmission configuration indicator (TCI) state is configured or activated for the downlink reference signal resources in the first reference signal prediction set or the downlink reference signal resources in the first reference signal prediction set are pre-measured, the identification information of the K₁ uplink transmit spatial filters indicates receive spatial filters corresponding to the downlink reference signal resources predicted from the first reference signal prediction set using the first network model.

84. The method according to claim 83, wherein uplink receive spatial filters corresponding to the K₁ uplink transmit spatial filters are transmit spatial filters of the corresponding downlink reference signal resources respectively.

85. The method according to claim 78, wherein in a case where the reference signal resources in the first reference signal prediction set at least comprise the downlink reference signal resources, and a transmission configuration indicator (TCI) state is not configured or activated for the downlink reference signal resources in the first reference signal prediction set or the downlink reference signal resources in the first reference signal prediction set are not pre-measured, the identification information of the K₁ uplink transmit spatial filters is identification information of downlink receive spatial filters determined by a first downlink sweep mode, wherein in the first downlink sweep mode, the downlink reference signals are transmitted by downlink transmit spatial filters corresponding to the predicted downlink reference signal resources and are received by different receive spatial filters, and an optional receive spatial filter is determined based on signal qualities of the received downlink reference signals.

86. The method according to claim 85, wherein uplink receive spatial filters corresponding to the K₁ uplink transmit spatial filters are the downlink transmit spatial filters corresponding to the predicted downlink reference signal resources respectively.

87. The method according to any one of claims 74 to 77, wherein in a case where the first prediction dataset comprises the identification information of the K₁ predicted uplink transmit spatial filters and the identification information of the K₁ predicted uplink receive spatial filters, the identification information of the K₁ predicted uplink transmit spatial filters is determined based on uplink reference signal resources predicted from a first reference signal prediction set using the first network model, and the identification information of the K₁ predicted uplink receive spatial filters is determined based on downlink reference signal resources predicted from the first reference signal prediction set using the first network model.

88. The method according to claim 87, wherein the identification information of the K₁ uplink transmit spatial filters is determined based on spatial relation information corresponding to the uplink reference signal resources predicted from the first reference signal prediction set using the first network model; and/or
the identification information of the K₁ predicted uplink receive spatial filters is identification information of downlink transmit spatial filters corresponding to the downlink reference signal resources predicted from the first reference signal prediction set using the first network model.

89. The method according to any one of claims 73 to 88, wherein the first communication device is a terminal device.

90. The method according to claim 73, wherein in a case where information in the first measurement dataset is acquired based on the uplink reference signal measurement set, the first communication device supports predicting downlink spatial filters based on an uplink measurement result.

91. The method according to claim 90, wherein the uplink reference signal resources in the uplink reference signal measurement set are part or all of uplink reference signal resources in an uplink reference signal resource set.

92. The method according to claim 91, wherein the uplink reference signal resource set is configured by a network device or agreed by an agreement.

93. The method according to any one of claims 90 to 92, wherein in a case where the first measurement dataset only comprises the link quality information measured based on the uplink reference signal measurement set, the link quality information measured based on the uplink reference signal measurement set is input to the first network model based on a second order, wherein the second order is associated with the indices of the uplink reference signal resources in the uplink reference signal measurement set.

94. The method according to any one of claims 90 to 93, wherein in a case where the first prediction dataset comprises the identification information of the K₂ predicted downlink transmit spatial filters, the identification information of the K₂ predicted uplink transmit spatial filters is determined based on reference signal resources predicted from a second reference signal prediction set using the first network model, wherein the reference signal resources in the second reference signal prediction set comprise downlink reference signal resources.

95. The method according to claim 94, wherein in a case where a transmission configuration indicator (TCI) state is configured or activated for the downlink reference signal resources in the second reference signal prediction set or the downlink reference signal resources in the second reference signal prediction set are pre-measured, the identification information of the K₂ downlink transmit spatial filters indicates receive spatial filters corresponding to the downlink reference signal resources predicted from the second reference signal prediction set using the first network model.

96. The method according to claim 94, wherein in a case where a transmission configuration indicator (TCI) state is not configured or activated for the downlink reference signal resources in the second reference signal prediction set or the downlink reference signal resources in the second reference signal prediction set are not pre-measured, the identification information of the K₂ downlink transmit spatial filters is identification information of downlink receive spatial filters determined by a second downlink sweep mode, wherein in the second downlink sweep mode, the downlink reference signals are transmitted by downlink transmit spatial filters corresponding to the predicted downlink reference signal resources and are received by different receive spatial filters, and an optional downlink receive spatial filter is determined based on signal qualities of the received downlink reference signals.

97. The method according to any one of claims 90 to 93, wherein in a case where the second prediction dataset comprises the identification information of the K₂ predicted downlink transmit spatial filters and the identification information of the K₂ predicted downlink receive spatial filters, the identification information of the K₂ predicted downlink transmit spatial filters is determined based on downlink reference signal resources predicted from a second reference signal prediction set using the first network model, and the identification information of the K₂ predicted downlink receive spatial filters is determined based on uplink reference signal resources predicted from the second reference signal prediction set using the first network model.

98. The method according to claim 97, wherein
the identification information of the K₂ predicted downlink receive spatial filters is determined based on spatial relation information corresponding to the uplink reference signal resources predicted from the second reference signal prediction set using the first network model; and/or
the identification information of the K₂ predicted downlink transmit spatial filters is identification information of downlink transmit spatial filters corresponding to the downlink reference signal resources predicted from the second reference signal prediction set using the first network model.

99. The method according to any one of claims 90 to 98, wherein the first communication device is a network device.

100. A terminal device, comprising:
a communication unit, configured to transmit first capability information, wherein the first capability information indicates whether the terminal device supports predicting uplink spatial filters based on a downlink measurement result, and/or, the first capability information indicates whether the terminal device supports predicting downlink spatial filters based on an uplink measurement result.

101. A network device, comprising:
a communication unit, configured to receive first capability information, wherein the first capability information indicates whether a terminal device supports predicting uplink spatial filters based on a downlink measurement result, and/or, the first capability information indicates whether a terminal device supports predicting downlink spatial filters based on an uplink measurement result.

102. A communication device, wherein the communication device is a first communication device, and comprises:
a processing unit, configured to input a first measurement dataset to a first network model to acquire a first prediction dataset, wherein
the first measurement dataset comprises at least one of link quality information measured based on a downlink reference signal measurement set, or indices of downlink reference signal resources corresponding to link quality information measured based on a downlink reference signal measurement set, and the first prediction dataset comprises at least one of identification information of K₁ predicted uplink transmit spatial filters, or identification information of K₁ predicted uplink transmit spatial filters and identification information of K₁ predicted uplink receive spatial filters, wherein K₁ is a positive integer; or
the first measurement dataset comprises at least one of link quality information measured based on an uplink reference signal measurement set, or indices of uplink reference signal resources corresponding to link quality information measured based on an uplink reference signal measurement set, and the first prediction dataset comprises at least one of identification information of K₂ predicted downlink transmit spatial filters, or identification information of K₂ predicted downlink transmit spatial filters and identification information of K₂ predicted downlink receive spatial filters, wherein K₂ is a positive integer.

103. A terminal device, comprising: a processor and a memory, wherein the memory is configured to store one or more computer programs, and the processor is configured to call and run the one or more computer programs in the memory to cause the terminal device to perform the method as defined in any one of claims 1 to 36.

104. A network device, comprising: a processor and a memory, wherein the memory is configured to store one or more computer programs, and the processor is configured to call and run the one or more computer programs in the memory to cause the network device to perform the method as defined in any one of claims 37 to 72.

105. A communication device, wherein the communication device is a first communication device, and comprises: a processor and a memory, wherein the memory is configured to store one or more computer programs, and the processor is configured to call and run the one or more computer programs in the memory to cause the communication device to perform the method as defined in any one of claims 73 to 99.

106. A chip, comprising: a processor, wherein the processor is configured to call and run one or more computer programs in a memory to cause a device equipped with the chip to perform the method as defined in any one of claims 1 to 36, the method as defined in any one of claims 37 to 72, or the method as defined in any one of claims 73 to 99.

107. A computer-readable storage medium, storing: one or more computer programs, wherein the one or more computer programs, when loaded and run, cause a computer to perform the method as defined in any one of claims 1 to 36, the method as defined in any one of claims 37 to 72, or the method as defined in any one of claims 73 to 99.

108. A computer program product, comprising: one or more computer program instructions, wherein the one or more computer program instructions, when loaded and executed, cause a computer to perform the method as defined in any one of claims 1 to 36, the method as defined in any one of claims 37 to 72, or the method as defined in any one of claims 73 to 99.

109. A computer program, wherein the computer program, when loaded and run, causes a computer to perform the method as defined in any one of claims 1 to 36, the method as defined in any one of claims 37 to 72, or the method as defined in any one of claims 73 to 99.
